(19)

**Europäisches Patentamt**

**European Patent Office**

**Office européen des brevets**

(11) **EP 4 542 492 A1**

(12) **EUROPEAN PATENT APPLICATION**
published in accordance with Art. 153(4) EPC

(43) Date of publication:
**23.04.2025 Bulletin 2025/17**

(21) Application number: **22948045.4**

(22) Date of filing: **29.08.2022**

(51) International Patent Classification (IPC):
***G06T 9/00*** *(2006.01)*

(52) Cooperative Patent Classification (CPC):
**G06T 9/00**

(86) International application number:
**PCT/JP2022/032338**

(87) International publication number:
**WO 2023/248486 (28.12.2023 Gazette 2023/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.06.2022   JP 2022098805**

(71) Applicant: **Sony Group Corporation
Tokyo 108-0075 (JP)**

(72) Inventors:
• **KAWAI Wataru
  Tokyo 108-0075 (JP)**
• **NAKAGAMI Ohji
  Tokyo 108-0075 (JP)**

(74) Representative: **D Young & Co LLP
3 Noble Street
London EC2V 7BQ (GB)**

(54) **INFORMATION PROCESSING DEVICE AND METHOD**

(57)   The present disclosure relates to an information processing apparatus and method adapted to be capable of coding geometry of a point cloud, using a coordinate-based network.

An information processing apparatus and method generate, on the basis of a parameter vector of a coordinate-based network representing a geometry of 3D data, a feature vector expressing a spatial correlation lower than a spatial correlation of the parameter vector, and code the feature vector. Another information proces-

sing apparatus and method decode coded data to generate a feature vector expressing a spatial correlation lower than a spatial correlation of a parameter vector of a coordinate-based network representing a geometry of 3D data, and generate the geometry from the feature vector. The present disclosure is applicable to, for example, an information processing apparatus, an electronic device, an information processing method, a program, or the like.

*FIG. 5*

**Description**

TECHNICAL FIELD

The present disclosure relates to an information processing apparatus and method, and particularly to an information processing apparatus and method adapted to be capable of coding a geometry of a point cloud, using a coordinate-based network.

BACKGROUND ART

Conventionally, there has been a method of coding an attribute of a point cloud, using a coordinate-based network (see, for example, Non-Patent Document 1). According to this method, an attribute is transformed into an implicit neural representation, and a parameter of the coordinate-based network is coded using a LoD correlation (a difference between a low resolution and a high resolution).

CITATION LIST

NON-PATENT DOCUMENT

Non-Patent Document 1: Berivan Isik, Philip A Chou, Sung Jin Hwang, Nick Johnston, George Toderici, "LVAC: Learned Volumetric Attribute Compression for Point Clouds using Coordinate Based Networks", arXiv:2111.08988v1 [cs.GR] 17 Nov 2021

SUMMARY OF THE INVENTION

PROBLEMS TO BE SOLVED BY THE INVENTION

However, a method for coding a geometry of a point cloud, using a coordinate-based network has not been disclosed.
The present disclosure has been made in view of the circumstance described above, and is adapted to be capable of coding a geometry of a point cloud, using a coordinate-based network.

SOLUTIONS TO PROBLEMS

An information processing apparatus according to one aspect of the present technology is an information processing apparatus including: a generation unit that generates, on the basis of a parameter vector of a coordinate-based network representing a geometry of 3D data, a feature vector expressing a spatial correlation lower than a spatial correlation of the parameter vector; and a coding unit that codes the feature vector.
An information processing method according to one aspect of the present technology is an information processing method including: generating, on the basis of a parameter vector of a coordinate-based network representing a geometry of 3D data, a feature vector expressing a spatial correlation lower than a spatial correlation of the parameter vector; and coding the feature vector.
An information processing apparatus according to another aspect of the present technology is an information processing apparatus including: a decoding unit that decodes coded data to generate a feature vector expressing a spatial correlation lower than a spatial correlation of a parameter vector of a coordinate-based network representing a geometry of 3D data; and a generation unit that generates the geometry from the feature vector.
An information processing method according to another aspect of the present technology is an information processing method including: decoding coded data to generate a feature vector expressing a spatial correlation lower than a spatial correlation of a parameter vector of a coordinate-based network representing a geometry of 3D data; and generating the geometry from the feature vector.
The information processing apparatus and method according to one aspect of the present technology generate, on the basis of a parameter vector of a coordinate-based network representing a geometry of 3D data, a feature vector expressing a spatial correlation lower than a spatial correlation of the parameter vector, and code the feature vector.
The information processing apparatus and method according to another aspect of the present technology decode coded data to generate a feature vector expressing a spatial correlation lower than a spatial correlation of a parameter vector of a coordinate-based network representing a geometry of 3D data, and generate the geometry from the feature vector.

BRIEF DESCRIPTION OF DRAWINGS

Fig. 1 is a flowchart illustrating an example of a flow of attribute coding processing using a coordinate-based network.
Fig. 2 is a diagram illustrating an example of a state of binary tree construction.
Fig. 3 is a diagram illustrating an example of a binary tree.
Fig. 4 is a diagram illustrating an example of a method of coding a geometry, using a coordinate-based network.
Fig. 5 is a block diagram illustrating a main configuration example of a geometry coding apparatus.
Fig. 6 is a diagram illustrating an example of a parameter vector grid and an example of a CNN feature vector grid.
Fig. 7 is a diagram illustrating an example of a spatial correlation.
Fig. 8 is a flowchart illustrating an example of a flow of geometry coding processing.
Fig. 9 is a flowchart illustrating an example of a flow of CNN feature vector grid generation processing.
Fig. 10 is a block diagram illustrating a main configuration example of a geometry decoding apparatus.
Fig. 11 is a flowchart illustrating an example of a flow of geometry decoding processing.
Fig. 12 is a flowchart illustrating an example of a flow of parameter vector grid generation processing.
Fig. 13 is a flowchart illustrating an example of a flow of geometry coding processing.
Fig. 14 is a block diagram illustrating a main configuration example of a geometry coding apparatus.
Fig. 15 is a diagram illustrating an example of a mask grid and an example of a parameter vector grid.
Fig. 16 is a flowchart illustrating an example of a flow of geometry coding processing.
Fig. 17 is a block diagram illustrating a main configuration example of a geometry decoding apparatus.
Fig. 18 is a flowchart illustrating an example of a flow of geometry decoding processing.
Fig. 19 is a flowchart illustrating an example of a flow of CNN feature vector grid coding processing.
Fig. 20 is a flowchart illustrating an example of a flow of CNN feature vector grid decoding processing.
Fig. 21 is a diagram illustrating examples of correlations that are different in scale from each other.
Fig. 22 is a diagram illustrating an example of a method of coding a geometry, using a coordinate-based network.
Fig. 23 is a block diagram illustrating a main configuration example of a geometry coding apparatus.
Fig. 24 is a diagram illustrating an example of a parameter vector grid and an example of a CNN feature vector grid.
Fig. 25 is a flowchart illustrating an example of a flow of geometry coding processing.
Fig. 26 is a block diagram illustrating a main configuration example of a geometry decoding apparatus.
Fig. 27 is a flowchart illustrating an example of a flow of geometry decoding processing.
Fig. 28 is a block diagram illustrating a main configuration example of a geometry coding apparatus.
Fig. 29 is a diagram illustrating an example of a parameter vector grid and an example of a CNN feature vector grid.
Fig. 30 is a flowchart illustrating an example of a flow of geometry coding processing.
Fig. 31 is a block diagram illustrating a main configuration example of a geometry decoding apparatus.
Fig. 32 is a flowchart illustrating an example of a flow of geometry decoding processing.
Fig. 33 is a diagram illustrating a configuration example of a 3D-CNN.
Fig. 34 is a block diagram illustrating a main configuration example of a point cloud coding apparatus.
Fig. 35 is a flowchart illustrating an example of a flow of point cloud coding processing.
Fig. 36 is a block diagram illustrating a main configuration example of a point cloud decoding apparatus.
Fig. 37 is a flowchart illustrating an example of a flow of point cloud decoding processing.
Fig. 38 is a block diagram illustrating a main configuration example of a computer.

MODE FOR CARRYING OUT THE INVENTION

A mode for carrying out the present disclosure (hereinafter, referred to as an embodiment) will be described below. Note that the description is given in the following order.

1. Documents and the like that support technical contents and technical terms
2. LVAC
3. Coding of geometry using coordinate-based network
4. Generation of parameter vector by optimization of Lagrange function
5. Application of sparse 3D convolution
6. Utilization of mask grid for coding of CNN feature vector
7. CNN feature vectors of multiple resolutions
8. Embodiment (point cloud coding apparatus)
9. Embodiment (point cloud decoding apparatus)
10. Supplementary note

<1. Documents and the like that support technical contents and technical terms>

The scope disclosed in the present technology includes, in addition to the contents described in an embodiment, the contents described in the following non-patent document and the like publicly known at the time of filing of this application, the contents of other documents cited in the following non-patent document, and the like.

Non-patent document 1: (described above)

That is, the contents described in the foregoing non-patent document, the contents described in the other documents cited in the foregoing non-patent document, and the like constitute grounds for determining the support requirement.

<2. LVAC>

<Point cloud>

As 3D data expressing a three-dimensional structure of a three-dimensional object, conventionally, there has been a point cloud that represents the object as a set of a large number of points. Data on the point cloud (also referred to as point cloud data) includes a geometry (position information) and an attribute (attribute information) of each point in the point cloud. Each geometry indicates the position of the corresponding point in a three-dimensional space. Each attribute indicates the attribute of the corresponding point. This attribute can include optional information. For example, each attribute may include color information, reflectance information, normal line information, and the like on the corresponding point. As described above, the point cloud has a relatively simple data structure and can represent an optional three-dimensional object with sufficient accuracy, by using a sufficiently large number of points.

<Voxel representation>

However, since this point cloud has a relatively large data amount, it has been required to compress the data amount by coding or the like. For example, with regard to the geometry of each point, higher the positional accuracy, larger the data amount. In view of this, a method of representing geometries, using voxels has been considered. A voxel refers to a region obtained by dividing a three-dimensional spatial region including an object. In the point cloud, the position of each point is placed at a predetermined location (e.g., a center) in a voxel. In other words, voxels are used to express whether or not the points exist in the respective voxels. It is thus possible to quantize the geometry of each point on a voxel basis. It is therefore possible to suppress an increase in data amount of each geometry. Note that the method of representing the geometries, using the voxels is also referred herein to as a voxel representation.

One voxel can be divided into multiple voxels. That is, it is possible to further reduce the size of each voxel by repeatedly dividing each voxel in a recursive manner. Smaller the size of each voxel, higher the resolution. That is, it is possible to more accurately represent the position of each point. In other words, the effect of reducing the data amount of each geometry by the foregoing quantization is suppressed.

Note that only voxels where points exist are divided in this voxel representation. Voxels where points exist are each divided into eight voxels (2x2x2). Among the eight voxels, only a voxel where a point exists is further divided into eight voxels. In this way, a voxel where a point exists is divided in a recursive manner until the voxel takes its minimum unit. A hierarchical structure is thus formed.

<Octree representation>

As described above, the voxel representation expresses whether or not a point exists in each voxel. In other words, a voxel within each hierarchy is defined as a node, and whether or not a point exists is represented using 0 and 1 for each divided voxel. It is thus possible to represent each geometry, using a tree structure (octree). The method of representing the geometries, using this octree is also referred herein to as an octree representation. The bit patterns of the respective nodes are arranged in predetermined order and are coded. By using the octree representation, it is possible to realize scalable geometry decoding. That is, it is possible to obtain a geometry of an optional hierarchy (resolution) by decoding necessary information only.

In addition, according to the voxel representation, it is possible to omit the division of a voxel where no point exists, as described above. According to this octree representation, therefore, it is also possible to omit a node where no point exists. It is therefore possible to suppress an increase in data amount of each geometry.

<LVAC>

Meanwhile, Non-Patent Document 1 has disclosed a method of coding an attribute of a point cloud, using a coordinate-based network (LVAC (Learned Volumetric Attribute Compression for Point Clouds using Coordinate Based Networks)). According to this method, an attribute has been transformed into an implicit neural representation, and a parameter of the coordinate-based network has been coded using a LoD correlation (a difference between a low resolution and a high resolution).

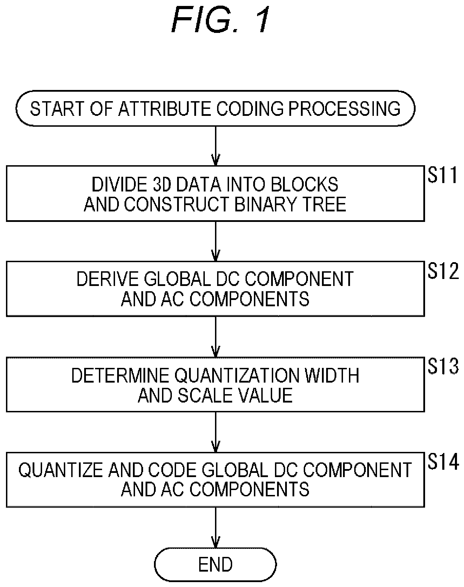

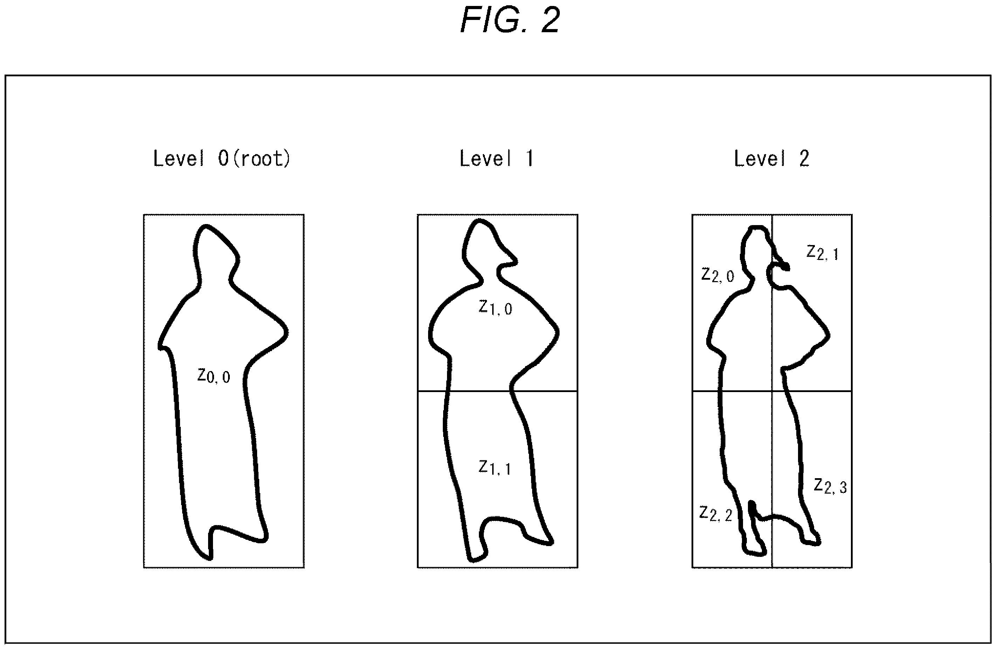

Fig. 1 is a flowchart illustrating an example of a flow of attribute coding processing. As illustrated in Fig. 1, an encoder divides 3D data such as a point cloud into multiple blocks, and constructs a binary tree in which a leaf node represents an occupied block (step S11). The encoder recursively divides a region into two as illustrated in Fig. 2 to construct a tree structure (binary tree) in which a node represents a parameter vector (z) in each region.

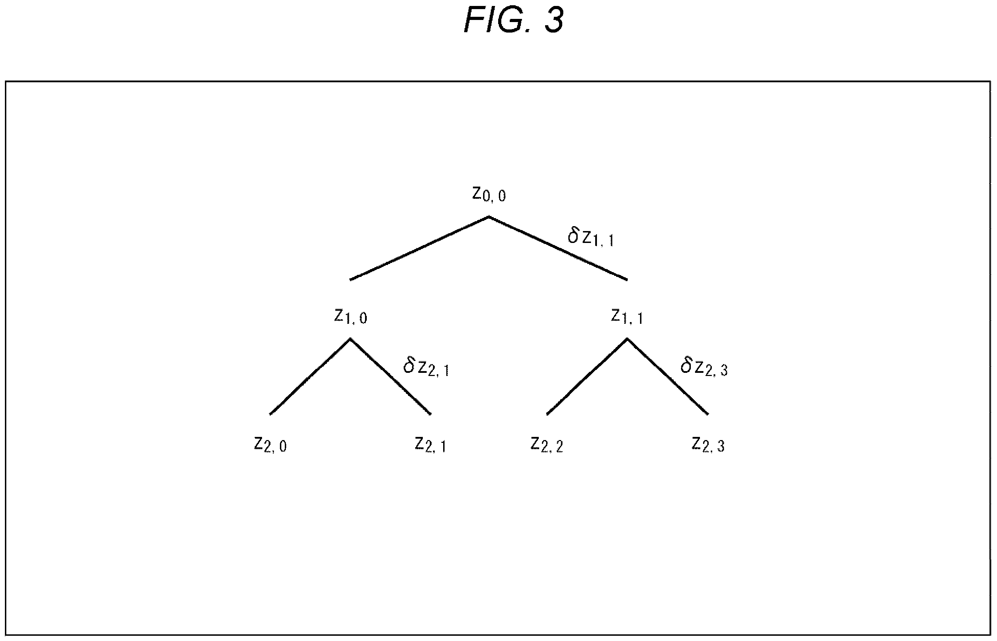

Fig. 3 is a diagram illustrating an example of the binary tree. Relations expressed by Equations (1) to (3) below are satisfied, where $z_{l,n}$ represents a direct current (DC) component of an n-th node at a level l. Note that $n_L$, $n_R$ respectively represent indexes of left and right child nodes, and w* represents the number of points in each of the left and right child nodes.

$$z_{l,n} = \frac{w_{n_L}}{w_{n_L} + w_{n_R}} z_{l+1,n_L} + \frac{w_{n_R}}{w_{n_L} + w_{n_R}} z_{l+1,n_R}$$

$$\ldots (1)$$

$$\delta z_{l+1,n_L} = z_{l+1,n_L} - z_{l,n}$$

$$\ldots (2)$$

$$\delta z_{l+1,n_R} = z_{l+1,n_R} - z_{l,n}$$

$$\ldots (3)$$

Using the binary tree, the encoder derives one global direct current (DC) component ($z_{0,0}$ in Fig. 3) and {the number leaf nodes}-1 alternating current (AC) components ($\delta z_{1,1}, \delta z_{2,1}, \delta z_{2,3}$ in Fig. 3) (step S12). A global DC component refers to a parameter vector (a root node of a binary tree) in a whole region. An AC component refers to a difference between a parent node and its child node.

The encoder determines a quantization width and scales a value (step S13). Next, the encoder quantizes and entropy-codes the global DC component and the AC components to generate and output a bit stream (step S14).

On the other hand, a decoder performs the reverse processing. For example, the decoder entropy-decodes and inverse-scales the bit stream to derive the global DC component and the AC components. Next, the decoder joins the global DC component and the AC components together to derive parameter vectors (z2,0, z2,1, z2,2, z2,3 in Fig. 3). One of the child nodes is derived by adding the AC components to the parent node. The other child node is derived using the parent node and the one child node, on the basis of the relation expressed by Equation (1). Next, the decoder inputs the parameter vectors and coordinate values to a coordinate-based network to calculate attributes.

According to the LAVC, a parameter vector is compressed using a correlation between LoD (i.e., an AC component comes closer to 0) in this way.

However, a method for coding a geometry of 3D data (e.g., a point cloud), using a coordinate-based network has not been disclosed.

<3. Coding of geometry using coordinate-based network>

<Method 1>

Hence, a geometry of 3D data (e.g., a point cloud) is coded using a coordinate-based network, as in the LVAC. That is, the geometry is transformed into an implicit neural representation, and a parameter vector of the implicit neural representation is coded.

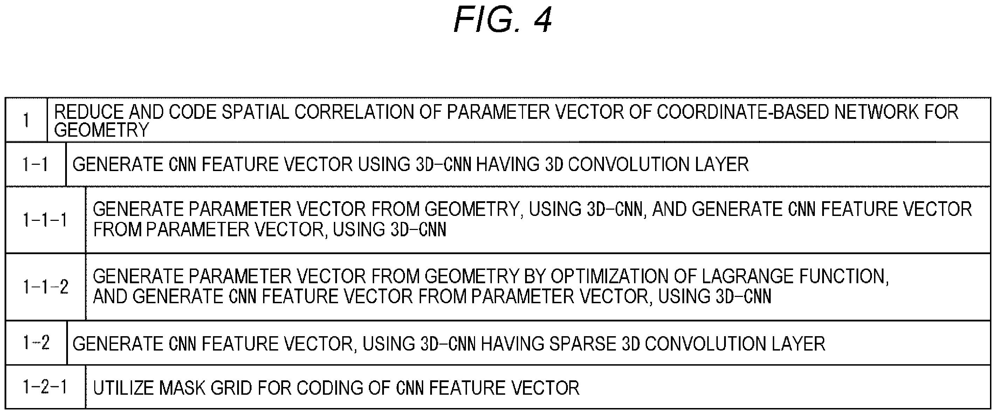

For example, as illustrated in the top row of a table of Fig. 4, a spatial correlation of the parameter vector of the coordinate-based network for the geometry is reduced and coded (method 1). This method 1 can be applied to, for example, an encoder that codes a geometry.

For example, an information processing apparatus includes: a generation unit that generates, on the basis of a parameter vector of a coordinate-based network representing a geometry of 3D data, a feature vector expressing a spatial correlation lower than a spatial correlation of the parameter vector; and a coding unit that codes the feature vector.

In addition, an information processing method includes: generating, on the basis of a parameter vector of a coordinate-based network representing a geometry of 3D data, a feature vector expressing a spatial correlation lower than a spatial correlation of the parameter vector; and coding the feature vector.

An implicit function representation refers to a method of representing a function-based 3D shape. A 3D shape is represented by an implicit function $f\theta: R^3 \rightarrow R$ to which a coordinate value (x,y,z) is input and from which an occupation value at the coordinate value is output. Note that R represents a set of real numbers. A coordinate-based network refers to an implicit function subjected to approximation with a neural network (NN).

A neural network refers to a composite function of multiple linear transformations and nonlinear transformations. An input vector x is subjected to linear transformation and nonlinear transformation alternately, so that an output vector y is derived. In the linear transformation, a vector is subjected to matrix multiplication, and a bias vector is subjected to addition. In the nonlinear transformation, a nonlinear function is applied for each element of a vector. Parameters thus obtained can be trained with weight matrices and bias vectors of all the linear transformations. These linear transformations and nonlinear transformations are stacked in multiple layers to optimize the parameters, so that complicated transformation (function) from x to y can be subjected to approximation. Note that this neural network is also referred to as a fully connected network or a multilayer perceptron.

Furthermore, changing the transformation from the input x to the output y in the neural network according to a value of another vector c is also referred to as conditioning, and this vector c is also referred to as a condition vector. Changing only the condition vector without changing all the weights of the network allows a change in transformation from x to y.

Examples of the conditioning method include the following methods.

Connection: An input vector x and a condition vector c are connected in a dimensional direction and are input to a network.

Modulation: An intermediate layer output vector of a network is subjected to linear transformation for each element in accordance with a value of a condition vector.

Meta-network: All weights of a network are predicted from a condition vector, using another neural network.

The use of such a neural network enables representation of a complicated shape and a smooth and continuous surface. The conditioning with a parameter vector enables representation of various shapes by solely changing the parameter vector without changing the weights of the network. That is, the parameter vector corresponds to the condition vector.

It is thus possible to code a geometry of a point cloud, using a coordinate-based network. It is also possible to improve the entire coding efficiency by encoding the geometry. It is also possible to improve the coding efficiency by reducing a spatial correlation. It is also possible to parallelize processing by reducing the spatial correlation. It is therefore possible to reduce a processing time of decoding processing. It is also possible to reduce the amount of coding processing.

Furthermore, when the method 1 is applied, for example, as illustrated in the second row from the top of the table of Fig. 4, a CNN feature vector may be generated using a three-dimensional (3D)-CNN having a 3D convolution layer (method 1-1). For example, the generation unit may generate a feature vector, using a 3D-convolution neural network (3D-CNN) which is a neural network having a three-dimensional convolution layer.

A 3D-CNN refers to a fully connected neural network having a 3D convolution layer (or a 3D deconvolution layer) as a linear layer, and is constituted of a 3D convolution layer and a pooling layer (e.g., downsampling computation such as average pooling that calculates an average value). The 3D convolution layer performs 3D convolution computation. Note that 3D convolution computation corresponds to two-dimensional convolution computation whose input, output, and filter are extended three dimensionally, and refers to computation of convoluting a filter of a predetermined size (three dimensions) to each data item in a three-dimensional region. A filter coefficient corresponds to a trainable weight.

Furthermore, when the method 1-1 is applied, for example, as illustrated in the third row from the top of the table of Fig. 4, a parameter vector may be generated from a geometry, using a 3D-CNN, and a CNN feature vector may be generated from the parameter vector, using the 3D-CNN (method 1-1-1). For example, the generation unit may generate a parameter vector held in a grid shape, from a geometry, and generate a feature vector, using a 3D-CNN with the parameter vector as an input. The generation unit may also generate a parameter vector, using a 3D-CNN with a geometry as an input.

<Geometry coding apparatus>

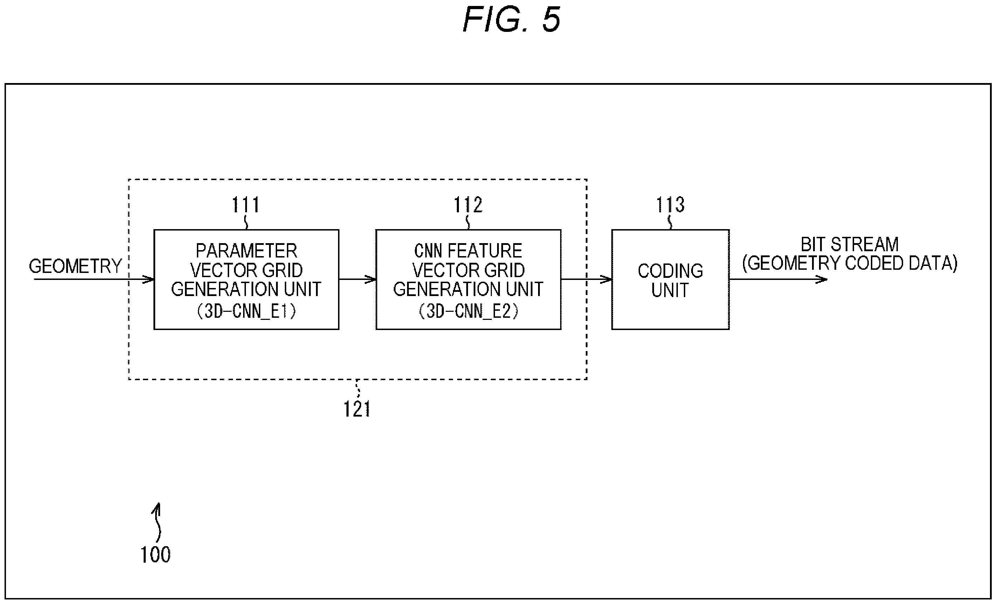

Fig. 5 is a block diagram illustrating an example of a configuration of a geometry coding apparatus as an aspect of an information processing apparatus to which the present technology is applied. A geometry coding apparatus 100 illustrated in Fig. 5 is an apparatus that codes a geometry of a point cloud (3D data). The geometry coding apparatus 100 applies the foregoing method 1-1-1 to code a geometry.

Note that Fig. 5 illustrates main processing units, data flows, and the like; therefore, the geometry coding apparatus 100 is not limited to those illustrated in Fig. 5. That is, the geometry coding apparatus 100 may include a processing unit not illustrated in a block form in Fig. 5 and may involve processing or a data flow not indicated by an arrow or the like in Fig. 5.

As illustrated in Fig. 5, the geometry coding apparatus 100 includes a parameter vector grid generation unit 111, a CNN feature vector grid generation unit 112, and a coding unit 113.

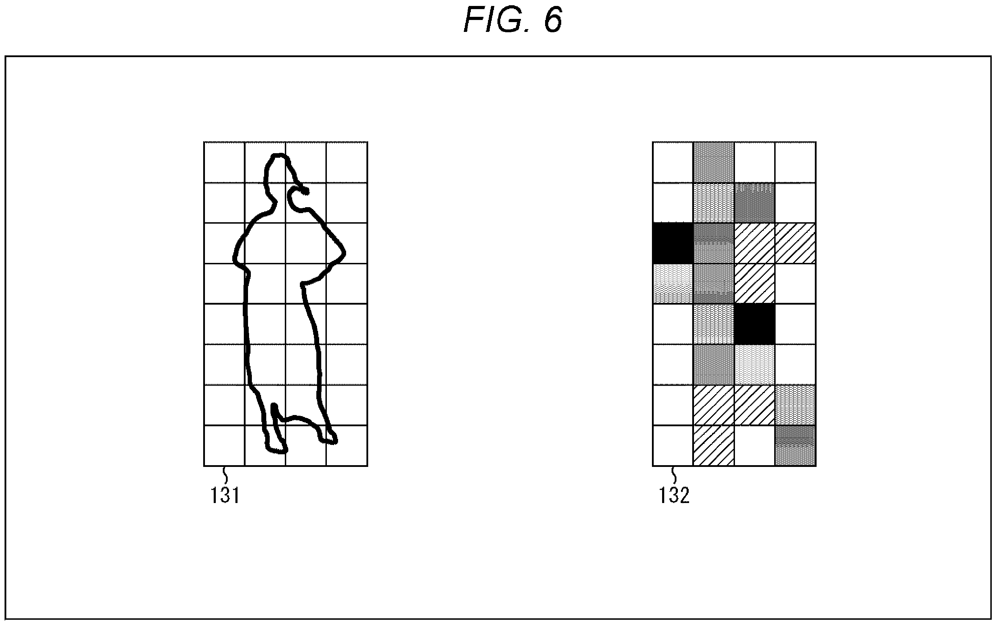

The parameter vector grid generation unit 111 performs processing concerning generation of a parameter vector grid. For example, the parameter vector grid generation unit 111 may acquire a geometry to be input to the geometry coding apparatus 100. In addition, the parameter vector grid generation unit 111 may generate a parameter vector held in a grid shape, from the geometry. For example, the parameter vector grid generation unit 111 may generate a parameter vector (a parameter vector grid) from a geometry, using a 3D-CNN (a 3D-CNN_E1). That is, the parameter vector grid generation unit 111 may input the acquired geometry to the 3D-CNN_E1 and transform the geometry into a parameter vector grid 131 illustrated in Fig. 6.

A parameter vector grid refers to a four-dimensional tensor (a four-dimensional array) in which one-dimensional parameter vectors are arranged in a three-dimensional grid shape. On condition that the parameter vector has a dimension of Cp and the parameter vector grid has a block size of Bp, with regard to the 3D-CNN_E1, an input dimension needs to be 1, an output dimension needs to be Cp, and a downscaling factor needs to be 1/Bp. A hyper parameter and a structure each have a degree of freedom as long as this condition is satisfied.

The parameter vector grid generation unit 111 may supply the generated parameter vector grid to the CNN feature vector grid generation unit 112.

The CNN feature vector grid generation unit 112 performs processing concerning generation of a CNN feature vector grid. For example, the CNN feature vector grid generation unit 112 may acquire the parameter vector grid (the parameter vector held in the grid shape) supplied from the parameter vector grid generation unit 111. In addition, the CNN feature vector grid generation unit 112 may generate a feature vector (a CNN feature vector) from the parameter vector, using a 3D-CNN (a 3D-CNN _E2). That is, the CNN feature vector grid generation unit 112 may input the acquired parameter vector grid 131 (Fig. 6) to the 3D-CNN_E2 and transform the parameter vector grid 131 into a CNN feature vector grid 132 illustrated in Fig. 6. It can therefore be said that the CNN feature vector grid generation unit 112 is a generation unit.

On condition that the CNN feature vector has a dimension of Cf and the CNN feature vector grid has a block size of Bf, with regard to the 3D-CNN_E2, an input dimension needs to be Cp, an output dimension needs to be Cf, and a downscaling factor needs to be Bp/Bf, in order to take a nonlinear spatial correlation into consideration. Furthermore, the 3D-CNN_E2 has at least two 3D convolution layers and one nonlinear transformation layer. In addition, at least one of the 3D convolution layers has a kernel size that is more than 1. A hyper parameter and a structure each have a degree of freedom as long as this condition is satisfied.

The CNN feature vector grid generation unit 112 may supply the generated CNN feature vector grid to the coding unit 113.

The coding unit 113 performs processing concerning coding of a CNN feature vector grid. For example, the coding unit 113 may acquire the CNN feature vector grid supplied from the CNN feature vector grid generation unit 112. In addition, the coding unit 113 may code the CNN feature vector. For example, the coding unit 113 may quantize the acquired CNN feature vector grid and entropy-code the quantization level, thereby generating coded data of the CNN feature vector grid (i.e., a bit stream). The coding unit 113 may quantize and entropy-code all the values of the CNN feature vector grids independently of each other. At this time, the coding unit 113 may apply, to the quantization, a quantization width that is common in a spatial direction and is different for each dimension. In addition, the coding unit 113 may apply, to the entropy coding, a probability table that is common in the spatial direction and is different for each dimension.

The coding unit 113 outputs the generated bit stream (the coded data of the CNN feature vector grid) to the outside of the geometry coding apparatus 100. This bit stream may be provided to a decoding apparatus via an optional transmission path or with an optional recording medium.

As described above, quantization and entropy coding using the quantization width and the probability table each of which is common in the spatial direction and is different for each dimension allow the coding unit 113 to code (quantize and entropy-code) the CNN feature vectors independently of each other. In other words, the coding unit 113 is capable of coding (quantizing and entropy-coding) the CNN feature vectors in parallel. By coding the CNN feature vectors in parallel, it is possible to perform the coding at higher speed (i.e., to reduce a processing time).

In the case of, for example, the LVAC for an attribute, the coding efficiency is improved by coding a parameter vector, using a correlation between hierarchies of a binary tree (also referred to as an LoD correlation). When simple correlativity with a peripheral block is high, the LoD correlation becomes high. The LoD correlation is used on the assumption that an AC component comes close to 0 (e.g., $\delta z_{1+1,nR}$ approximates 0). That is, the compression efficiency becomes higher when this assumption holds. This is equivalent to a case where values of neighboring parameter vectors are close together (e.g., $z_{1+1,nR}$ and $z_{1+1,nL}$ are approximate together).

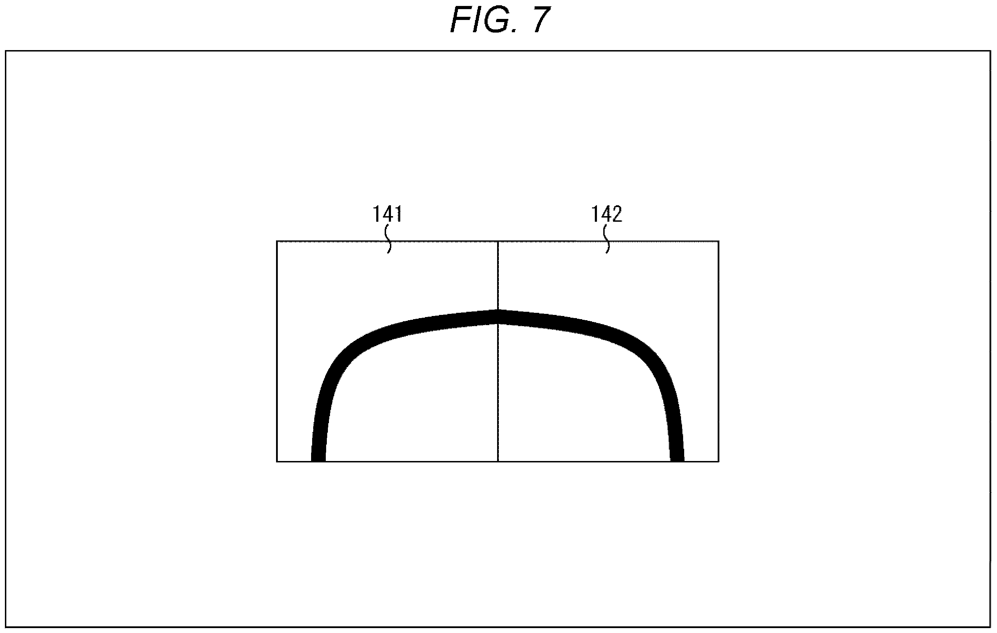

In a case of a geometry, however, neighboring blocks may be in an analogous relationship. It is assumed in, for example, Fig. 7 that a block 141 and a block 142 each correspond to a block of a geometry and black lines in the block 141 and block 142 each indicate a position where a point group exists. In this case, the position of the point group in the block 141 and the position of the point group in the block 142 are in a substantially line-symmetric relationship. Therefore, a simple difference in geometry between the block 141 and the block 142 is large. However, by obtaining a difference through line-symmetric movement of one of the block 141 and the block 142 at a boundary between the block 141 and the block 142, this difference can be made smaller than the simple difference. In the case of the geometry, as described above, the neighboring blocks are in the analogous relationship (or are in a relationship sufficiently close to the analogous relationship), and may match with each other or may be approximate each other by rotational movement, translation, scaling, symmetry operation, a combination thereof, or the like.

In addition, candidates for a geometry of a processing target block may be predicted from geometries of the neighboring blocks and prior knowledge. In the case of the geometry, there may be complicated correlativity as described above.

Such complicated correlativity may be useful for compression; however, there is a possibility that it cannot be sufficiently captured by the LoD correlation as described above. Note that a relation (a relationship) in the spatial direction, which does not depend on the structure of the binary tree as described above, is also referred to as a correlation (correlativity) in the spatial direction or redundancy in the spatial direction.

As described above, when an entropy model (a probability model) of entropy coding is common in the spatial direction, the high correlation in the spatial direction does not apply to the entropy model. As a result, there is a high possibility that the probability drops to the lower side. Consequently, an amount of coding cannot be reduced sufficiently, so that there remains room for improvement in coding efficiency.

In the case of the geometry coding apparatus 100, the CNN feature vector grid generation unit 112 inputs a parameter vector grid to the 3D-CNN_E2 to generate a CNN feature vector grid. As a result, a parameter vector is subjected to 3D convolution computation, and a feature vector takes a more random value in the spatial direction. That is, it is possible to reduce the correlation in the spatial direction. That is, the CNN feature vector grid generation unit 112 generates, on the basis of a parameter vector of a coordinate-based network representing a geometry of 3D data, a feature vector expressing a spatial correlation lower than a spatial correlation of the parameter vector. Therefore, the geometry coding apparatus 100 is capable of improving the coding efficiency as compared with the case where a geometry is coded using the LoD correlation.

In addition, the geometry coding apparatus 100 is capable of coding (quantizing and entropy-coding) CNN feature vectors in parallel while suppressing decrease in coding efficiency. In other words, the geometry coding apparatus 100 is capable of performing coding at higher speed (i.e., capable of reducing a processing time).

Note that in the LAVC for an attribute, a parameter vector is derived by optimization of a Lagrange function. This optimization requires a large amount of processing since gradient calculation based on back propagation is performed. In contrast to this, according to the geometry coding apparatus 100, the parameter vector grid generation unit 111 inputs a geometry to the 3D-CNN_E1 having the three-dimensional convolution layer to generate a parameter vector grid. Therefore, the geometry coding apparatus 100 is capable of reducing an amount of processing as compared with the case of using the optimization of the Lagrange function.

Note that the parameter vector grid generation unit 111 and the CNN feature vector grid generation unit 112 may be integrated into one to serve as a generation unit 121. That is, the generation unit 121 may generate, from a geometry of 3D data, a feature vector expressing a spatial correlation lower than a spatial correlation of a parameter vector of a coordinate-based network representing the geometry. At this time, the generation unit 121 may generate a feature vector (a CNN feature vector), using a 3D-CNN having a three-dimensional convolution layer. For example, the generation unit 121 may generate a parameter vector held in a grid shape, from a geometry, and generate a feature vector, using a 3D-CNN with the parameter vector as an input. At this time, the generation unit 121 may generate a parameter vector, using a 3D-CNN with a geometry as an input.

In addition, the foregoing 3D-CNN_E1 and 3D-CNN_E2 may be realized using a single 3D-CNN. For example, the generation unit 121 may input the geometry input to the geometry coding apparatus 100 to the 3D-CNN to transform the geometry into the CNN feature vector grid 132 illustrated in Fig. 6. Also in this case, the geometry coding apparatus 100 is capable of producing similar advantageous effects.

<Flow of geometry coding processing>

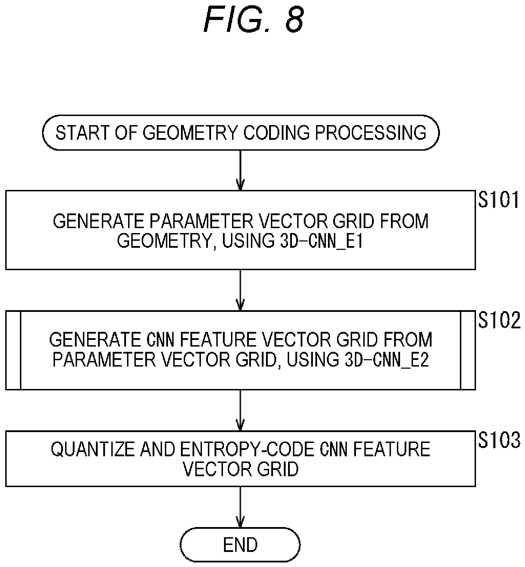

The geometry coding apparatus 100 performs geometry coding processing to code a geometry as described above. An example of a flow of this geometry coding processing is described with reference to a flowchart of Fig. 8.

When the geometry coding processing starts, in step S101, the parameter vector grid generation unit 111 generates a parameter vector grid from a geometry, using the 3D-CNN_E1.

In step S102, the CNN feature vector grid generation unit 112 performs CNN feature vector grid generation processing to generate a CNN feature vector grid from the parameter vector grid, using the 3D-CNN_E2. That is, the CNN feature vector grid generation unit 112 generates, on the basis of a parameter vector of a coordinate-based network representing a geometry of 3D data, a feature vector expressing a spatial correlation lower than a spatial correlation of the parameter vector.

In step S103, the coding unit 113 quantizes and entropy-codes the CNN feature vector grid to generate coded data of the CNN feature vector grid (i.e., a bit stream).

When the processing in step S103 ends, the geometry coding processing ends.

<Flow of CNN feature vector grid generation processing>

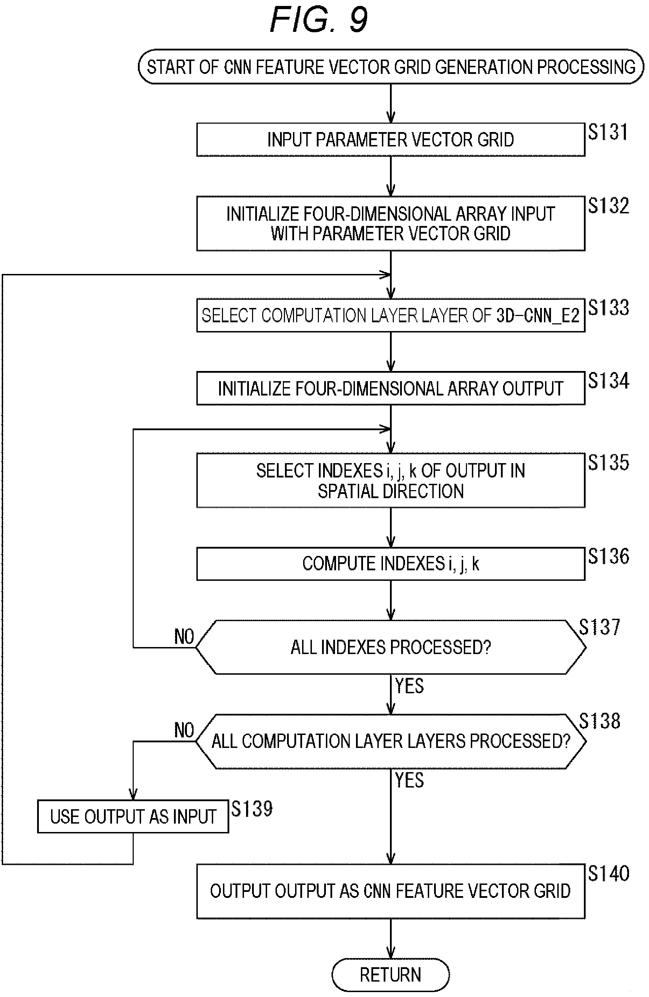

Next, an example of a flow of the CNN feature vector grid generation processing performed in step S102 illustrated in Fig. 8 is described with reference to a flowchart of Fig. 9.

When the CNN feature vector grid generation processing starts, in step S131, the CNN feature vector grid generation unit 112 inputs the parameter vector grid generated in step S101 illustrated in Fig. 8.

In step S132, the CNN feature vector grid generation unit 112 initializes a four-dimensional array input with the parameter vector grid.

In step S133, the CNN feature vector grid generation unit 112 selects a processing target computation layer of the 3D-CNN_E2.

In step S134, the CNN feature vector grid generation unit 112 initializes a four-dimensional array output.

In step S135, the CNN feature vector grid generation unit 112 selects processing target indexes i, j, and k of the output in the spatial direction, from unprocessed indexes in predetermined order.

In step S136, the CNN feature vector grid generation unit 112 subjects the processing target indexes i, j, and k to computation in the processing target computation layer.

In step S137, the CNN feature vector grid generation unit 112 determines whether or not all the indexes have been processed. When there is an unprocessed index, the CNN feature vector grid generation processing returns to step S136. The respective kinds of processing in and subsequent to step S136 are then performed. That is, the respective kinds of processing from step S135 to step S137 are repeatedly performed while updating the processing target indexes i, j, and k until all the indexes are subjected to the computation in the processing target computation layer.

When it is determined in step S137 that all the indexes have been subjected to the computation in the processing target computation layer, the CNN feature vector grid generation processing proceeds to step S138.

In step S138, the CNN feature vector grid generation unit 112 determines whether or not all the computation layers have been processed. When it is determined that there is an unprocessed computation layer, the CNN feature vector grid generation processing proceeds to step S139.

In step S139, the CNN feature vector grid generation unit 112 uses the output (the computation result in step S136) as an input. When the processing in step S139 ends, the CNN feature vector grid generation processing returns to step S133. That is, the respective kinds of processing from step S133 to step S139 are repeatedly performed while updating the processing target computation layer until the computation is performed in all the computation layers.

When it is determined in step S138 that the computation has been performed in all the computation layers, the CNN feature vector grid generation processing proceeds to step S140. In step S140, the CNN feature vector grid generation unit 112 outputs the output (the computation result in step S136) as a CNN feature vector grid (i.e., supplies the output to the coding unit 113). When the processing in step S140 ends, the CNN feature vector grid generation processing ends. The processing flow then returns to Fig. 8.

By performing the respective kinds of processing as described above, the geometry coding apparatus 100 is capable of coding a geometry of a point cloud, using a coordinate-based network. The geometry coding apparatus 100 is also capable of improving the entire coding efficiency by coding the geometry. The geometry coding apparatus 100 is also capable of improving the coding efficiency by reducing a spatial correlation. The geometry coding apparatus 100 is also capable of coding feature vectors in parallel while suppressing decrease in coding efficiency, by reducing the spatial correlation. The geometry coding apparatus 100 is thus capable of performing coding processing at higher speed (i.e., capable of reducing a processing time). The geometry coding apparatus 100 is also capable of reducing a processing time of decoding processing. The geometry coding apparatus 100 is also capable of reducing an amount of coding processing by generating a parameter vector grid, using a 3D-CNN.

<Method 1>

The foregoing method 1 can also be applied to, for example, a decoder that decodes coded data of a geometry. For example, an information processing apparatus includes: a decoding unit that decodes coded data to generate a feature vector expressing a spatial correlation lower than a spatial correlation of a parameter vector of a coordinate-based network representing a geometry of 3D data; and a generation unit that generates the geometry from the feature vector.

In addition, an information processing method includes: decoding coded data to generate a feature vector expressing a spatial correlation lower than a spatial correlation of a parameter vector of a coordinate-based network representing a geometry of 3D data; and generating the geometry from the feature vector.

It is thus possible to decode a geometry of a point cloud coded by reducing a spatial correlation of a parameter vector of a coordinate-based network. It is therefore possible to realize improvement in entire coding efficiency by realizing the geometry coding. It is also possible to further improve the coding efficiency since a spatial correlation is reduced.

The method 1-1 and the method 1-1-1 may also be applied as in the case of the encoder. For example, a generation unit may generate a parameter vector from a feature vector and generate a geometry, using a coordinate-based network to which the parameter vector is applied. The generation unit may also generate a parameter vector, using a 3D-CNN having a three-dimensional inverse (3D) convolution layer with a feature vector as an input. The 3D deconvolution layer performs 3D deconvolution computation. The 3D deconvolution computation is inverse processing of 3D convolution computation.

It is possible to parallelize computation processing for each element by using the 3D-CNN as described above. It is therefore possible to generate a parameter vector at higher speed (i.e., to reduce a processing time for generating a parameter vector), as compared with a case of joining a global DC component and an AC component together as in the LAVC for an attribute. Particularly in the case of joining the global DC component and the AC component together, the processing time for generating the parameter vector increases as the number of blocks increases. On the other hand, the use of the 3D-CNN makes this processing time substantially constant without depending on the number of blocks. That is, it is possible to suppress an increase in processing time for generating the parameter vector even when the number of blocks increases.

<Geometry decoding apparatus>

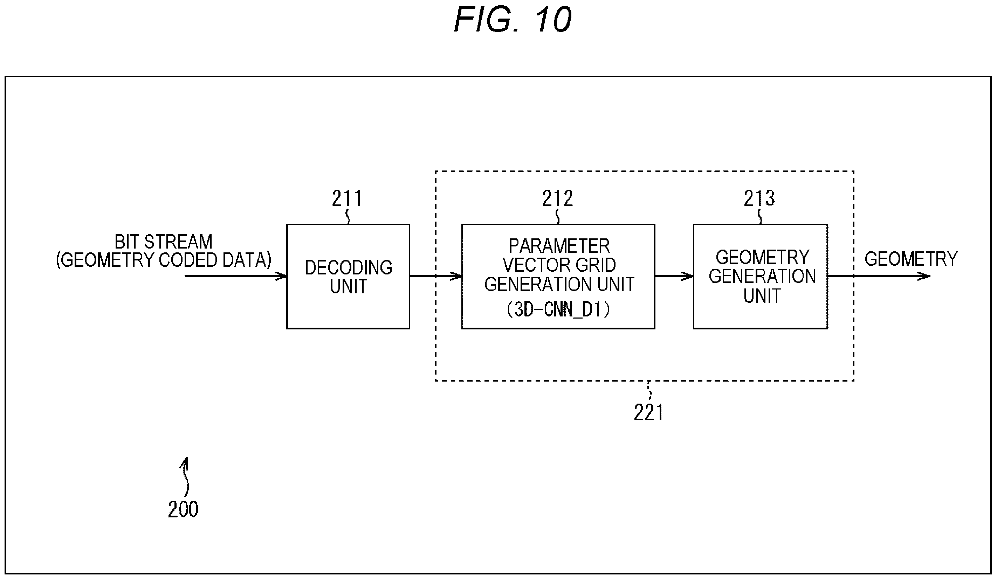

Fig. 10 is a block diagram illustrating an example of a configuration of a geometry decoding apparatus as an aspect of an information processing apparatus to which the present technology is applied. A geometry decoding apparatus 200 illustrated in Fig. 10 is an apparatus that decodes coded data of a geometry of a point cloud (3D data). The geometry decoding apparatus 200 applies the foregoing method 1-1-1 to decode the coded data of the geometry. For example, the geometry decoding apparatus 200 decodes a bit stream generated by the geometry coding apparatus 100 (i.e., coded data of a CNN feature vector grid of a geometry) to generate (reconstruct) a geometry.

Note that Fig. 10 illustrates main processing units, data flows, and the like; therefore, the geometry decoding apparatus 200 is not limited to those illustrated in Fig. 10. That is, the geometry decoding apparatus 200 may include a processing unit not illustrated in a block form in Fig. 10 and may involve processing or a data flow not indicated by an arrow or the like in Fig. 10.

As illustrated in Fig. 10, the geometry decoding apparatus 200 includes a decoding unit 211, a parameter vector grid generation unit 212, and a geometry generation unit 213.

The decoding unit 211 performs processing concerning decoding of a bit stream. For example, the decoding unit 211 may acquire a bit stream to be input to the geometry decoding apparatus 200 (i.e., coded data of a CNN feature vector grid of a geometry). In addition, the decoding unit 211 may decode the bit stream. For example, the decoding unit 211 may entropy-decode the acquired bit stream to generate (reconstruct) a quantization level, and may inverse-quantize the quantization level to generate (reconstruct) a CNN feature vector grid. That is, the decoding unit 211 may decode coded data to generate a feature vector expressing a spatial correlation lower than a spatial correlation of a parameter vector of a coordinate-based network representing a geometry of 3D data. At this time, the decoding unit 211 uses the same quantization width and probability table as those for the encoder (e.g., the coding unit 113). In addition, the decoding unit 211 may supply the generated CNN feature vector grid to the parameter vector grid generation unit 212.

The parameter vector grid generation unit 212 performs processing concerning generation of a parameter vector grid. For example, the parameter vector grid generation unit 212 may acquire the CNN feature vector grid supplied from the decoding unit 211. In addition, the parameter vector grid generation unit 212 may generate (reconstruct) a parameter vector from the CNN feature vector grid, using a 3D-CNN (3D-CNN_D1). That is, the parameter vector grid generation unit 212 may input the acquired CNN feature vector grid 132 (Fig. 6) to the 3D-CNN_D1 to transform the CNN feature vector grid 132 into the parameter vector grid 131 (Fig. 6).

In order to take a nonlinear spatial correlation into consideration, with regard to the 3D-CNN_D1, an input dimension needs to be Cf, an output dimension needs to be Cp, and an upscaling factor needs to be Bf/Bp. For the purpose of upscaling, the geometry decoding apparatus 200 uses a 3D deconvolution layer instead of a 3D convolution layer. Furthermore, the 3D-CNN_D1 has at least two 3D deconvolution layers and one nonlinear layer. At least one of the 3D deconvolution layers has a kernel size that is more than 1. A hyper parameter and a structure each have a degree of freedom as long as this condition is satisfied.

The parameter vector grid generation unit 212 may supply the generated parameter vector grid to the geometry generation unit 213.

The geometry generation unit 213 performs processing concerning generation of a geometry. For example, the geometry generation unit 213 may acquire the parameter vector grid supplied from the parameter vector grid generation unit 212. In addition, the geometry generation unit 213 may obtain a geometry of 3D data from the parameter vector grid and a query point, using a coordinate-based network representing the geometry of the 3D data. Then, the geometry generation unit 213 may output the generated geometry to the outside of the geometry decoding apparatus 200.

For example, the geometry generation unit 213 constructs a query point first. The geometry generation unit 213 may set this query point by an optional method. For example, grid points arranged at predetermined intervals in a three-dimensional region (in a space) may be set for query points. In this case, a parameter value such as the interval between the grid points may be previously shared between the encoder (e.g., the geometry coding apparatus 100) and the decoder (e.g., the geometry decoding apparatus 200). In addition, this parameter value may be transmitted from the encoder to the decoder with this parameter value associated with a bit stream. Furthermore, for example, the geometry generation unit 213 may set this query point. A method of setting this query point is optional. For example, the geometry generation unit 213 may set a query point in accordance with conditions. For example, the geometry generation unit 213 may construct a query point only for a target region.

Next, the geometry generation unit 213 derives, for all the query points x, an occupation probability $f_\theta (x_{local}: z)$, where z represents a parameter vector of a block to which x belongs, and $x_{local}$ represents local coordinates in the block of x. That is, with regard to each query point, the coordinates are used as an input to a coordinate-based network, the parameter vector is used as a condition vector, and the output is used as an occupation probability. However, $f_\theta$ represents a neural network (a coordinate-based network), and $\theta$ represents a parameter. Then, the geometry generation unit 213 selects one of the query points the occupation probability value of which is high, and outputs information on the selected query point to the outside of the geometry decoding apparatus 200. That is, the geometry generation unit 213 derives an occupation probability of a query point, using a coordinate-based network to which a parameter vector is applied, with position information on the query point as an input, and outputs information on the query point the occupation probability of which is high.

A method of selecting a query point for outputting the information is optional. For example, the geometry generation unit 213 may select a query point the occupation probability value of which is more than or equal to a predetermined threshold value. Note that this threshold value is only required to be previously shared between the encoder (e.g., the geometry coding apparatus 100) and the decoder (e.g., the geometry decoding apparatus 200). In addition, this threshold value may be transmitted from the encoder to the decoder with this threshold value associated with a bit stream.

Alternatively, the geometry generation unit 213 may select a predetermined number of query points in descending order of their occupation probability values. Note that this predetermined number may be transmitted from the encoder to the decoder with this predetermined number associated with a bit stream.

As described above, the geometry decoding apparatus 200 generates a parameter vector, using a 3D-CNN and is therefore capable of parallelizing computation processing for each element. The geometry decoding apparatus 200 is therefore capable of generating a parameter vector at higher speed (i.e., capable of reducing a processing time for generating a parameter vector), as compared with a case of joining a global DC component and an AC component together as in the LAVC for an attribute. Particularly in the case of joining the global DC component and the AC component together, the processing time for generating the parameter vector increases as the number of blocks increases. On the other hand, the geometry decoding apparatus 200 uses the 3D-CNN which makes this processing time substantially constant without depending on the number of blocks. That is, the geometry decoding apparatus 200 is capable of suppressing an increase in processing time for generating the parameter vector even when the number of blocks increases.

Note that in the foregoing description, the coordinates of the query point are used as the input to the coordinate-based network; however, a parameter to be input is optional and is not limited to this example. For example, the geometry generation unit 213 may input time information (t) to the coordinate-based network in addition to the coordinates (x, y, z) of the query point. In this case, the input corresponds to four-dimensional information (x, y, z, t). The geometry generation unit 213 is thus capable of generating (reconstructing) a geometry that changes in a temporal direction. That is, it is possible to realize coding and decoding of a geometry that changes in a temporal direction.

Alternatively, the geometry generation unit 213 may input line-of-sight direction ($\theta$, $\varphi$) to the coordinate-based network in addition to the coordinates (x, y, z) of the query point. In this case, the input corresponds to five-dimensional information (x, y, z, $\theta$, $\varphi$). The geometry generation unit 213 is thus capable of generating (reconstructing) a geometry having a correspondence with a line-of-sight direction. For example, the geometry generation unit 213 is capable of generating (reconstructing) a geometry having an attribute (e.g., reflection, etc.) that changes in accordance with a line-of-sight direction. That is, it is possible to realize coding and decoding of a geometry having an attribute that changes in accordance with a line-of-sight direction.

As a matter of course, another parameter may be added to the input. Alternatively, a plurality of parameters may be added. For example, both the time information (t) and the line-of-sight direction ($\theta$, $\varphi$) may be added to the input.

Furthermore, in the foregoing description, the occupation probability is used as the output from the coordinate-based network; however, a parameter to be output is optional and is not limited to this example. For example, the occupation probability value may be obtained in such a manner that the coordinates of the query point, or the like are input to the coordinate-based network. That is, the geometry generation unit 213 may output an occupation probability value of a query point the occupation probability of which is high. Alternatively, when the coordinates of the query point, or the like are input to the coordinate-based network, information in another format, such as signed distance or unsigned distance, is obtained. The geometry generation unit 213 may use this information as the occupation probability.

Furthermore, an attribute may be obtained in addition to the occupation probability by the coordinate-based network. For example, the coordinate-based network may output a vector connecting the occupation probability and the attribute. The geometry generation unit 213 is thus capable of generating (reconstructing) a geometry having an attribute. That is, it is possible to realize coding and decoding of a geometry having an attribute.

Note that the parameter vector grid generation unit 212 and the geometry generation unit 213 may be integrated into one to serve as a generation unit 221. That is, the generation unit 221 may use, as an input, a feature vector expressing a spatial correlation lower than a spatial correlation of a parameter vector of a coordinate-based network representing a geometry of 3D data, and generate (reconstruct) the geometry of the 3D data. At this time, the generation unit 221 may generate a parameter vector from a feature vector and generate a geometry, using a coordinate-based network to which the parameter vector is applied. In this case, the generation unit 221 may generate the parameter vector, using a 3D-CNN having a three-dimensional deconvolution layer with the feature vector as an input. In addition, the generation unit 221 may derive an occupation probability of a query point, using the coordinate-based network to which the parameter vector is applied, with position information on the query point as an input, and output information on the query point the occupation probability of which is high. In this case, the generation unit 221 may output an occupation probability value of the query point the occupation probability of which is high. In addition, the generation unit 221 may set a query point and use the set query point as an input. Furthermore, the generation unit 221 may further use time information as an input. In addition, the generation unit 221 may further use a line-of-sight direction as an input.

<Flow of geometry decoding processing>

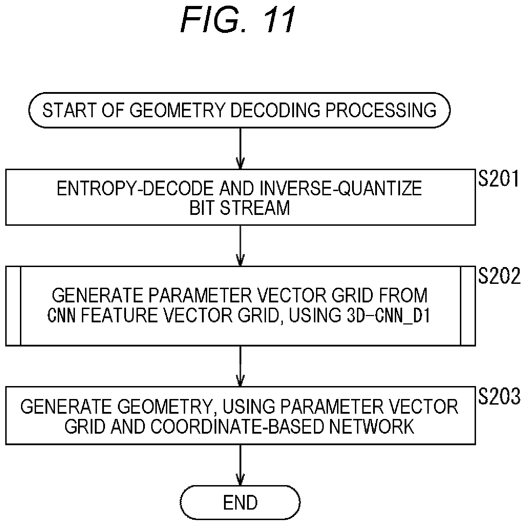

The geometry decoding apparatus 200 performs geometry decoding processing to decode coded data of a geometry (i.e., a bit stream) as described above. An example of a flow of this geometry decoding processing is described with reference to a flowchart of Fig. 11.

When the geometry decoding processing starts, in step S201, the decoding unit 211 entropy-decodes and inverse-quantizes a bit stream to generate (reconstruct) a CNN feature vector grid. That is, the decoding unit 211 decodes coded data to generate a feature vector expressing a spatial correlation lower than a spatial correlation of a parameter vector of a coordinate-based network representing a geometry of 3D data.

In step S202, the parameter vector grid generation unit 212 performs parameter vector grid generation processing to generate (reconstruct) a parameter vector grid from the CNN feature vector grid, using the 3D-CNN_D1.

In step S203, the geometry generation unit 213 generates (reconstructs) a geometry, using the parameter vector grid and a coordinate-based network. For example, the geometry generation unit 213 sets query points as described above, obtains an occupation probability of each query point with position information on the query point as an input to the coordinate-based network and with the parameter vector as a condition vector of the coordinate-based network, and generates a geometry of 3D data (a point cloud), using the position information on one of the query points the occupation probability of which is high.

When the processing in step S203 ends, the geometry decoding processing ends.

<Flow of parameter vector grid generation processing>

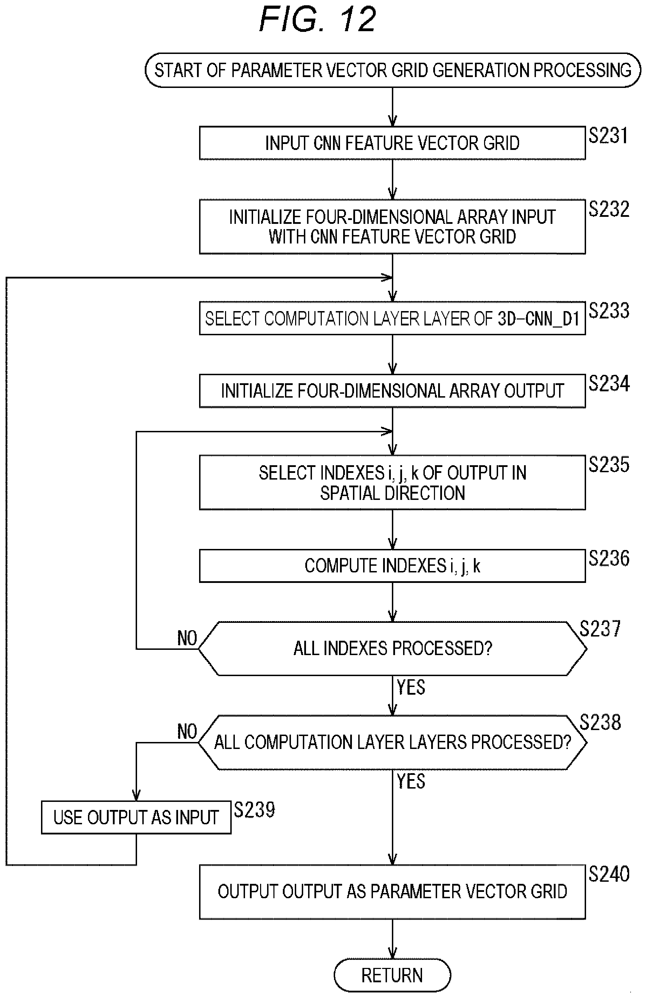

Next, an example of a flow of the parameter vector grid generation processing performed in step S202 illustrated in Fig. 11 is described with reference to a flowchart of Fig. 12.

When the parameter vector grid generation processing starts, in step S231, the parameter vector grid generation unit 212 inputs the CNN feature vector grid generated in step S201 illustrated in Fig. 11.

In step S232, the parameter vector grid generation unit 212 initializes a four-dimensional array input with the CNN feature vector grid.

In step S233, the parameter vector grid generation unit 212 selects a processing target computation layer of the 3D-CNN_D1.

In step S234, the parameter vector grid generation unit 212 initializes a four-dimensional array output.

In step S235, the parameter vector grid generation unit 212 selects processing target indexes i, j, and k of an output in a spatial direction, from unprocessed indexes in predetermined order.

In step S236, the parameter vector grid generation unit 212 subjects the processing target indexes i, j, and k to computation in the processing target computation layer.

In step S237, the parameter vector grid generation unit 212 determines whether or not all the indexes have been processed. When there is an unprocessed index, the parameter vector grid generation processing returns to step S236. The respective kinds of processing in and subsequent to step S236 are then performed. That is, the respective kinds of processing from step S235 to step S237 are repeatedly performed while updating the processing target indexes i, j, and k until all the indexes are subjected to the computation in the processing target computation layer.

When it is determined in step S237 that all the indexes have been subjected to the computation in the processing target computation layer, the parameter vector grid generation processing proceeds to step S238.

In step S238, the parameter vector grid generation unit 212 determines whether or not all the computation layers have been processed. When it is determined that there is an unprocessed computation layer, the parameter vector grid generation processing proceeds to step S239.

In step S239, the parameter vector grid generation unit 212 uses the output (the computation result in step S236) as an input. When the processing in step S239 ends, the parameter vector grid generation processing returns to step S233. That is, the respective kinds of processing from step S233 to step S239 are repeatedly performed while updating the processing target computation layer until the computation is performed in all the computation layers.

When it is determined in step S238 that the computation has been performed in all the computation layers, the parameter vector grid generation processing proceeds to step S240. In step S240, the parameter vector grid generation unit 212 outputs the output (the computation result in step S236) as a parameter vector grid (i.e., supplies the output to the geometry generation unit 213). When the processing in step S240 ends, the parameter vector grid generation processing ends. The processing flow then returns to Fig. 11.

By performing the respective kinds of processing as described above, the geometry decoding apparatus 200 generates a parameter vector, using a 3D-CNN and is therefore capable of parallelizing computation processing for each element. The geometry decoding apparatus 200 is therefore capable of generating a parameter vector at higher speed (i.e., capable of reducing a processing time for generating a parameter vector), as compared with a case of joining a global DC component and an AC component together as in the LAVC for an attribute. Particularly in the case of joining the global DC component and the AC component together, the processing time for generating the parameter vector increases as the number of blocks increases. On the other hand, the geometry decoding apparatus 200 uses the 3D-CNN which makes this processing time substantially constant without depending on the number of blocks. That is, the geometry decoding apparatus 200 is capable of suppressing an increase in processing time for generating the parameter vector even when the number of blocks increases.

<4. Generation of parameter vector by optimization of Lagrange function>

<Method 1-1-2>

Note that the parameter vector grid generation unit 111 may derive a parameter vector by applying optimization of an objective function instead of the use of the 3D-CNN_E1, as in the case of the LAVC for an attribute. This technique is typically called auto-decoder. For example, the parameter vector grid generation unit 111 may set an objective function that can be differentiated with regard to a parameter vector, and derive a parameter vector that minimizes (or maximizes) the objective function by gradient descent. An example of this objective function is a Lagrange function to be used in the LVAC (i.e., a function that outputs a bit-size approximate value and a weighted sum of a reconstruction distortion with a parameter vector as an input).

That is, as illustrated in the fourth row from the top of the table of Fig. 4, the geometry coding apparatus 100 may generate a parameter vector from a geometry by optimization of a Lagrange function and generate a CNN feature vector from the parameter vector, using a 3D-CNN (method 1-1-2).

For example, in an information processing apparatus including: a generation unit that generates, on the basis of a parameter vector of a coordinate-based network representing a geometry of 3D data, a feature vector expressing a spatial correlation lower than a spatial correlation of the parameter vector; and a coding unit that codes the feature vector, the generation unit may generate the parameter vector by optimization of a Lagrange function. For example, in the geometry coding apparatus 100, (the parameter vector grid generation unit 111) of the generation unit 121 may generate the parameter vector by the optimization of the Lagrange function.

<Flow of geometry coding processing>

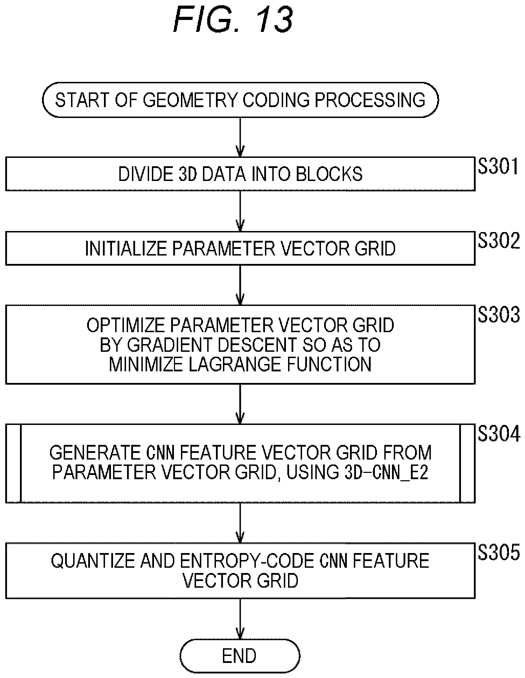

An example of a flow of the geometry coding processing in this case is described with reference to a flowchart of Fig. 13.

When the geometry coding processing starts, in step S301, the parameter vector grid generation unit 111 divides 3D data (e.g., a point cloud) into blocks.

In step S302, the parameter vector grid generation unit 111 initializes a parameter vector grid.

In step S303, the parameter vector grid generation unit 111 optimizes the parameter vector grid by gradient descent so as to minimize a Lagrange function (an objective function). For example, the Lagrange function is defined by Equation (4) below.

$$J\left(\hat{\theta},\hat{Z}\right) = D\left(\hat{\theta},\hat{Z}\right) + \lambda R\left(\hat{\theta},\hat{Z}\right)$$

$$\ldots \quad (4)$$

Note that Z with a circumflex represents a parameter vector obtained by coding and decoding V. Also in Equation (4), D represents a distortion between a geometry derived using Z (with circumflex) and a geometry input to the geometry coding apparatus 100. Also in Equation (4), R represents a bit-size rate. Also in Equation (4), $\lambda$ represents a hyper parameter. Also in Equation (4), $\theta$ represents a parameter of a neural network.

The parameter vector grid generation unit 111 is capable of deriving a parameter vector by minimization of a Lagrange function.

When the parameter vector grid is obtained as described above, the respective kinds of processing in steps S304 and S305 are performed as in the respective kinds of processing in steps S101 and S102 illustrated in Fig. 8. When the processing in step S305 ends, the geometry coding processing ends.

Also in this case, the geometry coding apparatus 100 is capable of coding a geometry of a point cloud, using a coordinate-based network. The geometry coding apparatus 100 is also capable of improving the entire coding efficiency by coding the geometry. At this time, the geometry coding apparatus 100 is expected to improve compression performance by directly optimizing a bit size and a reconstruction distortion. The geometry coding apparatus 100 is also capable of improving the coding efficiency by reducing a spatial correlation. The geometry coding apparatus 100 is also capable of coding feature vectors in parallel while suppressing decrease in coding efficiency, by reducing the spatial correlation. The geometry coding apparatus 100 is thus capable of performing coding processing at higher speed (i.e., capable of reducing a processing time).

<5. Application of sparse 3D convolution>

<Method 1-2>

In the foregoing 3D-CNN, when normal 3D convolution computation is performed, an empty block in which the number of points is 0 is also subjected to the 3D convolution computation, so that a parameter vector and a CNN feature vector are derived. Consequently, when an input geometry is sparse, there is a possibility that coding efficiency decreases and unnecessary calculation cost increases.

Hence, a 3D-CNN may use a sparse 3D convolution layer instead of a 3D convolution layer. That is, as illustrated in the fifth row from the top of the table of Fig. 4, a CNN feature vector may be generated using a 3D-CNN having a sparse 3D convolution layer (method 1-2).

For example, in an information processing apparatus including: a generation unit that generates, on the basis of a parameter vector of a coordinate-based network representing a geometry of 3D data, a feature vector expressing a spatial correlation lower than a spatial correlation of the parameter vector; and a coding unit that codes the feature vector, the generation unit may generate the feature vector, using a 3D-CNN having a sparse three-dimensional convolution layer. Alternatively, the generation unit may generate the parameter vector, using the 3D-CNN having the sparse three-dimensional convolution layer with the geometry as an input, and generate the feature vector, using the 3D-CNN with the parameter vector as an input. Moreover, the generation unit may generate the parameter vector, using the 3D-CNN having the sparse three-dimensional convolution layer with the geometry as an input, and generate the feature vector, using the 3D-CNN having the sparse three-dimensional convolution layer with the parameter vector as an input.

The sparse 3D convolution layer performs sparse 3D convolution computation. According to the sparse 3D convolution computation, 3D convolution computation is performed on an occupied block, and 3D convolution computation for a block regarded as an empty block is skipped (omitted). Therefore, for example, when a sparse geometry is a processing target, it is possible to suppress decrease in coding efficiency and increase in unnecessary calculation cost.

<Geometry coding apparatus>

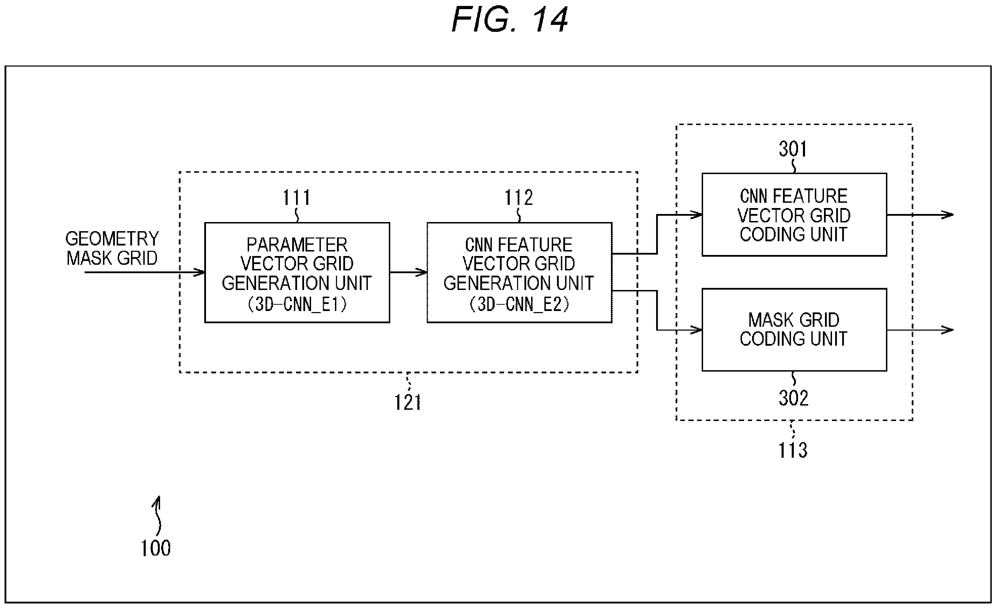

Fig. 14 is a block diagram illustrating a main configuration example of a geometry coding apparatus 100 in this case. Note that Fig. 14 illustrates main processing units, data flows, and the like; therefore, the geometry coding apparatus 100 is not limited to those illustrated in Fig. 14. That is, the geometry coding apparatus 100 may include a processing unit not illustrated in a block form in Fig. 14 and may involve processing or a data flow not indicated by an arrow or the like in Fig. 14.

Also in this case, the geometry coding apparatus 100 includes a parameter vector grid generation unit 111, a CNN feature vector grid generation unit 112, and a coding unit 113.

The parameter vector grid generation unit 111 (a generation unit 121) may generate a parameter vector grid, using a 3D-CNN_E1 having a sparse 3D convolution layer. In addition, the CNN feature vector grid generation unit 112 (the generation unit 121) may generate a CNN feature vector grid, using a 3D-CNN_E2 having a sparse 3D convolution layer.

Note that a mask grid $\{0,1\}^{(D \times D \times D)}$ and a parameter vector grid $R^{M \times C}$ in a pair are input to and output from a 3D-CNN having a sparse 3D convolution layer. Here, D represents the number of blocks on one side of a grid, C represents the number of dimensions of an input/output vector, and M represents the number of occupied blocks of a mask grid (a total number of blocks each taking a value of "1").

A mask grid refers to map information indicating an occupied state for each block. For example, a value "1" indicates that the relevant block is an occupied block (a block including a point) whereas a value "0" indicates that the relevant block is an empty block. According to the sparse 3D convolution computation, in a mask grid, 3D convolution computation is performed on a block regarded as an occupied block, and 3D convolution computation for a block regarded as an empty block is skipped (omitted).

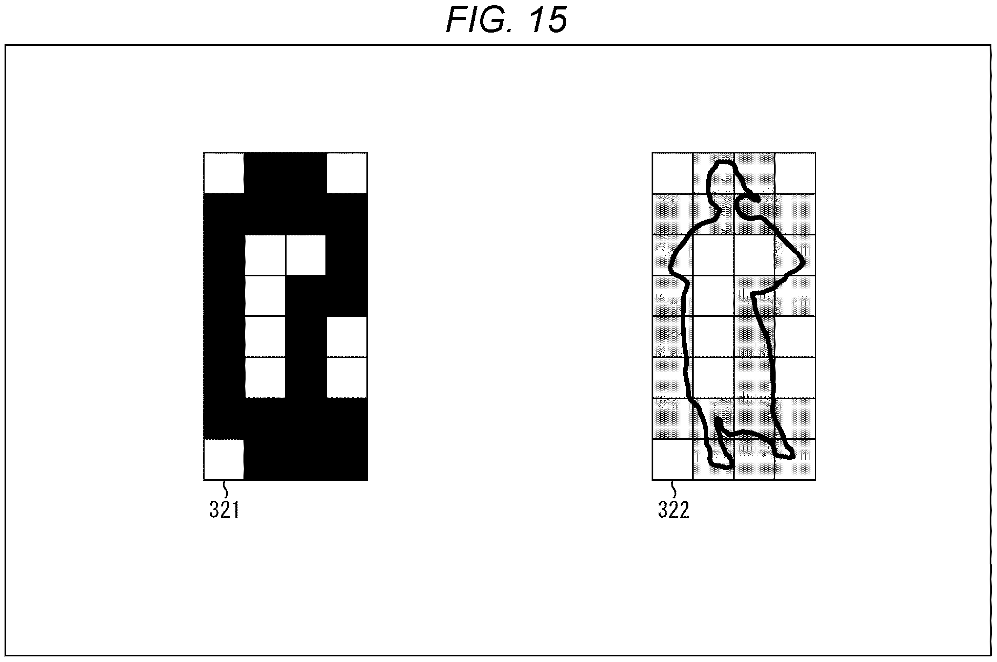

For example, it is assumed in a mask grid 321 illustrated in Fig. 15 that a black square indicates an occupied block and a white square indicates an empty block. The parameter vector grid generation unit 111 inputs the mask grid 321 to the 3D-CNN_E1 to obtain a parameter vector grid 322 illustrated in Fig. 15. In the parameter vector grid 322, a gray block indicates a block on which 3D convolution computation is performed and a white block indicates a block for which 3D convolution computation is skipped. That is, a parameter vector is obtained with only the occupied block in the mask grid 321 subjected to 3D convolution computation.

As described above, the mask grid and the parameter vector grid in a pair are input to and output from the 3D-CNN having the sparse 3D convolution layer. That is, the parameter vector grid generation unit 111 (the generation unit 121) may input the mask grid 321 and a geometry (voxel data) of a point cloud to the 3D-CNN_E1. However, this mask grid is information indicating a position of a point and is equivalent to a geometry the resolution of which is reduced (i.e., a downscaled geometry). Therefore, the 3D-CNN_E1 is capable of performing sparse 3D convolution computation by solely inputting the geometry (the voxel data) of the point cloud. Also in this case, the mask grid and the parameter vector grid, in which only the occupied block is subjected to the 3D convolution computation, in a pair are output. That is, for example, the mask grid 321 and the parameter vector grid 322 illustrated in Fig. 15 are obtained. The parameter vector grid generation unit 111 may supply the obtained mask grid and parameter vector grid to the CNN feature vector grid generation unit 112.

The CNN feature vector grid generation unit 112 (the generation unit 121) may acquire the mask grid and the parameter vector grid and input the mask grid and the parameter vector grid to the 3D-CNN_E2 having the sparse 3D convolution layer. The mask grid and the CNN feature vector grid, in which only the occupied block is subjected to the 3D convolution computation, are thus obtained. Note that with regard to the 3D-CNN_E2 in this case, a block size Bp of the parameter vector grid and a block size Bf of the CNN feature vector grid need to match with each other. The CNN feature vector grid generation unit 112 (the generation unit 121) may supply the mask grid and the CNN feature vector grid to the coding unit 113.

In this case, the coding unit 113 includes a CNN feature vector grid coding unit 301 and a mask grid coding unit 302 as illustrated in Fig. 14.

The CNN feature vector grid coding unit 301 performs processing concerning coding of a CNN feature vector grid. For example, the CNN feature vector grid coding unit 301 may acquire the CNN feature vector grid supplied from the CNN feature vector grid generation unit 112 (i.e., the CNN feature vector grid in which only the occupied block is subjected to the 3D convolution computation). In addition, the CNN feature vector grid coding unit 301 may code the CNN feature vector grid. For example, the CNN feature vector grid coding unit 301 may quantize and entropy-code the CNN feature vector grid. Furthermore, the CNN feature vector grid coding unit 301 outputs a generated bit stream (coded data of the CNN feature vector grid) to the outside of the geometry coding apparatus 100. In the following, this bit stream is also referred to as a parameter bit stream. This parameter bit stream (the coded data of the CNN feature vector grid) may be provided to a decoding apparatus via an optional transmission path or with an optional recording medium.

Note that the CNN feature vector grid coding unit 301 is capable of coding the CNN feature vector grid by applying a method similar to that for the coding unit 113 in the case illustrated in Fig. 5. That is, the foregoing description on the coding of the CNN feature vector grid by the coding unit 113 in <3. Coding of geometry using coordinate-based network> or <4. Generation of parameter vector by optimization of Lagrange function> may be applied to the coding of the CNN feature vector grid by the CNN feature vector grid coding unit 301.

The mask grid coding unit 302 performs processing concerning coding of a mask grid. For example, the mask grid coding unit 302 may acquire the mask grid supplied from the CNN feature vector grid generation unit 112. In addition, the mask grid coding unit 302 may code the mask grid to generate coded data of the mask grid (i.e., a bit stream). For example, the mask grid coding unit 302 may perform lossless coding with the mask grid regarded as a voxel having no attribute. For example, the mask grid coding unit 302 may perform coding by a geometry lossless coding method conforming to the geometry-based point cloud compression (G-PCC) standard (see, for example, "G-PCC Future Enhancements", ISO/IEC 23090-9:2019(E), ISO/IEC JTC 1/SC 29/WG 11 N18887, 2019-12-20). The mask grid coding unit 302 outputs the generated bit stream (the coded data of the mask grid) to the outside of the geometry coding apparatus 100. Note that in the following, this bit stream is also referred to as a mask bit stream. This mask bit stream (the coded data of the mask grid) may be provided to a decoding apparatus via an optional transmission path or with an optional recording medium with this mask bit stream associated with the parameter bit stream.

By applying a 3D-CNN having a sparse 3D convolution layer as described above, the geometry coding apparatus 100 is capable of suppressing decrease in coding efficiency and increase in unnecessary calculation cost when a sparse geometry is a processing target.

<Flow of geometry coding processing>

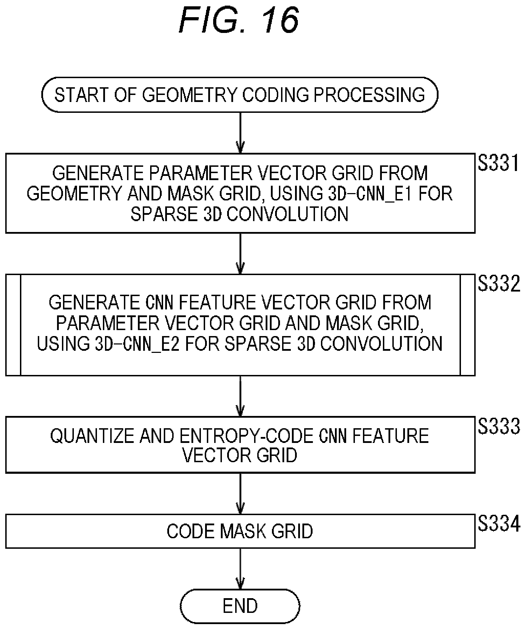

An example of a flow of geometry coding processing in this case (geometry coding processing to be performed by the geometry coding apparatus 100 illustrated in Fig. 14) is described with reference to a flowchart of Fig. 16.

When the geometry coding processing starts, in step S331, the parameter vector grid generation unit 111 generates a parameter vector grid (and a mask grid) from a geometry (and a mask grid), using the 3D-CNN_E1 that performs sparse 3D convolution computation.

In step S332, the CNN feature vector grid generation unit 112 performs CNN feature vector grid generation processing to generate a CNN feature vector grid and a mask grid from the parameter vector grid and the mask grid, using the 3D-CNN_E2 that performs sparse 3D convolution computation.

In step S333, the CNN feature vector grid coding unit 301 quantizes and entropy-codes the CNN feature vector grid to generate coded data of the CNN feature vector grid (i.e., a parameter bit stream).

In step S334, the mask grid coding unit 302 codes the mask grid to generate coded data of the mask grid (i.e., a mask bit stream).

When the processing in step S334 ends, the geometry coding processing ends.

By performing the respective kinds of processing as described above, the geometry coding apparatus 100 is capable of skipping 3D convolution computation for an empty block, and is capable of suppressing decrease in coding efficiency and increase in unnecessary calculation cost when a sparse geometry is a processing target.

<Method 1-2>

The foregoing method 1-2 may be applied to a decoder. That is, a sparse 3D deconvolution layer may be used instead of a 3D deconvolution layer. For example, in an information processing apparatus including: a decoding unit that decodes coded data to generate a feature vector expressing a spatial correlation lower than a spatial correlation of a parameter vector of a coordinate-based network representing a geometry of 3D data; and a generation unit that generates the geometry from the feature vector, the generation unit may generate the parameter vector, using a 3D-CNN having a sparse 3D deconvolution layer with the feature vector as an input.

The sparse 3D deconvolution layer performs sparse 3D deconvolution computation. According to the sparse inverse 3D convolution computation, 3D deconvolution computation is performed on an occupied block, and 3D deconvolution computation for a block regarded as an empty block is skipped (omitted). Therefore, for example, when a sparse geometry is a processing target, it is possible to suppress decrease in coding efficiency and increase in unnecessary calculation cost.

<Geometry decoding apparatus>

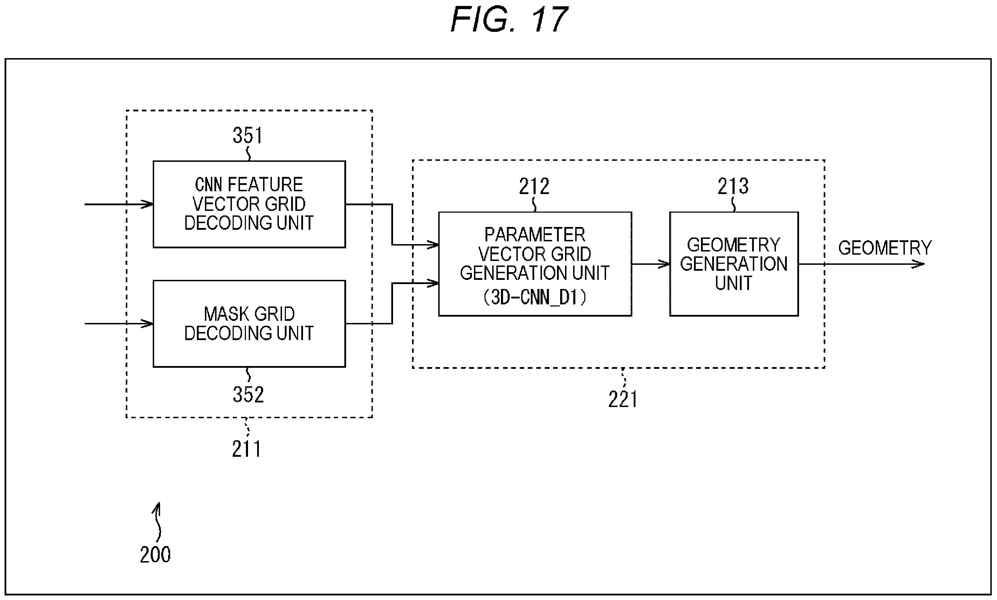

Fig. 17 is a block diagram illustrating a main configuration example of a geometry decoding apparatus 200 in this case. Note that Fig. 17 illustrates main processing units, data flows, and the like; therefore, the geometry decoding apparatus 200 is not limited to those illustrated in Fig. 17. That is, the geometry decoding apparatus 200 may include a processing unit not illustrated in a block form in Fig. 17 and may involve processing or a data flow not indicated by an arrow or the like in Fig. 17.

Also in this case, the geometry decoding apparatus 200 includes a decoding unit 211, a parameter vector grid generation unit 212, and a geometry generation unit 213.

As illustrated in Fig. 17, the decoding unit 211 includes a CNN feature vector grid decoding unit 351 and a mask grid decoding unit 352.

The CNN feature vector grid decoding unit 351 performs processing concerning decoding of coded data of a CNN feature vector grid (i.e., a parameter bit stream). For example, the CNN feature vector grid decoding unit 351 may acquire a parameter bit stream to be input to the geometry decoding apparatus 200. In addition, the CNN feature vector grid decoding unit 351 may decode the parameter bit stream. For example, the CNN feature vector grid decoding unit 351 may entropy-decode the acquired parameter bit stream to generate (reconstruct) a quantization level, and may inverse-quantize the quantization level to generate (reconstruct) a CNN feature vector grid. At this time, the CNN feature vector grid decoding unit 351 uses the same quantization width and probability table as those of the encoder (e.g., the CNN feature vector grid coding unit 301). In addition, the CNN feature vector grid decoding unit 351 may supply the generated CNN feature vector grid to the parameter vector grid generation unit 212.

Note that the CNN feature vector grid decoding unit 351 is capable of generating (reconstructing) the CNN feature vector grid by applying a method similar to that for the decoding unit 211 in the case illustrated in Fig. 10. That is, the foregoing description on the decoding of the coded data of the CNN feature vector grid by the decoding unit 211 in <3. Coding of geometry using coordinate-based network> may be applied to the decoding of the coded data of the CNN feature vector grid by the CNN feature vector grid decoding unit 351.

The mask grid decoding unit 352 performs processing concerning decoding of coded data of a mask grid. For example, the mask grid decoding unit 352 may acquire a mask bit stream to be input to the geometry decoding apparatus 200. This mask bit stream may be supplied with this mask bit stream associated with, for example, a parameter bit stream. In addition, the mask grid decoding unit 352 may decode the mask bit stream to generate (reconstruct) a mask grid. At this time, the mask grid decoding unit 352 may perform the decoding by a decoding method having a correspondence with the coding method of the mask grid coding unit 302. For example, the mask grid decoding unit 352 may perform decoding by a geometry decoding method conforming to the G-PCC. The mask grid decoding unit 352 may supply the generated mask grid to the parameter vector grid generation unit 212.

The parameter vector grid generation unit 212 (a generation unit 221) may acquire the mask grid and the CNN feature vector grid and input the mask grid and the CNN feature vector grid to a 3D-CNN_D1 having a sparse 3D deconvolution layer. The mask grid and the parameter vector grid, in which only the occupied block is subjected to the 3D deconvolution computation, are thus obtained. Note that with regard to the 3D-CNN_D1 in this case, a block size Bp of the parameter vector grid and a block size Bf of the CNN feature vector grid need to match with each other. The parameter vector grid generation unit 212 may supply the mask grid and the parameter vector grid to the geometry generation unit 213.

The geometry generation unit 213 (the generation unit 221) may acquire the mask grid and the parameter vector grid and obtain a geometry of 3D data from the mask grid, the parameter vector grid, and a query point, using a coordinate-based network representing the geometry of the 3D data. That is, in this case, the geometry generation unit 213 may transform the parameter into a voxel only for a block regarded as an occupied block (i.e., a block taking a value "1") in the mask grid. The geometry generation unit 213 may output the generated geometry to the outside of the geometry decoding apparatus 200.

Note that the processing performed on this occupied block by the geometry generation unit 213 is similar to that in the case illustrated in Fig. 10. That is, the foregoing description in <3. Coding of geometry using coordinate-based network> may be applied to this case.

By applying a 3D-CNN having a sparse 3D deconvolution layer as described above, the geometry decoding apparatus 200 is capable of suppressing decrease in coding efficiency and increase in unnecessary calculation cost when a sparse geometry is a processing target.

<Flow of geometry decoding processing>

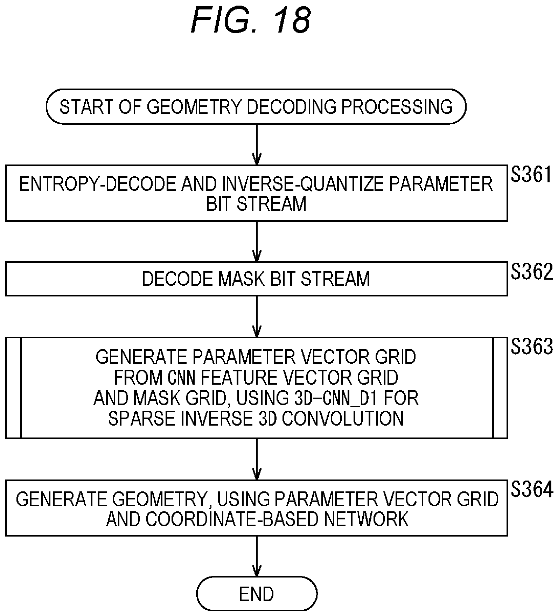

An example of a flow of geometry decoding processing in this case (geometry decoding processing to be performed by the geometry decoding apparatus 200 illustrated in Fig. 17) is described with reference to a flowchart of Fig. 18.

When the geometry decoding processing starts, in step S361, the CNN feature vector grid decoding unit 351 entropy-decodes and inverse-quantizes a parameter bit stream to generate (reconstruct) a CNN feature vector grid.

In step S362, the mask grid decoding unit 352 decodes a mask bit stream to generate (reconstruct) a mask grid.

In step S363, the parameter vector grid generation unit 212 performs parameter vector grid generation processing to generate (reconstruct) a parameter vector grid from the mask grid and the CNN feature vector grid, using the 3D-CNN_D1 that performs sparse 3D deconvolution.

In step S364, the geometry generation unit 213 generates (reconstructs) a geometry, using the mask grid, the parameter vector grid, and a coordinate-based network. For example, the geometry generation unit 213 sets query points as described above, obtains an occupation probability of each query point with position information on the query point as an input to the coordinate-based network and with the parameter vector as a condition vector of the coordinate-based network, and generates a geometry of 3D data (a point cloud), using the position information on one of the query points the occupation probability of which is high. At this time, the geometry generation unit 213 performs this processing on only the block regarded as the occupied block (i.e., the block taking the value "1") in the mask grid to generate a geometry.

When the processing in step S364 ends, the geometry decoding processing ends.

By performing the respective kinds of processing as described above, the geometry decoding apparatus 200 is capable of suppressing decrease in coding efficiency and increase in unnecessary calculation cost when a sparse geometry is a processing target.

<6. Utilization of mask grid for coding of CNN feature vector>

<Method 1-2-1>

Meanwhile, a mask grid is equivalent to a downscaled input geometry. That is, it can be said that a mask grid is information indicating a rough geometry. Therefore, for example, there is a possibility that information about a shape of a detailed geometry in each block is obtained from this rough geometry. In other words, there is a possibility that information about a parameter vector and a CNN feature vector is obtained from the mask grid. It is expected to improve coding efficiency of a CNN feature vector grid by utilizing this information for coding of a CNN feature vector grid. In other words, it can be said that there is room for improvement to coding efficiency of a CNN feature vector grid, with regard to a method not utilizing this information for coding of the CNN feature vector grid.

Hence, when the method 1-2 is applied, a mask grid may be utilized for coding of a CNN feature vector grid, as illustrated in the bottom row of the table of Fig. 4 (method 1-2-1).

<Derivation of predicted value>

For example, a predicted value of a CNN feature vector may be obtained from a mask grid, and a predicted residual may be coded. For example, in an information processing apparatus including: a generation unit that generates, on the basis of a parameter vector of a coordinate-based network representing a geometry of 3D data, a feature vector expressing a spatial correlation lower than a spatial correlation of the parameter vector; and a coding unit that codes the feature vector, the coding unit may derive a predicted value of the feature vector from a mask grid used in a 3D-CNN, derive a predicted residual as a difference between the feature vector and the predicted value, and code the predicted residual.

In the geometry coding apparatus 100 illustrated in Fig. 14, the CNN feature vector grid generation unit 112 supplies the generated mask grid to the mask grid coding unit 302 also in this case. The mask grid coding unit 302 codes the mask grid in a manner similar to that in the case described above in <5. Application of sparse 3D convolution>.

However, in this case, the CNN feature vector grid generation unit 112 may supply the generated CNN feature vector grid and mask grid to the CNN feature vector grid coding unit 301. The CNN feature vector grid coding unit 301 may acquire the CNN feature vector grid and the mask grid. Then, the CNN feature vector grid coding unit 301 may derive a predicted value of the CNN feature vector (i.e., a predicted vector) from the acquired mask grid. In addition, the CNN feature vector grid coding unit 301 may derive a predicted residual as a difference between the CNN feature vector and the predicted vector (i.e., a difference vector). Furthermore, the CNN feature vector grid coding unit 301 may code the difference vector (a difference vector grid). For example, the CNN feature vector grid coding unit 301 may quantize and entropy-code the difference vector grid.

<Flow of CNN feature vector grid coding processing>

In this case, the geometry coding apparatus 100 (Fig. 14) performs CNN feature vector grid coding processing in step S333 of the geometry coding processing (Fig. 16).

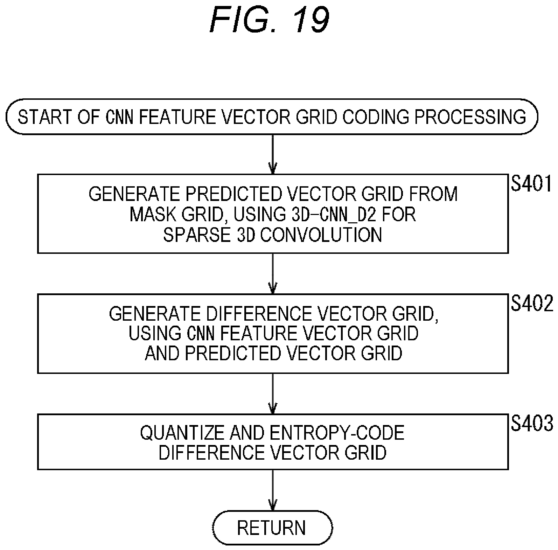

An example of a flow of the CNN feature vector grid coding processing is described with reference to a flowchart of Fig. 19.

When the CNN feature vector grid coding processing starts, in step S401, the CNN feature vector grid coding unit 301 generates a predicted vector grid from a mask grid, using the 3D-CNN_D2 that performs sparse 3D convolution. For example, the CNN feature vector grid coding unit 301 inputs the mask grid to the 3D-CNN_D2 to derive a predicted vector grid $h_0, ..., h'_{M-1}$. Note that M represents a total number of occupied blocks in the mask grid. In addition, with regard to the 3D-CNN_D2, an input needs to be one dimensional, an output needs to be Cf dimensional, and a downscaling factor needs to be 1. With regard to the 3D-CNN_D2, in addition, a CNN feature vector h, a predicted vector h', and a difference vector $\delta h$ are each need to be Cf dimensional.

In step S402, the CNN feature vector grid coding unit 301 generates a difference vector grid, using the CNN feature vector grid and the predicted vector grid. For example, for each CNN feature vector h, the CNN feature vector grid coding unit 301 derives a difference vector $\delta h$ (= h - h') of the predicted vector h' and generates a difference vector grid.

In step S403, the CNN feature vector grid coding unit 301 quantizes and entropy-codes the difference vector grid.

When the processing in step S403 ends, the CNN feature vector grid coding processing ends. The processing flow then returns to Fig. 16.

By utilizing the mask grid for derivation of the predicted vector as described above, the geometry coding apparatus 100 is capable of improving the coding efficiency of the CNN feature vector grid if the prediction accuracy of the predicted vector is high.

Note that the 3D-CNN_E2 described to be used for generating the CNN feature vector may be configured to output the difference vector grid $\delta h_0, ..., \delta h_{M-1}$. In this case, the details of the processing to be performed by the geometry coding apparatus 100 are similar to those in the case illustrated in Fig. 14 although the meaning of a vector to be output is changed.

<Flow of CNN feature vector grid decoding processing>

Note that in this case, the CNN feature vector grid decoding unit 351 of the geometry decoding apparatus 200 (Fig. 17) decodes a parameter vector, thereby obtaining a difference vector grid. Hence, the CNN feature vector grid decoding unit 351 derives a CNN feature vector grid from the difference vector grid. That is, in step S361 of the geometry decoding processing (Fig. 18), the CNN feature vector grid decoding unit 351 performs CNN feature vector grid decoding processing to derive the CNN feature vector grid from the difference vector grid.

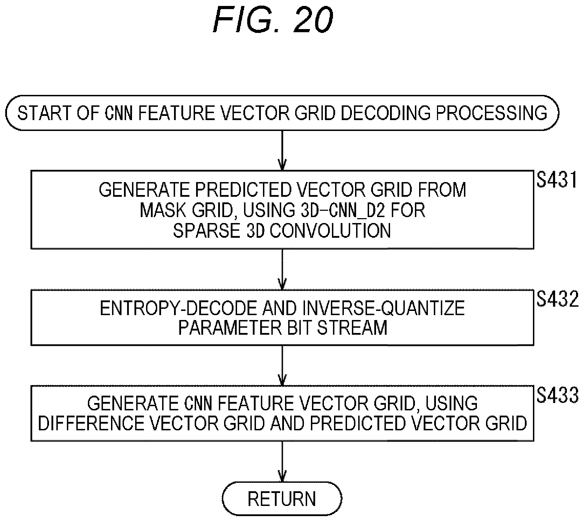

An example of a flow of the CNN feature vector grid decoding processing is described with reference to a flowchart of Fig. 20.

When the CNN feature vector grid decoding processing starts, in step S431, the CNN feature vector grid decoding unit 351 generates a predicted vector grid from a mask grid, using the 3D-CNN_D2 that performs sparse 3D convolution. For example, the CNN feature vector grid decoding unit 351 inputs the mask grid to the 3D-CNN_D2 to derive a predicted vector grid $h'_0, ..., h'_{M-1}$.

In step S432, the CNN feature vector grid decoding unit 351 entropy-decodes and inverse-quantizes a parameter bit stream. For example, the CNN feature vector grid decoding unit 351 decodes and inverse-quantizes the parameter bit stream to generate (reconstruct) a difference vector grid $\delta h_0, ..., \delta h_{M-1}$.

In step S433, the CNN feature vector grid decoding unit 351 generates a CNN feature vector grid, using the difference vector grid and the predicted vector grid. For example, the CNN feature vector grid decoding unit 351 adds the predicted vector grid and the difference vector grid together ($h = h' + \delta h$) to derive the CNN feature vector grid $h_0, ..., h_{M-1}$.

When the processing in step S433 ends, the CNN feature vector grid decoding processing ends. The processing flow then returns to Fig. 18.

By utilizing the mask grid for derivation of the predicted vector as described above, the geometry decoding apparatus 200 is capable of improving the coding efficiency of the CNN feature vector grid if the prediction accuracy of the predicted vector is high.

<Derivation of probability distribution>

In addition, for example, probability distribution of an entropy model to be applied to coding of a CNN feature vector may be derived using a mask grid. For example, in an information processing apparatus including: a generation unit that generates, on the basis of a parameter vector of a coordinate-based network representing a geometry of 3D data, a feature vector expressing a spatial correlation lower than a spatial correlation of the parameter vector; and a coding unit that codes the feature vector, the coding unit may obtain a parameter of an entropy model of the feature vector from a mask grid used in a 3D-CNN and entropy-code the feature vector, using the parameter.

Also in this case, the CNN feature vector grid generation unit 112 may supply the generated CNN feature vector grid and mask grid to the CNN feature vector grid coding unit 301. The CNN feature vector grid coding unit 301 may acquire the CNN feature vector grid and the mask grid. Then, the CNN feature vector grid coding unit 301 may input the acquired mask grid to a 3D-CNN_D3, thereby deriving a parameter of probability distribution of an entropy model to be applied to coding of a CNN feature vector (e.g., a mean and a variance in a case of Gaussian distribution). In this case, with regard to the 3D-CNN_D3, an input needs to be one dimensional, an output needs to be Cf×{number of parameters in distribution} dimensional, and a downscaling factor needs to be 1. Furthermore, in the case of Gaussian distribution, the number of parameters is represented by a mean and a variance.

Then, the CNN feature vector grid coding unit 301 applies the probability distribution having the derived parameter to the entropy model of the CNN feature vector to code the CNN feature vector. It is thus possible to reflect a shape of a geometry (a distribution state of points) on a variance and the like; therefore, it is possible to expect improvement in coding efficiency.

<7. CNN feature vectors of multiple resolutions>

<Correlation of multiple scales>

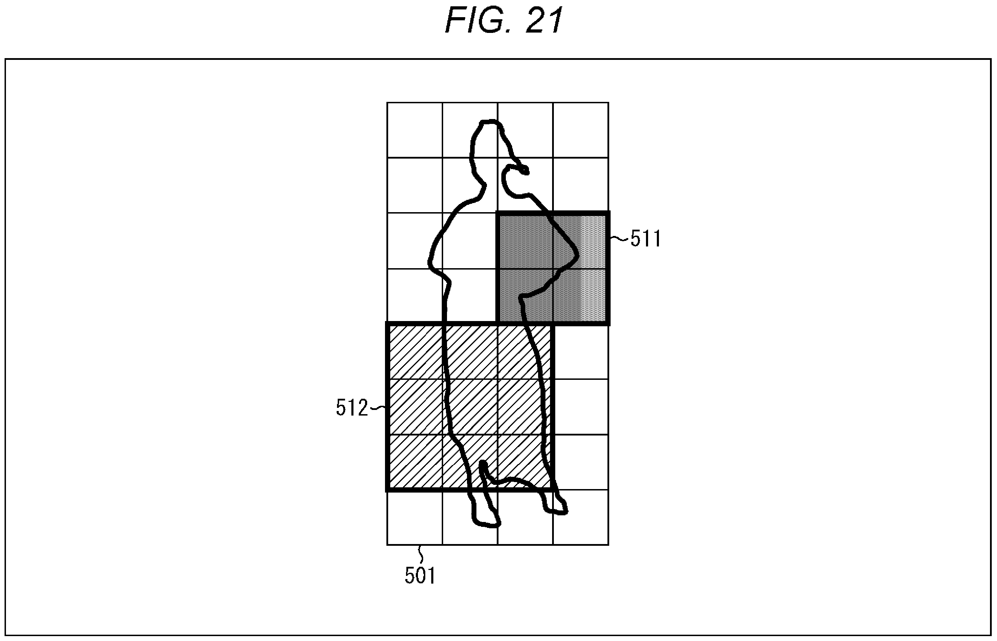

For example, a 2x2-block correlation 511 (a correlation with a small scale) and a 3x3-block correlation 512 (a correlation with a large scale) occur in a parameter vector grid 501 illustrated in Fig. 21. As described above, there may be correlations with multiple scales as a correlation between parameter vectors of a coordinate-based network. However, it has been difficult for an approach that uses a CNN feature vector grid of a single resolution as in the foregoing example to simultaneously reduce the correlations with the different multiple scales.

For example, when the resolution of the CNN feature vector grid is set low (rough), it is expected that the encoder is capable of reducing the correlation with the large scale. In this case, however, the detailed information on the high resolution originally existing in the parameter vector grid is partially lost during the process of downscaling. As a result, there is a possibility that it is difficult for the decoder to reconstruct the detailed information from the CNN feature vector grid. This may lead to an increase in decoding distortion.

On the other hand, when the resolution of the CNN feature vector grid is set high (fine), it is expected that the encoder is capable of reducing the correlation with the small scale. However, in this case, it has been necessary to set the kernel size of 3D convolution high in order to allow the decoder to reconstruct the parameter vector grid from the CNN feature vector grid, for example. For example, it has been necessary to change the kernel size of the 3D convolution layer of the 3D-CNN in each of the encoder and the decoder from 3x3x3 to 5x5x5. However, an amount of 3D convolution calculation is proportional to the cube of the kernel size; therefore, there is a possibility that the amount of calculation increases in this case. For example, in the case of changing the kernel size of the 3D convolution layer of the 3D-CNN in each of the encoder and the decoder from 3x3x3 to 5x5x5 as described above, there is a possibility that the amount of calculation increases to about $(5^3)/(3^3)$ = about 4.6 times.

<Method 1-3, method 1-3-1>

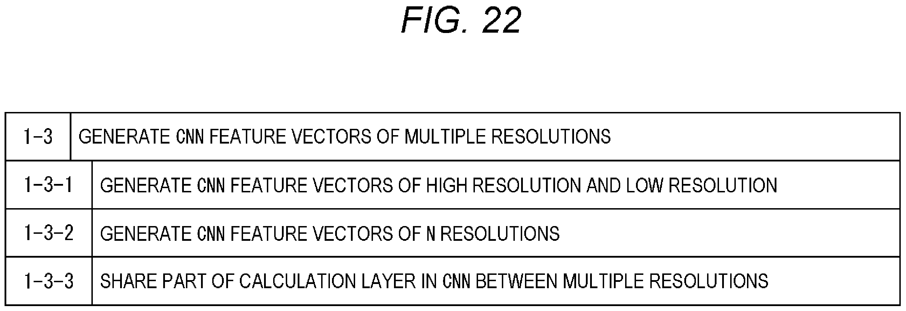

Hence, as illustrated in the top row of a table of Fig. 22, CNN feature vectors of multiple resolutions (i.e., multiple CNN feature vectors (grids) of different resolutions) may be generated (method 1-3). For example, when the method 1-3 is applied, as illustrated in the second row from the top of the table of the Fig. 22, a CNN feature vector (grid) of a high resolution and a CNN feature vector (grid) of a low resolution may be generated (method 1-3-1).

The resolution of the CNN feature vector grid depends on the downscaling factor of the 3D-CNN in the encoder and the upscaling factor of the 3D-CNN in the decoder. That is, in order to use the CNN feature vector grids of the multiple resolutions, the 3D-CNN in the encoder is only required to be extended to have multiple downscaling factors and the 3D-CNN in the decoder is only required to be extended to have multiple upscaling factors.

Note that, for example, in a case of using CNN feature vector grids of two types of resolutions, that is, a high resolution and a low resolution, it can be considered that the CNN feature vector grid of the high resolution corresponds to an AC component vector and the CNN feature vector grid of the low resolution corresponds to a DC component vector.

For example, in an information processing apparatus including: a generation unit that generates, on the basis of a parameter vector of a coordinate-based network representing a geometry of 3D data, a feature vector expressing a spatial correlation lower than a spatial correlation of the parameter vector; and a coding unit that codes the feature vector, the generation unit may generate a first feature vector as the feature vector of a first resolution and a second feature vector as the feature vector of a second resolution. In addition, the coding unit may code the first feature vector and the second feature vector. Note that the second resolution may be higher than the first resolution.

In this case, the generation unit may generate the first feature vector, using a first 3D-CNN and generate the second feature vector, using a second 3D-CNN different from the first 3D-CNN. Note that a three-dimensional convolution layer of the first 3D-CNN may be different from a three-dimensional convolution layer of the second 3D-CNN.

It is possible to reduce the spatial correlation with the large scale by the CNN feature vector grid of the low resolution. It is also possible to reduce the spatial correlation with the small scale by the CNN feature vector grid of the high resolution. That is, it is possible to reduce the correlations of the multiple resolutions while suppressing the increase in amount of calculation, by using the CNN feature vector grids of the multiple resolutions.

<Geometry coding apparatus>

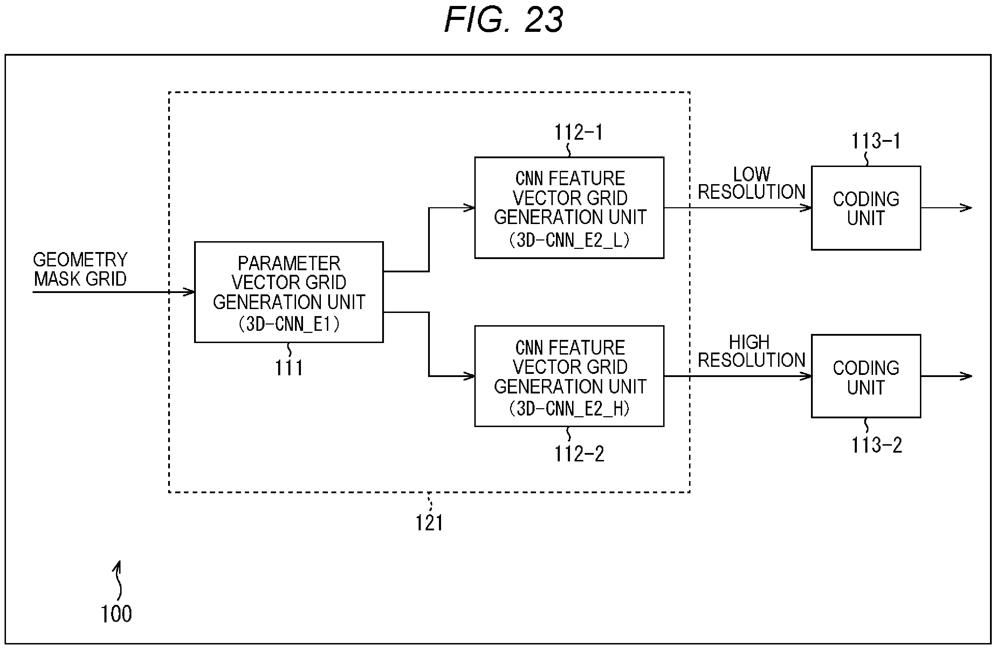

Fig. 23 is a block diagram illustrating a main configuration example of a geometry coding apparatus 100 in this case. Note that Fig. 23 illustrates main processing units, data flows, and the like; therefore, the geometry coding apparatus 100 is not limited to those illustrated in Fig. 23. That is, the geometry coding apparatus 100 may include a processing unit not illustrated in a block form in Fig. 23 and may involve processing or a data flow not indicated by an arrow or the like in Fig. 23.

In this case, the geometry coding apparatus 100 includes a parameter vector grid generation unit 111 (a generation unit 121) as in the case illustrated in Fig. 5. The geometry coding apparatus 100 also includes a CNN feature vector grid generation unit 112-1 (the generation unit 121) and a CNN feature vector grid generation unit 112-2 (the generation unit 121) instead of the CNN feature vector grid generation unit 112 having the configuration illustrated in Fig. 5. The geometry coding apparatus 100 also includes a coding unit 113-1 and a coding unit 113-2 instead of the coding unit 113 having the configuration illustrated in Fig. 5.

In this case, the parameter vector grid generation unit 111 supplies a generated parameter vector grid to each of the CNN feature vector grid generation unit 112-1 and the CNN feature vector grid generation unit 112-2.

Each of the CNN feature vector grid generation unit 112-1 and the CNN feature vector grid generation unit 112-2 is a processing unit similar to the CNN feature vector grid generation unit 112 illustrated in Fig. 5. That is, each of the CNN feature vector grid generation unit 112-1 and the CNN feature vector grid generation unit 112-2 and the CNN feature vector grid generation unit 112 illustrated in Fig. 5 have a similar configuration and perform similar processing.

However, the CNN feature vector grid generation unit 112-1 and the CNN feature vector grid generation unit 112-2 generate CNN feature vector grids of different resolutions. For example, the CNN feature vector grid generation unit 112-1 generates a CNN feature vector grid of a low resolution (a first resolution), and the CNN feature vector grid generation unit 112-2 generates a CNN feature vector grid of a high resolution (a second resolution). Note that the value of the "low resolution" and the value of the "high resolution" are not particularly limited as long as the "low resolution" is lower than the "high resolution".

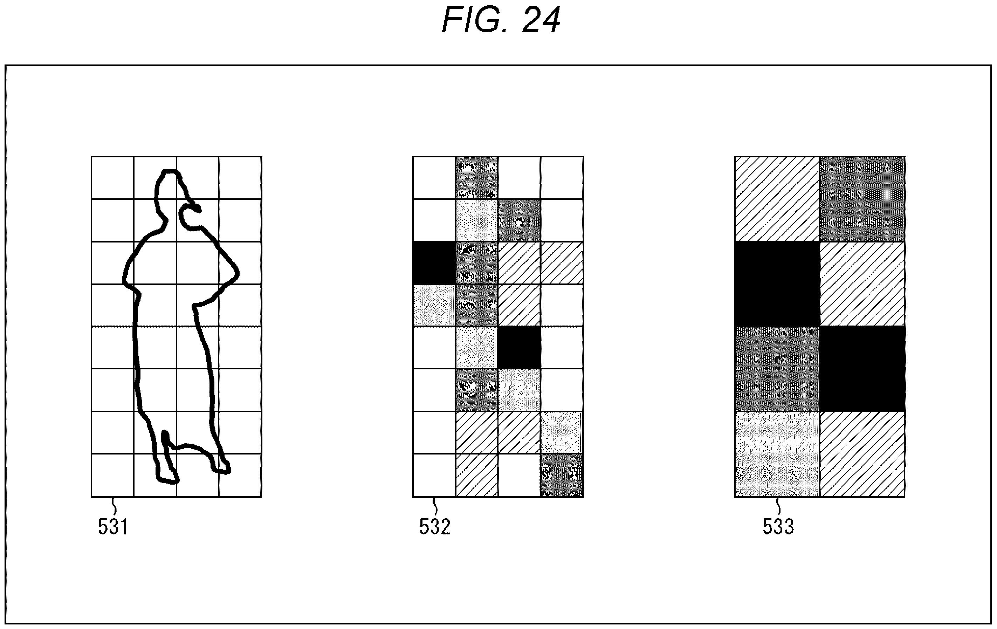

The CNN feature vector grid generation unit 112-1 may generate a CNN feature vector of a low resolution from a parameter vector grid supplied from the parameter vector grid generation unit 111 (a parameter vector held in a grid shape), using a 3D-CNN (a 3D-CNN_E2_L). For example, the CNN feature vector grid generation unit 112-1 inputs a parameter vector grid 531 illustrated in Fig. 24 to the 3D-CNN_E2_L to transform the parameter vector grid 531 into a CNN feature vector grid 533 of a low resolution. In addition, the CNN feature vector grid generation unit 112-1 may supply the generated CNN feature vector grid of the low resolution to the coding unit 113-1.

On condition that the CNN feature vector has a dimension of Cf and the CNN feature vector grid has a block size of Bf, with regard to the 3D-CNN_E2_L, an input dimension needs to be Cp, an output dimension needs to be Cf, and a downscaling factor needs to be Bp/Bf, in order to take a nonlinear spatial correlation into consideration. Furthermore, the 3D-CNN_E2_L has at least two 3D convolution layers and one nonlinear transformation layer. In addition, at least one of the 3D convolution layers has a kernel size that is more than 1. A hyper parameter and a structure each have a degree of freedom as long as this condition is satisfied.

The CNN feature vector grid generation unit 112-2 may generate a CNN feature vector of a high resolution from a parameter vector grid supplied from the parameter vector grid generation unit 111 (a parameter vector held in a grid shape), using a 3D-CNN (a 3D-CNN_E2_H). For example, the CNN feature vector grid generation unit 112-2 inputs the parameter vector grid 531 illustrated in Fig. 24 to the 3D-CNN_E2_H to transform the parameter vector grid 531 into a CNN feature vector grid 532 of a high resolution. In addition, the CNN feature vector grid generation unit 112-2 may supply the generated CNN feature vector grid of the high resolution to the coding unit 113-2.

On condition that the CNN feature vector has a dimension of Cf and the CNN feature vector grid has a block size of Bf, with regard to the 3D-CNN_E2_H, an input dimension needs to be Cp, an output dimension needs to be Cf, and a downscaling factor needs to be Bp/Bf, in order to take a nonlinear spatial correlation into consideration. Furthermore, the 3D-CNN_E2_H has at least two 3D convolution layers and one nonlinear transformation layer. In addition, at least one of the 3D convolution layers has a kernel size that is more than 1. A hyper parameter and a structure each have a degree of freedom as long as this condition is satisfied.

However, the downscaling factor of the 3D-CNN_E2_L is smaller than the downscaling factor of the 3D-CNN_E2_H. The downscaling factor of the 3D-CNN_E2_L and the downscaling factor of the 3D-CNN_E2_H may be determined by an optional method. For example, a combination of downscaling factors that exhibit the maximum combination performance in a data set for training may be selected from multiple candidates for a set of a data set for training and a downscaling factor (the downscaling factors may be determined by typical grid search).

Each of the coding unit 113-1 and the coding unit 113-2 is a processing unit similar to the coding unit 113 illustrated in Fig. 5. That is, each of the coding unit 113-1 and the coding unit 113-2 and the coding unit 113 illustrated in Fig. 5 have a similar configuration and perform similar processing.

The coding unit 113-1 codes the CNN feature vector grid of the low resolution supplied from the CNN feature vector grid generation unit 112-1. For example, the coding unit 113-1 may quantize the CNN feature vector grid of the low resolution and entropy-code the quantization level, thereby generating coded data of the CNN feature vector grid of the low resolution (also referred to as a low resolution bit stream). The coding unit 113-1 may quantize and entropy-code all the values of the CNN feature vector grid of the low resolution independently of each other. At this time, the coding unit 113-1 may apply, to the quantization, a quantization width that is common in a spatial direction and is different for each dimension. In addition, the coding unit 113-1 may apply, to the entropy coding, a probability table that is common in the spatial direction and is different for each dimension. The coding unit 113-1 outputs the generated low resolution bit stream to the outside of the geometry coding apparatus 100. This low resolution bit stream may be provided to a decoding apparatus via an optional transmission path or with an optional recording medium.

The coding unit 113-2 codes the CNN feature vector grid of the high resolution supplied from the CNN feature vector grid generation unit 112-2. For example, the coding unit 113-2 may quantize the CNN feature vector grid of the high resolution and entropy-code the quantization level, thereby generating coded data of the CNN feature vector grid of the high resolution (also referred to as a high resolution bit stream). The coding unit 113-2 may quantize and entropy-code all the values of the CNN feature vector grid of the high resolution independently of each other. At this time, the coding unit 113-2 may apply, to the quantization, a quantization width that is common in the spatial direction and is different for each dimension. In addition, the coding unit 113-2 may apply, to the entropy coding, a probability table that is common in the spatial direction and is different for each dimension. The coding unit 113-2 outputs the generated high resolution bit stream to the outside of the geometry coding apparatus 100. This high resolution bit stream may be provided to a decoding apparatus via an optional transmission path or with an optional recording medium.

Note that the geometry coding apparatus 100 may integrate the low resolution bit stream and the high resolution bit stream into one bit stream.

In addition, the coding unit 113-1 and the coding unit 113-2 do not share a quantization width and a probability table of an entropy model. This is because the distribution of values (i.e., the entropy model) may differ as the resolution of the CNN feature vector grid differs.

The geometry coding apparatus 100 having the foregoing configuration is capable of generating, on the basis of a parameter vector of a coordinate-based network representing a geometry of 3D data, feature vectors of multiple resolutions each expressing a spatial correlation lower than a spatial correlation of the parameter vector. The geometry coding apparatus 100 is therefore capable of reducing correlations with multiple scales while suppressing an increase in amount of calculation, and is also capable of improving coding efficiency.

<Flow of geometry coding processing>

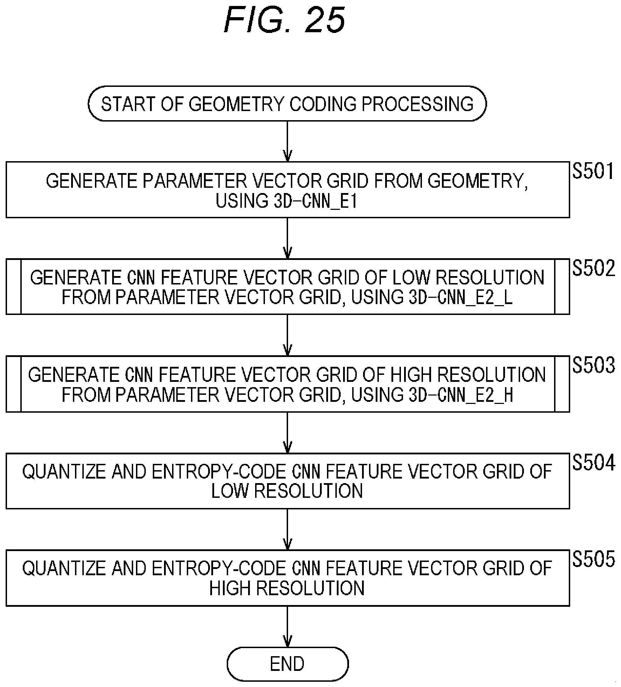

An example of a flow of geometry coding processing to be performed by the geometry coding apparatus 100 in this case is described with reference to a flowchart of Fig. 25.

When the geometry coding processing starts, in step S501, the parameter vector grid generation unit 111 generates a parameter vector grid from a geometry, using the 3D-CNN_E1.

In step S502, the CNN feature vector grid generation unit 112-1 performs CNN feature vector grid generation processing to generate a CNN feature vector grid of a low resolution (a first resolution) from the parameter vector grid, using the 3D-CNN_E2_L. That is, the CNN feature vector grid generation unit 112-1 generates, on the basis of a parameter vector of a coordinate-based network representing a geometry of 3D data, a feature vector of a low resolution expressing a spatial correlation lower than a spatial correlation of the parameter vector. Note that the CNN feature vector grid generation processing in this case is performed in accordance with a flow similar to the exemplary flow illustrated in Fig. 9.

In step S503, the CNN feature vector grid generation unit 112-2 performs the CNN feature vector grid generation processing to generate a CNN feature vector grid of a high resolution (a second resolution) from the parameter vector grid, using the 3D-CNN_E2_H. That is, the CNN feature vector grid generation unit 112-2 generates, on the basis of a parameter vector of a coordinate-based network representing a geometry of 3D data, a feature vector of a high resolution expressing a spatial correlation lower than a spatial correlation of the parameter vector. Note that the CNN feature vector grid generation processing in this case is performed in accordance with a flow similar to the exemplary flow illustrated in Fig. 9.

In step S504, the coding unit 113-1 quantizes and entropy-codes the CNN feature vector grid of the low resolution generated in step S502 to generate a low resolution bit stream.

In step S505, the coding unit 113-2 quantizes and entropy-codes the CNN feature vector grid of the high resolution generated in step S503 to generate a high resolution bit stream.

When the processing in step S505 ends, the geometry coding processing ends.

By performing the respective kinds of processing as described above, the geometry coding apparatus 100 is capable of reducing correlations with multiple scales while suppressing an increase in amount of calculation, and is also capable of improving coding efficiency.

<Method 1-3, method 1-3-1>

The foregoing method 1-3 and method 1-3-1 may be applied to a decoder. For example, in an information processing apparatus including: a decoding unit that decodes coded data to generate a feature vector expressing a spatial correlation lower than a spatial correlation of a parameter vector of a coordinate-based network representing a geometry of 3D data; and a generation unit that generates the geometry from the feature vector, the decoding unit may decode first coded data to generate a first feature vector as the feature vector of a first resolution and may decode second coded data different from the first coded data to generate a second feature vector as the feature vector of a second resolution. In addition, the generation unit may generate a transformed vector from the first feature vector, generate an addition result vector by adding the second feature vector to the transformed vector for each element, and generate a geometry from the addition result vector. Furthermore, the second resolution may be higher than the first resolution. In addition, in this case, the generation unit may generate a parameter vector from the addition result vector and generate a geometry, using a coordinate-based network to which the parameter vector is applied.

In this case, the generation unit may generate a transformed vector, using a first 3D-CNN with the first feature vector as an input, and generate a parameter vector, using a second 3D-CNN different from the first 3D-CNN, with the addition result vector as an input. Note that a three-dimensional convolution layer of the first 3D-CNN may be different from a three-dimensional convolution layer of the second 3D-CNN.

It is possible to reduce the spatial correlation with the large scale by the CNN feature vector grid of the low resolution. It is also possible to reduce the spatial correlation with the small scale by the CNN feature vector grid of the high resolution. That is, it is possible to reduce the correlations of the multiple resolutions while suppressing the increase in amount of calculation, by using the CNN feature vector grids of the multiple resolutions.

<Geometry decoding apparatus>

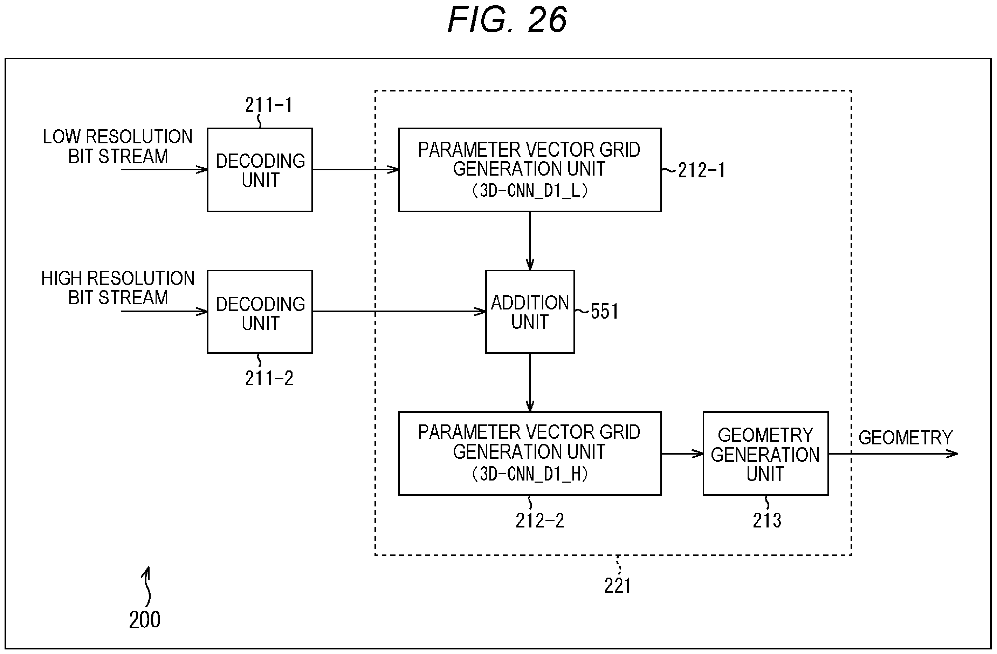

Fig. 26 is a block diagram illustrating a main configuration example of a geometry decoding apparatus 200 in this case. Note that Fig. 26 illustrates main processing units, data flows, and the like; therefore, the geometry decoding apparatus 200 is not limited to those illustrated in Fig. 26. That is, the geometry decoding apparatus 200 may include a processing unit not illustrated in a block form in Fig. 26 and may involve processing or a data flow not indicated by an arrow or the like in Fig. 26.

In this case, the geometry decoding apparatus 200 includes a decoding unit 211-1, a decoding unit 211-2, a parameter vector grid generation unit 212-1, a parameter vector grid generation unit 212-2, an addition unit 551, and a geometry generation unit 213. Note that the parameter vector grid generation unit 212-1, the parameter vector grid generation unit 212-2, the addition unit 551, and the geometry generation unit 213 may be integrated into one to serve as a generation unit 221.

Each of the decoding unit 211-1 and the decoding unit 211-2 is a processing unit similar to the decoding unit 211 illustrated in Fig. 10. That is, each of the decoding unit 211-1 and the decoding unit 211-2 and the decoding unit 211 illustrated in Fig. 10 have a similar configuration and perform similar processing.

The decoding unit 211-1 decodes a low resolution bit stream supplied to the geometry decoding apparatus 200 to generate (reconstruct) a CNN feature vector grid of a low resolution, and supplies the CNN feature vector grid of the low resolution to the parameter vector grid generation unit 212-1. At this time, the decoding unit 211-1 may entropy-decode the acquired low resolution bit stream to generate (reconstruct) a quantization level, and may inverse-quantize the quantization level to generate (reconstruct) the CNN feature vector grid of the low resolution. That is, the decoding unit 211-1 may decode coded data to generate a feature vector of a low resolution expressing a spatial correlation lower than a spatial correlation of a parameter vector of a coordinate-based network representing a geometry of 3D data. At this time, the decoding unit 211-1 uses the same quantization width and probability table as those for the encoder (e.g., the coding unit 113-1).

The decoding unit 211-2 decodes a high resolution bit stream supplied to the geometry decoding apparatus 200 to generate (reconstruct) a CNN feature vector grid of a high resolution, and supplies the CNN feature vector grid of the high resolution to the parameter vector grid generation unit 212-2. At this time, the decoding unit 211-2 may entropy-decode the acquired high resolution bit stream to generate (reconstruct) a quantization level, and may inverse-quantize the quantization level to generate (reconstruct) the CNN feature vector grid of the high resolution. That is, the decoding unit 211-2 may decode coded data to generate a feature vector of a high resolution expressing a spatial correlation lower than a spatial correlation of a parameter vector of a coordinate-based network representing a geometry of 3D data. At this time, the decoding unit 211-2 uses the same quantization width and probability table as those for the encoder (e.g., the coding unit 113-2).

Each of the parameter vector grid generation unit 212-1 and the parameter vector grid generation unit 212-2 is a processing unit similar to the parameter vector grid generation unit 212 illustrated in Fig. 10. That is, each of the parameter vector grid generation unit 212-1 and the parameter vector grid generation unit 212-2 and the parameter vector grid generation unit 212 illustrated in Fig. 10 have a similar configuration and perform similar processing.

The parameter vector grid generation unit 212-1 generates a transformed vector grid from the CNN feature vector grid of the low resolution supplied from the decoding unit 211-1, using a 3D-CNN (a 3D-CNN_D1_L). For example, the parameter vector grid generation unit 212-1 inputs the CNN feature vector grid 533 of the low resolution illustrated in Fig. 24 to the 3D-CNN_D1_L to transform the CNN feature vector grid 533 of the low resolution into a transformed vector grid. The parameter vector grid generation unit 212-1 supplies the transformed vector grid to the addition unit 551.

Note that the number of input dimensions of the 3D-CNN_D1_L is equal to the number of dimensions of the CNN feature vector of the low resolution, and the number of output dimensions of the 3D-CNN_D1_L is equal to the number of dimensions of the CNN feature vector of the high resolution. In addition, the upscaling factor of the 3D-CNN_D1_L is equal to a scale ratio between the CNN feature vector grid of the low resolution and the CNN feature vector grid of the high resolution. For the purpose of upscaling, the geometry decoding apparatus 200 uses a 3D deconvolution layer instead of a 3D convolution layer. Furthermore, the 3D-CNN_D1_L has at least two 3D deconvolution layers and one nonlinear layer. At least one of the 3D deconvolution layers has a kernel size that is more than 1. A hyper parameter and a structure each have a degree of freedom as long as this condition is satisfied.

The addition unit 551 adds the CNN feature vector grid of the high resolution supplied from the decoding unit 211-2, to the transformed vector grid supplied from the parameter vector grid generation unit 212-1, for each element. For example, the addition unit 551 adds the CNN feature vector grid 532 of the high resolution illustrated in Fig. 24 to the transformed vector for each element. Since the 3D-CNN_D1_L has the foregoing features, the addition unit 551 is capable of adding the transformed vector grid and the CNN feature vector grid of the high resolution for each element. The addition unit 551 supplies the addition result (also referred to as an addition result vector grid) to the parameter vector grid generation unit 212-2.

The parameter vector grid generation unit 212-2 generates (reconstructs) a parameter vector grid from the addition result vector grid supplied from the addition unit 551, using a 3D-CNN (a 3D-CNN_D1_H). For example, the parameter vector grid generation unit 212-2 inputs the addition result vector grid to the 3D-CNN_D1_H to transform the addition result vector grid into the parameter vector grid 531 illustrated in Fig. 24. The parameter vector grid generation unit 212-2 supplies the parameter vector grid to the geometry generation unit 213.

Note that the number of input dimensions of the 3D-CNN_D1_H is equal to the number of dimensions of the CNN feature vector of the high resolution, and the number of output dimensions of the 3D-CNN_D1_H is equal to the number of dimensions of the parameter vector grid. In addition, the upscaling factor of the 3D-CNN_D1_H is equal to a scale ratio between the CNN feature vector grid of the high resolution and the parameter vector grid. For the purpose of upscaling, the geometry decoding apparatus 200 uses a 3D deconvolution layer instead of a 3D convolution layer. Furthermore, the 3D-CNN_D1_H has at least two 3D deconvolution layers and one nonlinear layer. At least one of the 3D deconvolution layers has a kernel size that is more than 1. A hyper parameter and a structure each have a degree of freedom as long as this condition is satisfied.

The geometry generation unit 213 generates a geometry of 3D data from the parameter vector grid supplied from the parameter vector grid generation unit 212-2 and a query point, using a coordinate-based network representing a geometry of 3D data, and outputs the geometry to the outside of the geometry decoding apparatus 200, as in the case illustrated in Fig. 10.

The geometry decoding apparatus 200 having the foregoing configuration is capable of generating a parameter vector, using feature vectors of multiple resolutions each expressing a spatial correlation lower than a spatial correlation of a parameter vector of a coordinate-based network representing a geometry of 3D data. The geometry decoding apparatus 200 is therefore capable of reducing correlations with multiple scales while suppressing an increase in amount of calculation, and is also capable of improving coding efficiency.

<Flow of geometry decoding processing>

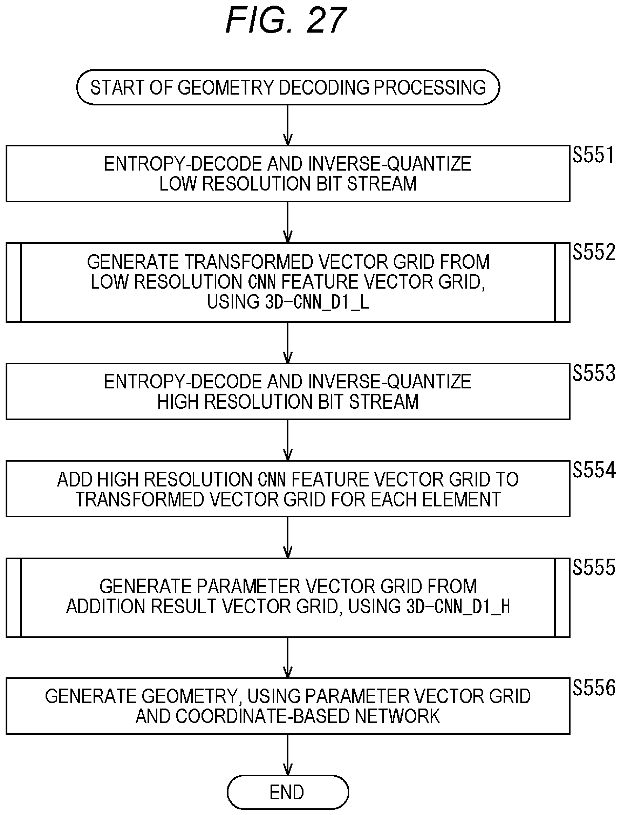

An example of a flow of geometry decoding processing to be performed by the geometry decoding apparatus 200 in this case is described with reference to a flowchart of Fig. 27.

When the geometry decoding processing starts, in step S551, the decoding unit 211-1 entropy-decodes and inverse-quantizes a low resolution bit stream to generate (reconstruct) a CNN feature vector grid of a low resolution. That is, the decoding unit 211-1 decodes coded data to generate a feature vector of a low resolution expressing a spatial correlation lower than a spatial correlation of a parameter vector of a coordinate-based network representing a geometry of 3D data.

In step S552, the parameter vector grid generation unit 212-1 performs parameter vector grid generation processing to generate a transformed vector grid from the CNN feature vector grid of the low resolution generated in step S551, using the 3D-CNN_D1_L.

In step S553, the decoding unit 211-2 entropy-decodes and inverse-quantizes a high resolution bit stream to generate (reconstruct) a CNN feature vector grid of a high resolution. That is, the decoding unit 211-2 decodes coded data to generate a feature vector of a high resolution expressing a spatial correlation lower than a spatial correlation of a parameter vector of a coordinate-based network representing a geometry of 3D data.

In step S554, the addition unit 551 adds the CNN feature vector grid of the high resolution generated in step S553 to the transformed vector grid generated in step S552, for each element to generate an addition result vector grid.

In step S555, the parameter vector grid generation unit 212-2 performs parameter vector grid generation processing to generate (reconstruct) a parameter vector grid from the addition result vector grid generated in step S554, using the 3D-CNN_D1_H.

In step S556, the geometry generation unit 213 generates (reconstructs) a geometry, using the parameter vector grid generated in step S555 and a coordinate-based network. For example, the geometry generation unit 213 sets query points as described above, obtains an occupation probability of each query point with position information on the query point as an input to the coordinate-based network and with the parameter vector as a condition vector of the coordinate-based network, and generates a geometry of 3D data (a point cloud), using the position information on one of the query points the occupation probability of which is high.

When the processing in step S556 ends, the geometry decoding processing ends.

By performing the respective kinds of processing as described above, it is possible to reduce correlations with multiple scales while suppressing an increase in amount of calculation, and is also possible to improve coding efficiency.

<Method 1-3-2>

When the method 1-3 is applied, as illustrated in the third row from the top of the table of the Fig. 22, CNN feature vectors (grids) of N (N: an integer that is 2 or more) resolutions may be generated (method 1-3-2). That is, CNN feature vectors of three or more types of resolutions may be utilized. Also in this case, it is possible to reduce a spatial correlation with a scale having a correspondence with each resolution by the CNN feature vector grid of the resolution. That is, it is possible to reduce correlations of multiple resolutions while suppressing an increase in amount of calculation.

<Geometry coding apparatus>

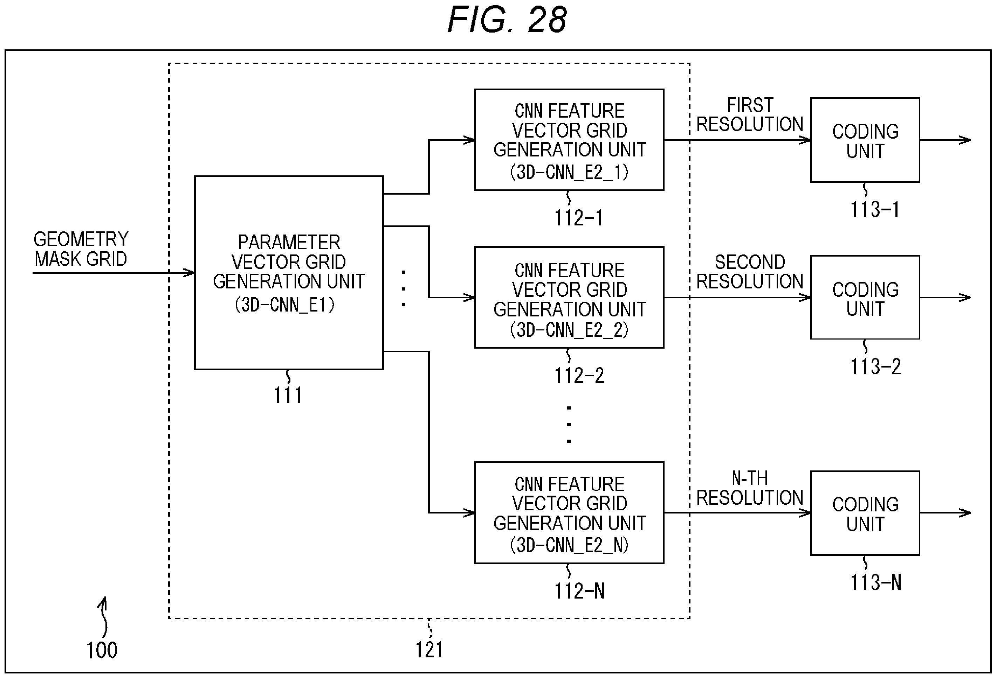

Fig. 28 is a block diagram illustrating a main configuration example of a geometry coding apparatus 100 in this case. Note that Fig. 28 illustrates main processing units, data flows, and the like; therefore, the geometry coding apparatus 100 is not limited to those illustrated in Fig. 28. That is, the geometry coding apparatus 100 may include a processing unit not illustrated in a block form in Fig. 28 and may involve processing or a data flow not indicated by an arrow or the like in Fig. 28.

The configuration of the geometry coding apparatus 100 is basically similar to that in the case illustrated in Fig. 23 also in a case of generating CNN feature vector grids of N types of resolutions. That is, the geometry coding apparatus 100 includes a CNN feature vector grid generation unit 112 and a coding unit 113 for each resolution. That is, the geometry coding apparatus 100 includes N CNN feature vector grid generation units 112 (CNN feature vector grid generation units 112-1 to 112-N) and N coding units 113 (coding units 113-1 to 113-N).

In this case, the parameter vector grid generation unit 111 supplies a generated parameter vector grid to each of the CNN feature vector grid generation units 112-1 to 112-N.

The CNN feature vector grid generation unit 112-1 generates a CNN feature vector of a first resolution from a parameter vector grid supplied from the parameter vector grid generation unit 111, using a 3D-CNN (a 3D-CNN_E2_1) having a correspondence with the first resolution, and supplies the CNN feature vector of the first resolution to the coding unit 113-1. The coding unit 113-1 codes (e.g., quantizes and entropy-codes) the CNN feature vector of the first resolution, and outputs coded data (a first resolution bit stream) to the outside of the geometry coding apparatus 100.

The CNN feature vector grid generation unit 112-2 generates a CNN feature vector of a second resolution from the parameter vector grid supplied from the parameter vector grid generation unit 111, using a 3D-CNN (a 3D-CNN_E2_2) having a correspondence with the second resolution, and supplies the CNN feature vector of the second resolution to the coding unit 113-2. The coding unit 113-2 codes (e.g., quantizes and entropy-codes) the CNN feature vector of the second resolution, and outputs coded data (a second resolution bit stream) to the outside of the geometry coding apparatus 100.

Likewise, the CNN feature vector grid generation unit 112-N generates a CNN feature vector of an N-th resolution from the parameter vector grid supplied from the parameter vector grid generation unit 111, using a 3D-CNN (a 3D-CNN_E2_N) having a correspondence with the N-th resolution, and supplies the CNN feature vector of the N-th resolution to the coding unit 113-N. The coding unit 113-N codes (e.g., quantizes and entropy-codes) the CNN feature vector of the second resolution, and outputs coded data (an N-th resolution bit stream) to the outside of the geometry coding apparatus 100.

That is, the CNN feature vector grid generation unit 112-K ($1 \leq K \leq N$) generates a CNN feature vector of a K-th resolution from the parameter vector grid supplied from the parameter vector grid generation unit 111, using a 3D-CNN (a 3D-CNN_E2_K) having a correspondence with the K-th resolution, and supplies the CNN feature vector of the K-th resolution to the coding unit 113-K. The coding unit 113-K codes (e.g., quantizes and entropy-codes) the CNN feature vector of the K-th resolution, and outputs coded data (a K-th resolution bit stream) to the outside of the geometry coding apparatus 100.

The first to N-th resolutions are resolutions that are different from each other, and these resolutions increase in sequence from the first resolution toward the N-th resolution. That is, the first resolution is the lowest resolution, and the N-th resolution is the highest resolution. Therefore, the downscaling factor of the 3D-CNN_E2_K ($1 \leq K \leq N$) is smaller than the downscaling factor of the 3D-CNN_E2_(K+1). Other features of the 3D-CNN_E2_K are similar to those in the exemplary case illustrated in Fig. 23.

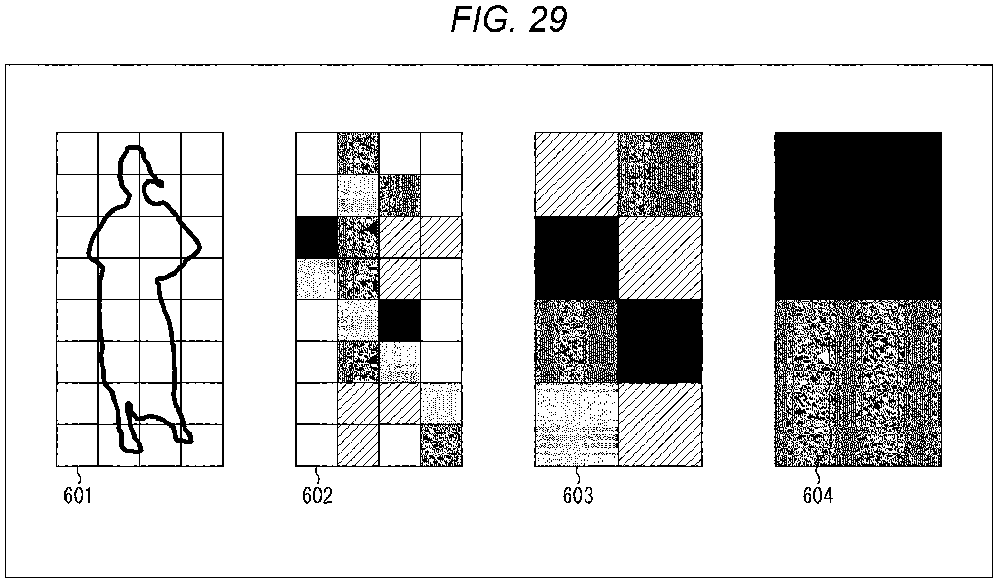

It is thus possible to generate, for example, a CNN feature vector grid 602 of a first resolution, a CNN feature vector grid 603 of a second resolution, and a CNN feature vector grid 604 of a third resolution, from a parameter vector grid 601 illustrated in Fig. 29. That is, it is possible to generate CNN feature vector grids of three or more types of resolutions.

Therefore, even when there are correlations with more various scales, the geometry coding apparatus 100 is capable of reducing the correlation with each scale. That is, it is possible to reduce correlations of multiple resolutions while suppressing an increase in amount of calculation.

Note that as illustrated in Fig. 28, the respective kinds of processing for the resolutions (the respective kinds of processing to be performed by the CNN feature vector grid generation units 112-1 to 112-N and the respective kinds of processing to be performed by the coding units 113-1 to 113-N) can be performed independently of each other. Therefore, the geometry coding apparatus 100 may perform the respective kinds of processing for the resolutions in parallel with each other, for example.

<Flow of geometry coding processing>

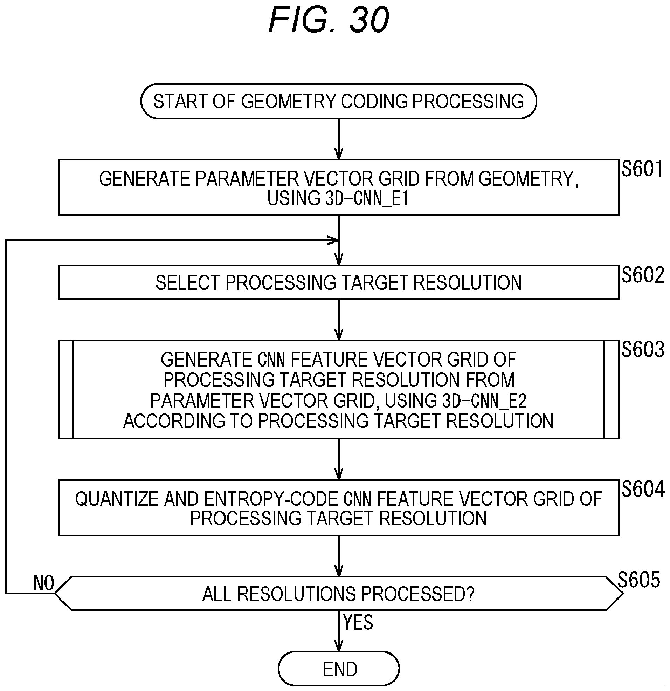

An example of a flow of geometry coding processing to be performed by the geometry coding apparatus 100 in this case is described with reference to a flowchart of Fig. 30.

When the geometry coding processing starts, in step S601, the parameter vector grid generation unit 111 generates a parameter vector grid from a geometry, using a 3D-CNN_E1.

In step S602, the generation unit 121 selects a processing target resolution (a K-th resolution) from unprocessed resolutions.

In step S603, the CNN feature vector grid generation unit 112-K performs CNN feature vector grid generation processing to generate a CNN feature vector grid of the processing target resolution (the K-th resolution) from the parameter vector grid, using the 3D-CNN_E2_K (i.e., the 3D-CNN_E2 according to the processing target resolution). That is, the CNN feature vector grid generation unit 112-K generates, on the basis of a parameter vector of a coordinate-based network representing a geometry of 3D data, a feature vector of a K-th resolution expressing a spatial correlation lower than a spatial correlation of the parameter vector. Note that the CNN feature vector grid generation processing in this case is performed in accordance with a flow similar to the exemplary flow illustrated in Fig. 9.

In step S604, the coding unit 113-K quantizes and entropy-codes the CNN feature vector grid of the processing target resolution (the K-th resolution) generated in step S603 to generate a bit stream of the processing target resolution (a K-th resolution bit stream).

In step S605, the generation unit 121 determines whether or not all the resolutions have been processed. When there is an unprocessed resolution, the geometry coding processing returns to step S602. The respective kinds of processing in and subsequent to step S602 are then performed. That is, the respective kinds of processing from step S602 to step S605 are performed for each resolution. When it is determined in step S605 that all the resolutions have been processed, the geometry coding processing ends.

By performing the respective kinds of processing as described above, even when there are correlations with more various scales, the geometry coding apparatus 100 is capable of reducing correlations with multiple scales while suppressing an increase in amount of calculation, and is also capable of improving coding efficiency.

<Method 1-3-2>

The foregoing method 1-3-2 may be applied to a decoder. That is, CNN feature vectors of three or more types of resolutions may be utilized also in the decoder. Also in this case, it is possible to reduce a spatial correlation with a scale having a correspondence with each resolution by the CNN feature vector grid of the resolution. That is, it is possible to reduce correlations of multiple resolutions while suppressing an increase in amount of calculation.

<Geometry decoding apparatus>

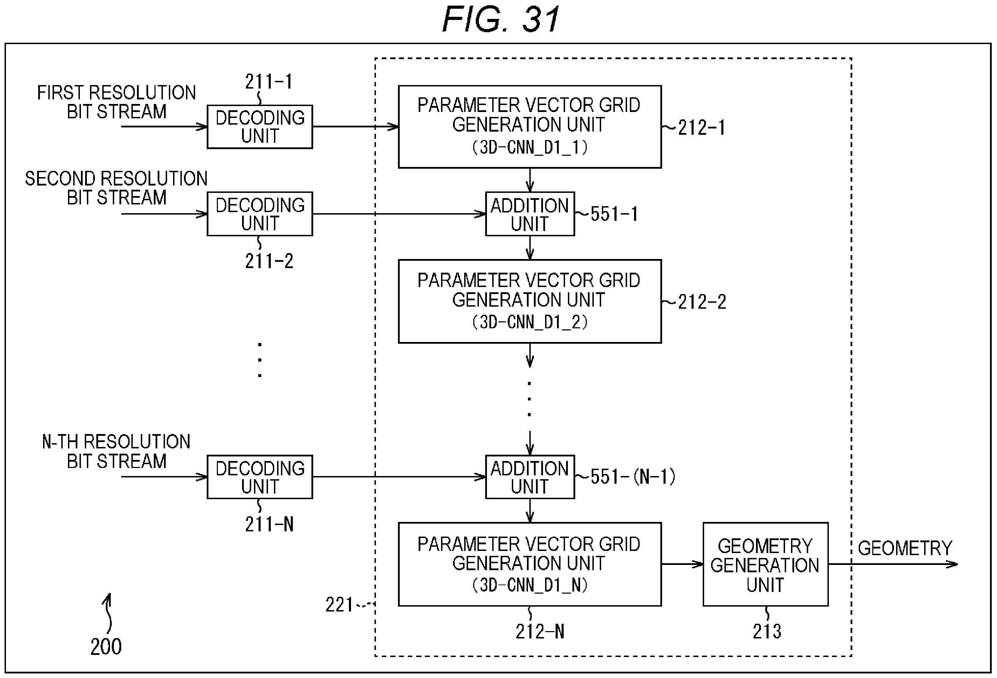

Fig. 31 is a block diagram illustrating a main configuration example of a geometry decoding apparatus 200 in this case. Note that Fig. 31 illustrates main processing units, data flows, and the like; therefore, the geometry decoding apparatus 200 is not limited to those illustrated in Fig. 31. That is, the geometry decoding apparatus 200 may include a processing unit not illustrated in a block form in Fig. 31 and may involve processing or a data flow not indicated by an arrow or the like in Fig. 31.

The configuration of the geometry decoding apparatus 200 is basically similar to that in the case illustrated in Fig. 26 also in the case of utilizing the CNN feature vector grids of N types of resolutions. That is, the geometry decoding apparatus 200 includes a decoding unit 211 and a parameter vector grid generation unit 212 for each resolution. That is, the geometry coding apparatus 100 includes N decoding units 211 (decoding units 211-1 to 211-N) and N parameter vector grid generation units 212 (parameter vector grid generation units 212-1 to 212-N). The geometry decoding apparatus 200 also includes (N-1) addition units 551 (addition units 551 to 551-(N-1)). Note that the parameter vector grid generation units 212-1 to 212-N, the addition units 551 to 551-(N-1), and the geometry generation unit 213 may be integrated into one to serve as a generation unit 221.

The decoding unit 211-1 decodes a first resolution bit stream supplied to the geometry decoding apparatus 200 to generate (reconstruct) a CNN feature vector grid of a first resolution. The decoding unit 211-2 decodes a second resolution bit stream supplied to the geometry decoding apparatus 200 to generate (reconstruct) a CNN feature vector grid of a second resolution. Likewise, the decoding unit 211-N decodes an N-th resolution bit stream supplied to the geometry decoding apparatus 200 to generate (reconstruct) a CNN feature vector grid of an N-th resolution. That is, the decoding unit 211-K ($1 \leq K \leq N$) decodes a K-th resolution bit stream supplied to the geometry decoding apparatus 200 to generate (reconstruct) a CNN feature vector grid of a K-th resolution.

At this time, for example, the decoding unit 211-K may entropy-decode the acquired K-th resolution bit stream to generate (reconstruct) a quantization level, and may inverse-quantize the quantization level to generate (reconstruct) the CNN feature vector grid of the K-th resolution. In addition, the decoding unit 211-K uses the same quantization width and probability table as those for the encoder (e.g., the coding unit 113-K).

The decoding unit 211-1 supplies the generated CNN feature vector grid of the first resolution to the parameter vector grid generation unit 212-1. The decoding units 211-2 to 211-N each supply the generated CNN feature vector grid to the addition unit 551. That is, in a case of $2 \leq K$, the decoding unit 211-K supplies the generated CNN feature vector grid of the K-th resolution to the addition unit 551-(K-1).

The parameter vector grid generation unit 212-1 generates a first transformed vector grid from the CNN feature vector grid of the first resolution supplied from the decoding unit 211-1, using a 3D-CNN (a 3D-CNN_D1_1), and supplies the first transformed vector grid to the addition unit 551-1.

The addition unit 551-1 adds the CNN feature vector grid of the second resolution supplied from the decoding unit 211-2, to the first transformed vector grid, for each element to generate a first addition result vector grid. The parameter vector grid generation unit 212-2 generates a second transformed vector grid from the first addition result vector grid supplied from the addition unit 551-1, using a 3D-CNN (a 3D-CNN_D1_2), and supplies the second transformed vector grid to the addition unit 551-2.

In the following, likewise, the addition unit 551-K adds a CNN feature vector grid of a (K+1)-th resolution supplied from the decoding unit 211-(K+1), to a K-th transformed vector grid supplied from the parameter vector grid generation unit 212-K, for each element to generate a K-th addition result vector grid. The parameter vector grid generation unit 212-(K+1) generates a (K+1)-th transformed vector grid from the K-th addition result vector grid supplied from the addition unit 551-K, using a 3D-CNN (a 3D-CNN_D1_(K+1)), and supplies the (K+1)-th transformed vector grid to the addition unit 551-(K+1).

The addition unit 551-(N-1) then adds a CNN feature vector grid of an N-th resolution supplied from the decoding unit 211-N to an (N-1)-th transformed vector grid supplied from the parameter vector grid generation unit 212-(N-1), for each element to generate an (N-1)-th addition result vector grid. The parameter vector grid generation unit 212-N generates an N-th transformed vector grid from the (N-1)-th addition result vector grid supplied from the addition unit 551-(N-1), using a 3D-CNN (a 3D-CNN_D1_N), and supplies the N-th transformed vector grid to the geometry generation unit 213.

Note that the number of input dimensions of the 3D-CNN_D1_K is equal to the number of dimensions of the CNN feature vector of the K-th resolution, and the number of output dimensions of the 3D-CNN_D1_K is equal to the number of dimensions of the CNN feature vector of the (K+1)-th resolution. In addition, the upscaling factor of the 3D-CNN_D1_K is equal to a scale ratio between the CNN feature vector grid of the K-th resolution and the CNN feature vector grid of the (K+1)-th resolution. Other features of the 3D-CNN_D1_K are similar to those in the exemplary case illustrated in Fig. 26.

The geometry generation unit 213 generates a geometry of 3D data from the parameter vector grid supplied from the parameter vector grid generation unit 212-N and a query point, using a coordinate-based network representing a geometry of 3D data, and outputs the geometry to the outside of the geometry decoding apparatus 200, as in the case illustrated in Fig. 10.

Even when there are correlations with more various scales, the geometry decoding apparatus 200 having the foregoing configuration is capable of reducing the correlation with each scale. That is, it is possible to reduce correlations of multiple resolutions while suppressing an increase in amount of calculation.

<Flow of geometry decoding processing>

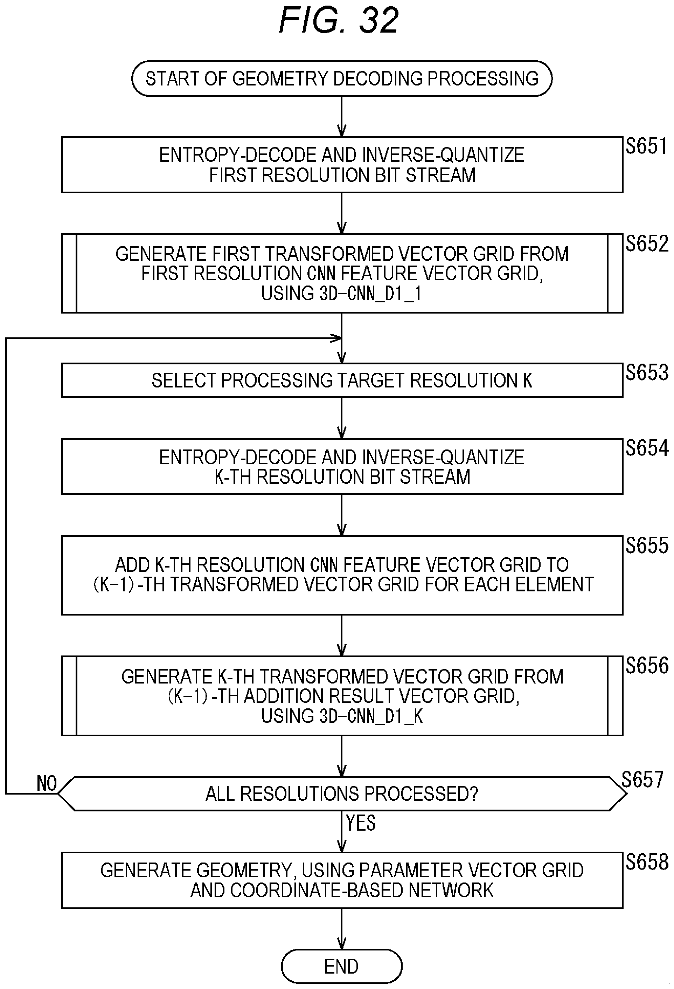

An example of a flow of geometry decoding processing to be performed by the geometry decoding apparatus 200 in this case is described with reference to a flowchart of Fig. 32.

When the geometry decoding processing starts, in step S651, the decoding unit 211-1 entropy-decodes and inverse-quantizes a first resolution bit stream to generate (reconstruct) a CNN feature vector grid of a first resolution. That is, the decoding unit 211-1 decodes coded data to generate a feature vector of a first resolution expressing a spatial correlation lower than a spatial correlation of a parameter vector of a coordinate-based network representing a geometry of 3D data.

In step S652, the parameter vector grid generation unit 212-1 performs parameter vector grid generation processing to generate a first transformed vector grid from the CNN feature vector grid of the first resolution generated in step S651, using the 3D-CNN_D1_1.

In step S653, the generation unit 221 selects, as a processing target resolution (a K-th resolution), the lowest resolution from unprocessed resolutions.

In step S654, the decoding unit 211-K entropy-decodes and inverse-quantizes a K-th resolution bit stream to generate (reconstruct) a CNN feature vector grid of a K-th resolution. That is, the decoding unit 211-K decodes coded data to generate a feature vector of a K-th resolution expressing a spatial correlation lower than a spatial correlation of a parameter vector of a coordinate-based network representing a geometry of 3D data.

In step S655, the addition unit 551 adds the CNN feature vector grid of the K-th resolution generated in step S654 to the (K-1)-th transformed vector grid, for each element to generate a (K-1)-th addition result vector grid.

In step S656, the parameter vector grid generation unit 212-K performs parameter vector grid generation processing to generate (reconstruct) a K-th transformed vector grid from the (K-1)-th addition result vector grid generated in step S655, using the 3D-CNN_D1_K.

In step S657, the generation unit 221 determines whether or not all the resolutions have been processed. When there is an unprocessed resolution, the geometry decoding processing returns to step S653. The respective kinds of processing in and subsequent to step S653 are then performed. That is, the respective kinds of processing from step S653 to step S657 are performed for each resolution in the order from the low resolution toward the high resolution. Then, when it is determined in step S657 that all the resolutions have been processed, the geometry decoding processing proceeds to step S658.

In step S658, the geometry generation unit 213 uses the N-th transformed vector grid generated as described above as a parameter grid, and generates (reconstructs) a geometry, using the parameter vector grid and a coordinate-based network. For example, the geometry generation unit 213 sets query points as described above, obtains an occupation probability of each query point with position information on the query point as an input to the coordinate-based network and with the parameter vector as a condition vector of the coordinate-based network, and generates a geometry of 3D data (a point cloud), using the position information on one of the query points the occupation probability of which is high.

When the processing in step S658 ends, the geometry decoding processing ends.

Even when there are correlations with more various scales, the geometry decoding apparatus 200 is capable of reducing the correlation with each scale by performing the respective kinds of processing as described above. That is, it is possible to reduce correlations of multiple resolutions while suppressing an increase in amount of calculation.

<Method 1-3-3>

Note that when the method 1-3 is applied, as illustrated in the bottom row of the table of Fig. 22, some calculation layers in a CNN may be shared between multiple resolutions. For example, the 3D-CNN_E2_1, ..., and the 3D-CNN_E2_N used by the CNN feature vector grid generation unit 112-1 of the geometry coding apparatus 100, ..., and the CNN feature vector grid generation unit 112-N of the geometry coding apparatus 100 may share some calculation layers.

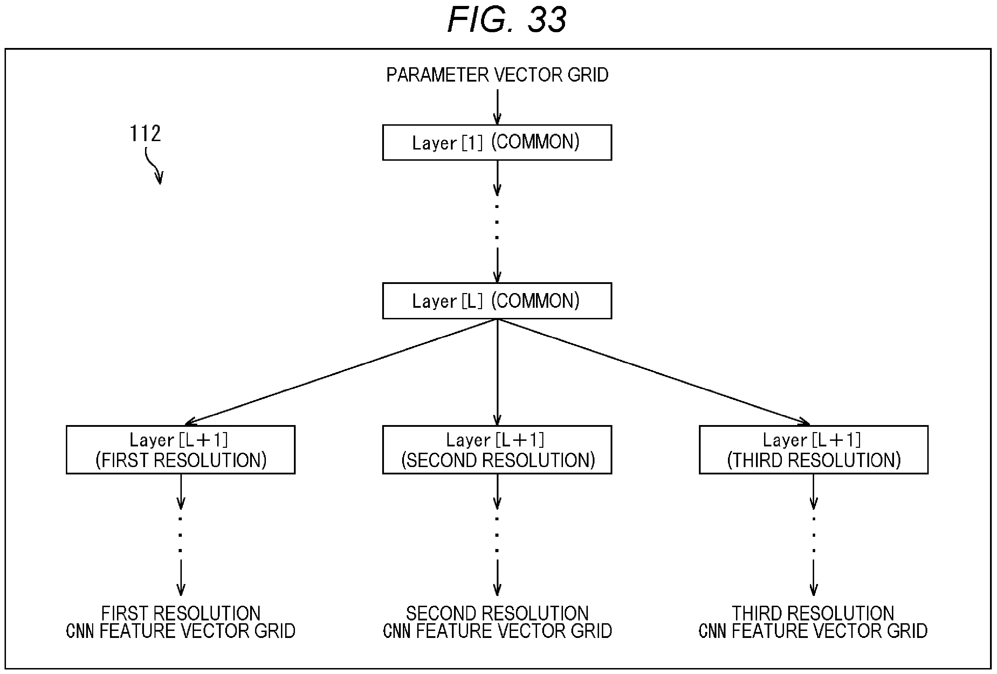

Fig. 33 illustrates this example. In the exemplary case illustrated in Fig. 33, a first resolution CNN feature vector grid, ..., and a third resolution CNN feature vector grid are generated from a parameter vector grid, using the 3D-CNN_E2. In this case, the 3D-CNN_E2 that generates the first resolution CNN feature vector grid, the 3D-CNN_E2 that generates the second resolution CNN feature vector grid, and the 3D-CNN_E2 that generates the third resolution CNN feature vector grid share some calculation layers (Layer[1], ..., and Layer[L]). Therefore, the first resolution CNN feature vector grid, ..., and the third resolution CNN feature vector grid are generated by computation via the shared calculation layers (Layer[1], ..., and Layer[L]).

The geometry coding apparatus 100 is thus capable of suppressing an increase in calculation cost.

<8. Embodiment (point cloud coding apparatus)>

The foregoing present technology is applicable to an optional apparatus. For example, the present technology is also applicable to a point cloud coding apparatus for coding point cloud data.

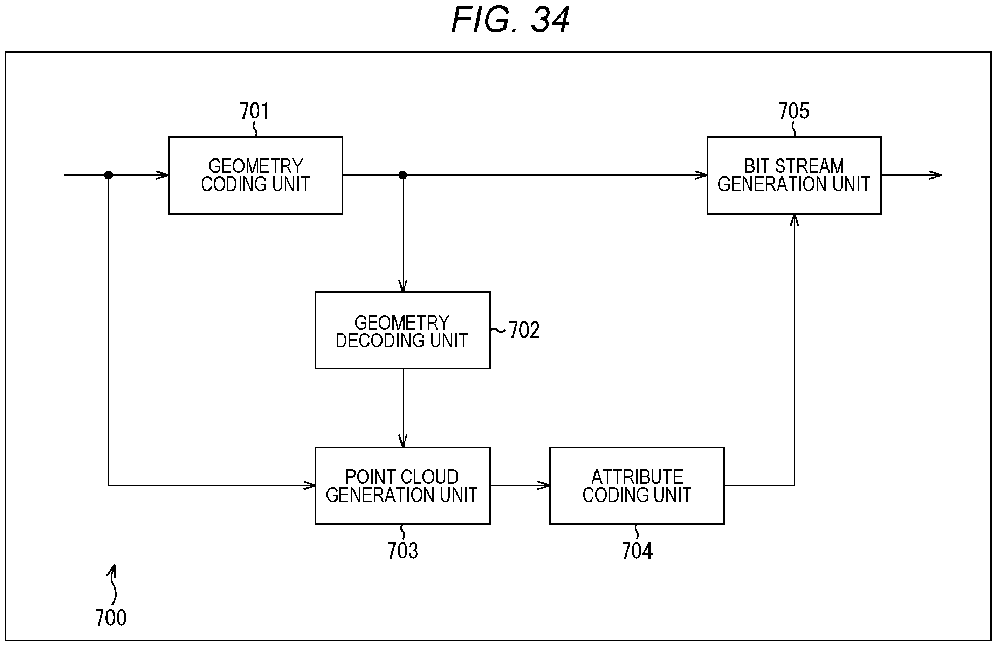

Fig. 34 is a block diagram illustrating an example of a configuration of a point cloud coding apparatus as an aspect of an information processing apparatus to which the present technology is applied. A point cloud coding apparatus 700 illustrated in Fig. 34 is an apparatus that codes point cloud data. The point cloud coding apparatus 700 applies the foregoing present technology to code point cloud data.

Note that Fig. 34 illustrates main processing units, data flows, and the like; therefore, the point cloud coding apparatus 700 is not limited to those illustrated in Fig. 34. That is, the point cloud coding apparatus 700 may include a processing unit not illustrated in a block form in Fig. 34 and may involve processing or a data flow not indicated by an arrow or the like in Fig. 34.

As illustrated in Fig. 34, the point cloud coding apparatus 700 includes a geometry coding unit 701, a geometry decoding unit 702, a point cloud generation unit 703, an attribute coding unit 704, and a bit stream generation unit 705.

The geometry coding unit 701 performs processing concerning coding of geometry data. For example, the geometry coding unit 701 acquires geometry data of point cloud data to be input to the point cloud coding apparatus 700. The geometry coding unit 701 codes the geometry data to generate coded data. The geometry coding unit 701 supplies the generated geometry coded data to the geometry decoding unit 702 and the bit stream generation unit 705.

The geometry decoding unit 702 performs processing concerning decoding of the geometry coded data. For example, the geometry decoding unit 702 acquires the geometry coded data supplied from the geometry coding unit 701. The geometry decoding unit 702 decodes the coded data by a decoding method having a correspondence with a coding method applied to the geometry coding unit 701, to generate (reconstruct) geometry data. The geometry decoding unit 702 supplies the generated geometry data to the point cloud generation unit 703.

The point cloud generation unit 703 performs processing concerning generation of point cloud data. For example, the point cloud generation unit 703 acquires attribute data of the point cloud data to be input to the point cloud coding apparatus 700. In addition, the point cloud generation unit 703 acquires the geometry data supplied from the geometry decoding unit 702.

The geometry data may change by processing such as coding or decoding (e.g., a point may increase or decrease or may move). That is, the geometry data supplied from the geometry decoding unit 702 may be different from the geometry data before being coded by the geometry coding unit 701.

Hence, the point cloud generation unit 703 performs processing of matching the attribute data with the geometry data (the decoding result) (hereinafter, this processing is also referred to as recolor processing). That is, the point cloud generation unit 703 updates the attribute data in accordance with the update of the geometry data. The point cloud generation unit 703 supplies the updated attribute data (the attribute data having a correspondence with the geometry data (the decoding result)) to the attribute coding unit 704.

The attribute coding unit 704 performs processing concerning coding of an attribute. For example, the attribute coding unit 704 acquires the attribute data supplied from the point cloud generation unit 703. In addition, the attribute coding unit 704 codes the attribute data by an optional method to generate coded data of the attribute data. This coding method is optional. The attribute coding unit 704 supplies the generated coded data of the attribute data, to the bit stream generation unit 705.

The bit stream generation unit 705 performs processing concerning generation of a bit stream. For example, the bit stream generation unit 705 acquires the coded data of the geometry supplied from the geometry coding unit 701. In addition, the bit stream generation unit 705 acquires the coded data of the attribute data supplied from the attribute coding unit 704. The bit stream generation unit 705 generates a bit stream including the coded data. The bit stream generation unit 705 outputs the generated bit stream to the outside of the point cloud coding apparatus 700.

In this point cloud coding apparatus 700, the geometry coding unit 701 may apply the foregoing present technology to code the geometry data. For example, the geometry coding unit 701 and the geometry coding apparatus 100 illustrated in Fig. 5 may have a similar configuration and perform similar processing. Alternatively, the geometry coding unit 701 and the geometry coding apparatus 100 illustrated in Fig. 14 may have a similar configuration and perform similar processing. Alternatively, the geometry coding unit 701 and the geometry coding apparatus 100 illustrated in Fig. 23 may have a similar configuration and perform similar processing. Alternatively, the geometry coding unit 701 and the geometry coding apparatus 100 illustrated in Fig. 28 may have a similar configuration and perform similar processing.

The point cloud coding apparatus 700 is thus capable of coding a geometry of a point cloud, using a coordinate-based network. The point cloud coding apparatus 700 is also capable of improving the coding efficiency by reducing a spatial correlation. The point cloud coding apparatus 700 is also capable of applying the foregoing various methods, thereby obtaining the advantageous effects of the various methods.

Alternatively, the geometry decoding unit 702 may apply the foregoing present technology to decode the coded data of the geometry. For example, the geometry decoding unit 702 and the geometry decoding apparatus 200 illustrated in Fig. 10 may have a similar configuration and perform similar processing. Alternatively, the geometry decoding unit 702 and the geometry decoding apparatus 200 illustrated in Fig. 17 may have a similar configuration and perform similar processing. Alternatively, the geometry decoding unit 702 and the geometry decoding apparatus 200 illustrated in Fig. 26 may have a similar configuration and perform similar processing. Alternatively, the geometry decoding unit 702 and the geometry decoding apparatus 200 illustrated in Fig. 31 may have a similar configuration and perform similar processing.

The point cloud coding apparatus 700 is thus capable of generating a parameter vector at higher speed (i.e., capable of reducing a processing time for generating a parameter vector). The point cloud coding apparatus 700 is particularly capable of suppressing an increase in processing time for generating the parameter vector even when the number of blocks increases. The point cloud coding apparatus 700 is also capable of applying the foregoing various methods, thereby obtaining the advantageous effects of the various methods.

Note that these processing units (the geometry coding unit 701, ..., and the bit stream generation unit 705) of the point cloud coding apparatus 700 each have an optional configuration. For example, each processing unit may be constituted of a logic circuit that realizes the foregoing processing. Alternatively, each processing unit may include, for example, a CPU, a ROM, a RAM, and the like and execute a program, using them, thereby realizing the foregoing processing. As a matter of course, each processing unit may have both the configurations, a part of the foregoing processing may be realized by a logic circuit, and the remaining may be realized by executing a program. The configurations of the respective processing units may be independent of each other. For example, some of the processing units may realize a part of the foregoing processing by a logic circuit. Another some of the processing units may realize the foregoing processing by executing a program. Still another some of the processing units may realize the foregoing processing by a logic circuit and execution of a program.

<Flow of point cloud coding processing>

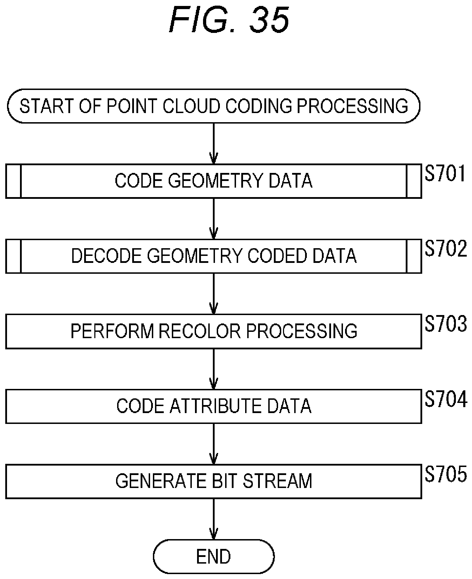

This point cloud coding apparatus 700 codes point cloud data by performing point cloud coding processing. An example of a flow of this point cloud coding processing is described with reference to a flowchart of Fig. 35.
When the point cloud coding processing starts, in step S701, the geometry coding unit 701 performs geometry coding processing to code geometry data and generate geometry coded data.
In step S702, the geometry decoding unit 702 performs the geometry decoding processing to decode the geometry coded data generated in step S701 and generate (reconstruct) geometry data.
In step S703, the point cloud generation unit 703 performs the recolor processing to bring the attribute data into correspondence with the geometry data generated in step S702.
In step S704, the attribute coding unit 704 codes the attribute data subjected to the recolor processing in step S703.
In step S705, the bit stream generation unit 705 generates a bit stream including the coded data of the geometry data generated in step S701 and the coded data of the attribute data generated in step S704.
When the processing in step S705 ends, the point cloud coding processing ends.
In step S701 of this point cloud coding processing, the geometry coding unit 701 may perform geometry coding processing to which the present technology is applied. For example, the geometry coding unit 701 may perform the geometry coding processing in accordance with the flow described with reference to the flowchart of Fig. 8. The geometry coding unit 701 may also perform the geometry coding processing in accordance with the flow described with reference to the flowchart of Fig. 13. The geometry coding unit 701 may also perform the geometry coding processing in accordance with the flow described with reference to the flowchart of Fig. 16. Also in the geometry coding processing, the geometry coding unit 701 may apply the CNN feature vector grid coding processing described with reference to the flowchart of Fig. 19. The geometry coding unit 701 may also perform the geometry coding processing in accordance with the flow described with reference to the flowchart of Fig. 25. The geometry coding unit 701 may also perform the geometry coding processing in accordance with the flow described with reference to the flowchart of Fig. 30.
The point cloud coding apparatus 700 is thus capable of coding a geometry of a point cloud, using a coordinate-based network. The point cloud coding apparatus 700 is also capable of improving the coding efficiency by reducing a spatial correlation. The point cloud coding apparatus 700 is also capable of applying the foregoing various methods, thereby obtaining the advantageous effects of the various methods.
In addition, in step S702 of this point cloud coding processing, the geometry decoding unit 702 may perform geometry decoding processing to which the present technology is applied. For example, the geometry decoding unit 702 may perform the geometry decoding processing in accordance with the flow described with reference to the flowchart of Fig. 11. The geometry decoding unit 702 may also perform the geometry decoding processing in accordance with the flow described with reference to the flowchart of Fig. 18. Also in the geometry decoding processing, the geometry decoding unit 702 may apply the CNN feature vector grid decoding processing described with reference to the flowchart of Fig. 20. The geometry decoding unit 702 may also perform the geometry decoding processing in accordance with the flow described with reference to the flowchart of Fig. 27. The geometry decoding unit 702 may also perform the geometry decoding processing in accordance with the flow described with reference to the flowchart of Fig. 32.
The point cloud coding apparatus 700 is thus capable of generating a parameter vector at higher speed (i.e., capable of reducing a processing time for generating a parameter vector). The point cloud coding apparatus 700 is particularly capable of suppressing an increase in processing time for generating the parameter vector even when the number of blocks increases. The point cloud coding apparatus 700 is also capable of applying the foregoing various methods, thereby obtaining the advantageous effects of the various methods.

<9. Embodiment (point cloud decoding apparatus)>

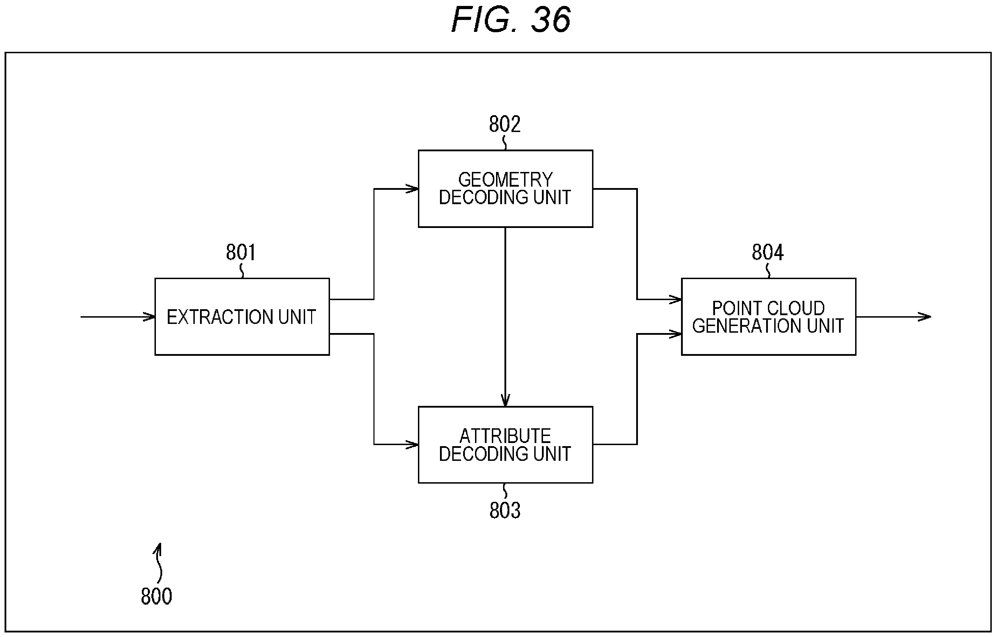

Fig. 36 is a block diagram illustrating an example of a configuration of a point cloud decoding apparatus as an aspect of an information processing apparatus to which the present technology is applied. A point cloud decoding apparatus 800 illustrated in Fig. 36 is a decoding apparatus that has a correspondence with the point cloud coding apparatus 700, and decodes a bit stream of a point cloud to generate point cloud data. The point cloud decoding apparatus 800 applies the foregoing present technology to decode the bit stream of the point cloud.
Note that Fig. 36 illustrates main processing units, data flows, and the like; therefore, the point cloud decoding apparatus 800 is not limited to those illustrated in Fig. 36. That is, the point cloud decoding apparatus 800 may include a processing unit not illustrated in a block form in Fig. 36 and may involve processing or a data flow not indicated by an arrow or the like in Fig. 36.

As illustrated in Fig. 36, the point cloud decoding apparatus 800 includes an extraction unit 801, a geometry decoding unit 802, an attribute decoding unit 803, and a point cloud generation unit 804.

The extraction unit 801 extracts geometry coded data from a bit stream, and supplies the geometry coded data to the geometry decoding unit 802. In addition, the extraction unit 801 extracts attribute coded data from the bit stream, and supplies the attribute coded data to the attribute decoding unit 803.

The geometry decoding unit 802 performs processing concerning decoding of the geometry coded data. For example, the geometry decoding unit 802 acquires the geometry coded data supplied from the extraction unit 801 and decodes the geometry coded data to generate (reconstruct) geometry data. The geometry decoding unit 802 supplies the generated geometry data to the attribute decoding unit 803 and the point cloud generation unit 804.

The attribute decoding unit 803 performs processing concerning decoding of attribute coded data. For example, the attribute decoding unit 803 acquires the attribute coded data supplied from the extraction unit 801. The attribute decoding unit 803 also acquires the geometry data supplied from the geometry decoding unit 802. The attribute decoding unit 803 decodes the attribute coded data, using the geometry data to generate (reconstruct) attribute data.

The attribute decoding unit 803 performs this decoding by a decoding method having a correspondence with a coding method applied by the attribute coding unit 704 (Fig. 34). The attribute decoding unit 803 supplies the generated attribute data to the point cloud generation unit 804.

The point cloud generation unit 804 performs processing concerning generation of a point cloud. For example, the point cloud generation unit 804 acquires the geometry data supplied from the geometry decoding unit 802. The point cloud generation unit 804 also acquires the attribute data supplied from the attribute decoding unit 803. The point cloud generation unit 804 then brings the geometry data into correspondence with the attribute data to generate point cloud data. The point cloud generation unit 804 outputs the generated point cloud data to the outside of the point cloud decoding apparatus 800.

In this point cloud decoding apparatus 800, the geometry decoding unit 802 may apply the foregoing present technology to decode the geometry coded data. For example, the geometry decoding unit 802 and the geometry decoding apparatus 200 illustrated in Fig. 10 may have a similar configuration and perform similar processing. Alternatively, the geometry decoding unit 802 and the geometry decoding apparatus 200 illustrated in Fig. 17 may have a similar configuration and perform similar processing. Alternatively, the geometry decoding unit 802 and the geometry decoding apparatus 200 illustrated in Fig. 26 may have a similar configuration and perform similar processing. Alternatively, the geometry decoding unit 802 and the geometry decoding apparatus 200 illustrated in Fig. 31 may have a similar configuration and perform similar processing.

The point cloud decoding apparatus 800 is thus capable of generating a parameter vector at higher speed (i.e., capable of reducing a processing time for generating a parameter vector). The point cloud decoding apparatus 800 is particularly capable of suppressing an increase in processing time for generating the parameter vector even when the number of blocks increases. The point cloud decoding apparatus 800 is also capable of applying the foregoing various methods, thereby obtaining the advantageous effects of the various methods.

Note that these processing units (the extraction unit 801, ..., and the point cloud generation unit 804) of the point cloud decoding apparatus 800 each have an optional configuration. For example, each processing unit may be constituted of a logic circuit that realizes the foregoing processing. Alternatively, each processing unit may include, for example, a CPU, a ROM, a RAM, and the like and execute a program, using them, thereby realizing the foregoing processing. As a matter of course, each processing unit may have both the configurations, a part of the foregoing processing may be realized by a logic circuit, and the remaining may be realized by executing a program. The configurations of the respective processing units may be independent of each other. For example, some of the processing units may realize a part of the foregoing processing by a logic circuit. Another some of the processing units may realize the foregoing processing by executing a program. Still another some of the processing units may realize the foregoing processing by a logic circuit and execution of a program.

<Flow of point cloud decoding processing>

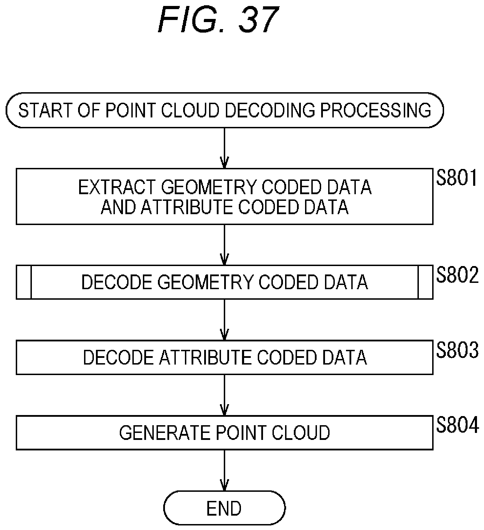

This point cloud decoding apparatus 800 decodes the bit stream by performing point cloud decoding processing. An example of a flow of this point cloud decoding processing is described with reference to a flowchart of Fig. 37.

When the point cloud decoding processing starts, in step S801, the extraction unit 801 extracts geometry coded data and attribute coded data from a bit stream.

In step S802, the geometry decoding unit 802 performs the geometry decoding processing to decode the geometry coded data and generate (reconstruct) geometry data.

In step S803, the attribute decoding unit 803 decodes the attribute coded data to generate (reconstruct) attribute data.

In step S804, the point cloud generation unit 804 brings the geometry data generated in step S802 into correspondence with the attribute data generated in step S803, to generate point cloud data.

When the processing in step S804 ends, the point cloud decoding processing ends.

In step S802 of this point cloud decoding processing, the geometry decoding unit 802 may perform geometry decoding processing to which the present technology is applied. For example, the geometry decoding unit 802 may perform the geometry decoding processing in accordance with the flow described with reference to the flowchart of Fig. 11. The geometry decoding unit 802 may also perform the geometry decoding processing in accordance with the flow described with reference to the flowchart of Fig. 18. Also in the geometry decoding processing, the geometry decoding unit 802 may apply the CNN feature vector grid decoding processing described with reference to the flowchart of Fig. 20. The geometry decoding unit 802 may also perform the geometry decoding processing in accordance with the flow described with reference to the flowchart of Fig. 27. The geometry decoding unit 802 may also perform the geometry decoding processing in accordance with the flow described with reference to the flowchart of Fig. 32.

The point cloud decoding apparatus 800 is thus capable of generating a parameter vector at higher speed (i.e., capable of reducing a processing time for generating a parameter vector). The point cloud decoding apparatus 800 is particularly capable of suppressing an increase in processing time for generating the parameter vector even when the number of blocks increases. The point cloud decoding apparatus 800 is also capable of applying the foregoing various methods, thereby obtaining the advantageous effects of the various methods.

<10. Supplementary note>

<Computer>

The foregoing series of processing can be performed by hardware or can be performed by software. When the series of processing is performed by software, a program that constitutes the software is installed in a computer. Here, examples of the computer include a computer incorporated in special-purpose hardware, a general-purpose personal computer capable of performing various functions by various programs installed therein, and the like.

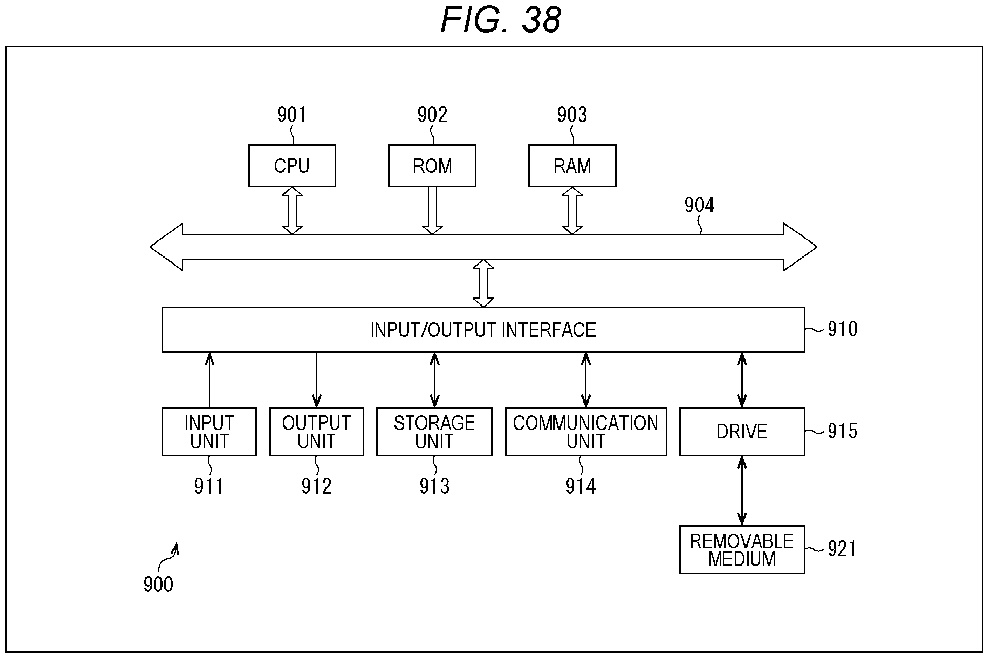

Fig. 38 is a block diagram illustrating a configuration example of hardware of a computer that performs the foregoing series of processing by a program.

In a computer 900 illustrated in Fig. 38, a central processing unit (CPU) 901, a read-only memory (ROM) 902, and a random access memory (RAM) 903 are connected to each other via a bus 904.

An input/output interface 910 is connected to the bus 904. An input unit 911, an output unit 912, a storage unit 913, a communication unit 914, and a drive 915 are connected to the input/output interface 910.

The input unit 911 includes, for example, a keyboard, a mouse, a microphone, a touch panel, an input terminal, and the like. The output unit 912 includes, for example, a display, a speaker, an output terminal, and the like. The storage unit 913 includes, for example, a hard disk, a RAM disk, a nonvolatile memory, and the like. The communication unit 914 includes, for example, a network interface. The drive 915 drives a removable medium 921 such as a magnetic disk, an optical disk, a magneto-optical disk, or a semiconductor memory.

The computer configured as described above performs the foregoing series of processing in such a manner that the CPU 901 loads, for example, a program stored in the storage unit 913 onto the RAM 903 via the input/output interface 910 and the bus 904 and executes the program. In addition, the RAM 903 appropriately stores data required for the CPU 901 to perform various kinds of processing, and the like.

The program to be executed by the computer can be applied with the program recorded in the removable medium 921 serving as a package medium or the like, for example. In this case, the program can be installed in the storage unit 913 via the input/output interface 910 with the removable medium 921 attached to the drive 915.

Furthermore, this program can also be provided via a wired or wireless transmission medium such as a local area network, the Internet, or digital satellite broadcasting. In this case, the program can be received at the communication unit 914 and then installed in the storage unit 913.

Alternatively, this program can also be previously installed in the ROM 902 or the storage unit 913.

<Targets to which the present technology is applied>

The present technology is applicable to optional configurations. For example, the present technology may be applied to various electronic devices.

For example, the present technology can also be implemented as a partial configuration of an apparatus, such as a processor (e.g., a video processor) serving as system large scale integration (LSI) or the like, a module (e.g., a video module) using a plurality of processors or the like, a unit (e.g., a video unit) using a plurality of modules or the like, or a set (e.g., a video set) including a unit to which another function is further added.

For example, the present technology is also applicable to a network system including a plurality of apparatuses. For example, the present technology may be implemented as cloud computing in which a plurality of apparatuses performs processing in a shared and cooperative manner via a network. For example, the present technology may be implemented in a cloud service that provides service regarding an image (a moving image) to an optional terminal such as a computer, an audio visual (AV) appliance, a mobile information processing terminal, or an internet-of-things (IoT) device.

Note that the term "system" as used herein refers to a set of a plurality of constituent elements (e.g., apparatuses, modules (components)) irrespective of whether all the constituent elements are accommodated in a single housing. Therefore, the term "system" involves both a plurality of apparatuses that are respectively accommodated in separate housings and are connected to each other via a network, and one apparatus that includes a plurality of modules accommodated in one housing.

<Fields and applications to which the present technology is applicable>

A system, an apparatus, a processing unit, and the like to which the present technology is applied can be utilized, for example, in optional fields such as traffic, medical care, crime prevention, agriculture, livestock industry, mining, beauty, factories, household appliances, weather, and natural surveillance. The applications thereof are also optional.

<Others>

Note that the term "flag" as used herein refers to information for identifying multiple states, and involves not only information to be used in identifying two states of true (1) and false (0), but also information capable of identifying three or more states. Therefore, a value that this "flag" may take may be, for example, a binary value of 1 or 0, or may be a ternary value or more. That is, the number of bits constituting this "flag" is optional. For example, the number of bits may be one or may be more than one. In addition, it is assumed herein that identification information (including a flag) is not only in the form that identification information is included in a bit stream, but also in the form that difference information on identification information from reference information is included in a bit stream. Therefore, the term "flag" or "identification information" as used herein involves not only that information, but also difference information from reference information.

In addition, various kinds of information (e.g., metadata) regarding coded data (a bit stream) may be transmitted or recorded in any form as long as the transmission or recording form is associated with the coded data. The term "associate, associates, associating, associated, association" as used herein means that, for example, in processing one data item, another data item may be used (may be linked). That is, data items associated with each other may be regarded as a single data item or may be regarded as separate data items. For example, information associated with coded data (an image) may be transmitted through a transmission path different from a transmission path for the coded data (the image). Alternatively, for example, information associated with coded data (an image) may be recorded in a recording medium different from a recording medium that records the coded data (the image) (or in a recording area different from a recording area in which the coded data (the image) is recorded, in a single recording medium). Note that a part of data rather than the entire data may be "associated". For example, an image and information corresponding to this image may be associated with each other in an optional unit such as multiple frames, a single frame, or a portion in a frame.

Note that the terms "combine", "multiplex", "add", "integrate", "include", "store", "put", "load", "insert", and the like as used herein refer to integrating multiple things into one, for example, integrating coded data and metadata into a single data item, and refer to one method of the foregoing term "associate".

In addition, embodiments of the present technology are not limited to the foregoing embodiments, and may be modified variously without departing from the scope of the present technology.

For example, a configuration described as a single apparatus (or a single processing unit) may be divided and configured as multiple apparatuses (or multiple processing units). Conversely, configurations described above as multiple apparatuses (or multiple processing units) may be integrated and configured as a single apparatus (or a single processing unit). Alternatively, as a matter of course, configurations other than those described above may be added to the configuration of each apparatus (or each processing unit). Furthermore, a part of the configuration of one apparatus (or one processing unit) may be included in the configuration of another apparatus (or another processing unit) as long as the configuration and operation as the entire system are substantially the same.

In addition, for example, the foregoing program may be executed by an optional apparatus. In this case, this apparatus is only required to have necessary functions (e.g., functional blocks) and obtain necessary information.

In addition, for example, steps of a single flowchart may be carried out by a single apparatus or may be carried out by multiple apparatuses in a shared manner. Furthermore, when a single step includes multiple kinds of processing, the multiple kinds of processing may be performed by a single apparatus or may be performed by multiple apparatuses in a shared manner. In other words, multiple kinds of processing in a single step may be performed as multiple kinds of processing of multiple steps. Conversely, multiple kinds of processing described as multiple steps may be collectively performed as a single step.

In addition, for example, a program to be executed by a computer may be executed in such a manner that multiple kinds of processing of steps describing the program are performed in a time series manner in accordance with the sequence described herein or are performed in parallel or individually at a required timing such as a timing when the program is invoked. That is, the multiple kinds of processing of the respective steps may be performed in accordance with a sequence different from the foregoing sequence unless contradiction occurs. Furthermore, the multiple kinds of processing of the steps describing the program may be performed in parallel with or in combination with multiple kinds of processing of another program.

In addition, for example, multiple technologies concerning the present technology can be implemented independently and individually unless contradiction occurs. As a matter of course, optional ones of the multiple technologies concerning the present technology can be implemented in combination. For example, a part of or all of the present technology described in one of the embodiments can be implemented in combination with a part of or all of the present technology described in another one of the embodiments. Moreover, optional ones of or all of the multiple technologies concerning the present technology can be implemented in combination with another technology not described above.

Note that the present technology can also adopt the following configurations.

(1) An information processing apparatus including:

a generation unit that generates, on the basis of a parameter vector of a coordinate-based network representing a geometry of 3D data, a feature vector expressing a spatial correlation lower than a spatial correlation of the parameter vector; and
a coding unit that codes the feature vector.

(2) The information processing apparatus as recited in (1), in which
the generation unit generates the feature vector, using a 3D-convolution neural network (3D-CNN) having a three-dimensional convolution layer.
(3) The information processing apparatus as recited in (2), in which
the generation unit generates the parameter vector held in a grid shape, from the geometry, and generates the feature vector, using the 3D-CNN with the parameter vector as an input.
(4) The information processing apparatus as recited in (3), in which
the generation unit generates the parameter vector, using the 3D-CNN with the geometry as an input.
(5) The information processing apparatus as recited in (3), in which
the generation unit generates the parameter vector by optimization of a Lagrange function.
(6) The information processing apparatus as recited in (1), in which
the generation unit generates the feature vector, using a 3D-convolution neural network (3D-CNN) having a sparse three-dimensional convolution layer.
(7) The information processing apparatus as recited in (6), in which
the coding unit further codes a mask grid used in the 3D-CNN.
(8) The information processing apparatus as recited in (6) or (7), in which
the coding unit derives a predicted value of the feature vector from a mask grid used in the 3D-CNN, derives a predicted residual as a difference between the feature vector and the predicted value, and codes the predicted residual.
(9) The information processing apparatus as recited in any one of (6) to (8), in which
the coding unit obtains a parameter of an entropy model of the feature vector from a mask grid used in the 3D-CNN, and entropy-codes the feature vector, using the parameter.
(10) An information processing method including:

generating, on the basis of a parameter vector of a coordinate-based network representing a geometry of 3D data, a feature vector expressing a spatial correlation lower than a spatial correlation of the parameter vector; and
coding the feature vector.

(11) An information processing apparatus including:

a decoding unit that decodes coded data to generate a feature vector expressing a spatial correlation lower than a spatial correlation of a parameter vector of a coordinate-based network representing a geometry of 3D data; and
a generation unit that generates the geometry from the feature vector.

(12) The information processing apparatus as recited in (11), in which
the generation unit generates the parameter vector from the feature vector, and generates the geometry, using the coordinate-based network to which the parameter vector is applied.
(13) The information processing apparatus as recited in (12), in which
the generation unit generates the parameter vector, using a 3D-convolution neural network (3D-CNN) having a three-dimensional deconvolution layer with the feature vector as an input.

(14) The information processing apparatus as recited in (12) or (13), in which
the generation unit derives an occupation probability of a query point, using the coordinate-based network to which the parameter vector is applied, with position information on the query point as an input, and outputs information on the query point the occupation probability of which is high.

(15) The information processing apparatus as recited in (14), in which
the generation unit outputs an occupation probability value of the query point the occupation probability of which is high.

(16) The information processing apparatus as recited in (14) or (15), in which
the generation unit sets the query point and uses the set query point as an input.

(17) The information processing apparatus as recited in any one of (14) to (16), in which
the generation unit further uses time information as an input.

(18) The information processing apparatus as recited in any one of (14) to (17), in which
the generation unit further uses a line-of-sight direction as an input.

(19) The information processing apparatus as recited in any one of (12) to (18), in which
the generation unit generates the parameter vector, using a 3D-convolution neural network (3D-CNN) having a sparse 3D deconvolution layer with the feature vector as an input.

(20) An information processing method including:

decoding coded data to generate a feature vector expressing a spatial correlation lower than a spatial correlation of a parameter vector of a coordinate-based network representing a geometry of 3D data; and
generating the geometry from the feature vector.

(21) An information processing apparatus including:

a generation unit that generates, on the basis of a parameter vector of a coordinate-based network representing a geometry of 3D data, a feature vector expressing a spatial correlation lower than a spatial correlation of the parameter vector; and
a coding unit that codes the feature vector.

(22) The information processing apparatus as recited in (21), in which

the generation unit generates a first feature vector as the feature vector of a first resolution and a second feature vector as the feature vector of a second resolution,
the coding unit codes the first feature vector and the second feature vector, and
the second resolution is higher than the first resolution.

(23) The information processing apparatus as recited in (22), in which

the generation unit generates the first feature vector, using a first 3D-convolution neural network (3D-CNN) and generates the second feature vector, using a second 3D-CNN different from the first 3D-CNN, and
a three-dimensional convolution layer of the first 3D-CNN is different from a three-dimensional convolution layer of the second 3D-CNN.

(24) The information processing apparatus as recited in (23), in which
the first 3D-CNN and the second 3D-CNN share at least one calculation layer.

(25) An information processing method including:

generating, on the basis of a parameter vector of a coordinate-based network representing a geometry of 3D data, a feature vector expressing a spatial correlation lower than a spatial correlation of the parameter vector; and
coding the feature vector.

(31) An information processing apparatus including:

a decoding unit that decodes coded data to generate a feature vector expressing a spatial correlation lower than a spatial correlation of a parameter vector of a coordinate-based network representing a geometry of 3D data; and
a generation unit that generates the geometry from the feature vector.

(32) The information processing apparatus as recited in (31), in which

the decoding unit decodes first coded data to generate a first feature vector as the feature vector of a first resolution,
the decoding unit decodes second coded data different from the first coded data to generate a second feature vector as the feature vector of a second resolution,
the generation unit generates a transformed vector from the first feature vector,
the generation unit adds the second feature vector to the transformed vector for each element to generate an addition result vector,
the generation unit generates the geometry from the addition result vector, and
the second resolution is higher than the first resolution.

(33) The information processing apparatus as recited in (32), in which
the generation unit generates the parameter vector from the addition result vector, and generates the geometry, using the coordinate-based network to which the parameter vector is applied.
(34) The information processing apparatus as recited in (33), in which

the generation unit generates the transformed vector, using a first 3D-convolution neural network (3D-CNN) with the first feature vector as an input,
the generation unit generates the parameter vector, using a second 3D-CNN different from the first 3D-CNN with the addition result vector as an input, and
a three-dimensional convolution layer of the first 3D-CNN is different from a three-dimensional convolution layer of the second 3D-CNN.

(35) An information processing method including:

decoding coded data to generate a feature vector expressing a spatial correlation lower than a spatial correlation of a parameter vector of a coordinate-based network representing a geometry of 3D data; and
generating the geometry from the feature vector.

REFERENCE SIGNS LIST

| | |
|---|---|
| 100 | Geometry coding apparatus |
| 111 | Parameter vector grid generation unit |
| 112 | CNN feature vector grid generation unit |
| 113 | Coding unit |
| 121 | Generation unit |
| 200 | Geometry decoding apparatus |
| 211 | Decoding unit |
| 212 | Parameter vector grid generation unit |
| 213 | Geometry generation unit |
| 221 | Generation unit |
| 301 | CNN feature vector grid coding unit |
| 302 | Mask grid coding unit |
| 351 | CNN feature vector grid decoding unit |
| 352 | Mask grid decoding unit |
| 551 | Addition unit |
| 700 | Point cloud coding apparatus |
| 701 | Geometry coding unit |
| 702 | Geometry decoding unit |
| 703 | Point cloud generation unit |
| 704 | Attribute decoding unit |
| 705 | Bit stream generation unit |
| 800 | Point cloud decoding unit |
| 801 | Extraction unit |
| 802 | Geometry decoding unit |

803    Attribute decoding unit
804    Point cloud generation unit
900    Computer

**Claims**

1.  An information processing apparatus comprising:

    a generation unit that generates, on a basis of a parameter vector of a coordinate-based network representing a geometry of 3D data, a feature vector expressing a spatial correlation lower than a spatial correlation of the parameter vector; and
    a coding unit that codes the feature vector.

2.  The information processing apparatus according to claim 1, wherein
    the generation unit generates the feature vector, using a 3D-convolution neural network (3D-CNN) having a three-dimensional convolution layer.

3.  The information processing apparatus according to claim 2, wherein
    the generation unit generates the parameter vector held in a grid shape, from the geometry, and generates the feature vector, using the 3D-CNN with the parameter vector as an input.

4.  The information processing apparatus according to claim 3, wherein
    the generation unit generates the parameter vector, using the 3D-CNN with the geometry as an input.

5.  The information processing apparatus according to claim 3, wherein
    the generation unit generates the parameter vector by optimization of a Lagrange function.

6.  The information processing apparatus according to claim 1, wherein
    the generation unit generates the feature vector, using a 3D-convolution neural network (3D-CNN) having a sparse three-dimensional convolution layer.

7.  The information processing apparatus according to claim 6, wherein
    the coding unit further codes a mask grid used in the 3D-CNN.

8.  The information processing apparatus according to claim 6, wherein
    the coding unit derives a predicted value of the feature vector from a mask grid used in the 3D-CNN, derives a predicted residual as a difference between the feature vector and the predicted value, and codes the predicted residual.

9.  The information processing apparatus according to claim 1, wherein

    the generation unit generates a first feature vector as the feature vector of a first resolution and a second feature vector as the feature vector of a second resolution,
    the coding unit codes the first feature vector and the second feature vector, and
    the second resolution is higher than the first resolution.

10. An information processing method comprising:

    generating, on a basis of a parameter vector of a coordinate-based network representing a geometry of 3D data, a feature vector expressing a spatial correlation lower than a spatial correlation of the parameter vector; and
    coding the feature vector.

11. An information processing apparatus comprising:

    a decoding unit that decodes coded data to generate a feature vector expressing a spatial correlation lower than a spatial correlation of a parameter vector of a coordinate-based network representing a geometry of 3D data; and
    a generation unit that generates the geometry from the feature vector.

**12.** The information processing apparatus according to claim 11, wherein
the generation unit generates the parameter vector from the feature vector, and generates the geometry, using the coordinate-based network to which the parameter vector is applied.

**13.** The information processing apparatus according to claim 12, wherein
the generation unit generates the parameter vector, using a 3D-convolution neural network (3D-CNN) having a three-dimensional deconvolution layer with the feature vector as an input.

**14.** The information processing apparatus according to claim 12, wherein
the generation unit derives an occupation probability of a query point, using the coordinate-based network to which the parameter vector is applied, with position information on the query point as an input, and outputs information on the query point the occupation probability of which is high.

**15.** The information processing apparatus according to claim 14, wherein
the generation unit outputs an occupation probability value of the query point the occupation probability of which is high.

**16.** The information processing apparatus according to claim 14, wherein
the generation unit sets the query point and uses the set query point as an input.

**17.** The information processing apparatus according to claim 14, wherein
the generation unit further uses time information as an input.

**18.** The information processing apparatus according to claim 14, wherein
the generation unit further uses a line-of-sight direction as an input.

**19.** The information processing apparatus according to claim 11, wherein

the decoding unit decodes first coded data to generate a first feature vector as the feature vector of a first resolution,
the decoding unit decodes second coded data different from the first coded data to generate a second feature vector as the feature vector of a second resolution,
the generation unit generates a transformed vector from the first feature vector,
the generation unit adds the second feature vector to the transformed vector for each element to generate an addition result vector,
the generation unit generates the geometry from the addition result vector, and
the second resolution is higher than the first resolution.

**20.** An information processing method comprising:

decoding coded data to generate a feature vector expressing a spatial correlation lower than a spatial correlation of a parameter vector of a coordinate-based network representing a geometry of 3D data; and
generating the geometry from the feature vector.

# FIG. 1

```
( START OF ATTRIBUTE CODING PROCESSING )
                    │
                    ▼
┌─────────────────────────────────────────┐  S11
│        DIVIDE 3D DATA INTO BLOCKS         │
│       AND CONSTRUCT BINARY TREE           │
└─────────────────────────────────────────┘
                    │
                    ▼
┌─────────────────────────────────────────┐  S12
│        DERIVE GLOBAL DC COMPONENT         │
│           AND AC COMPONENTS               │
└─────────────────────────────────────────┘
                    │
                    ▼
┌─────────────────────────────────────────┐  S13
│      DETERMINE QUANTIZATION WIDTH         │
│            AND SCALE VALUE                 │
└─────────────────────────────────────────┘
                    │
                    ▼
┌─────────────────────────────────────────┐  S14
│  QUANTIZE AND CODE GLOBAL DC COMPONENT    │
│           AND AC COMPONENTS               │
└─────────────────────────────────────────┘
                    │
                    ▼
              ( END )
```

*FIG. 2*

# FIG. 3

$z_{0,0}$

$\delta z_{1,1}$

$z_{1,0}$

$z_{1,1}$

$\delta z_{2,1}$

$\delta z_{2,3}$

$z_{2,0}$

$z_{2,1}$

$z_{2,2}$

$z_{2,3}$

EP 4 542 492 A1

## FIG. 4

| | |
|---|---|
| 1 | REDUCE AND CODE SPATIAL CORRELATION OF PARAMETER VECTOR OF COORDINATE-BASED NETWORK FOR GEOMETRY |
| 1-1 | GENERATE CNN FEATURE VECTOR USING 3D-CNN HAVING 3D CONVOLUTION LAYER |
| 1-1-1 | GENERATE PARAMETER VECTOR FROM GEOMETRY, USING 3D-CNN, AND GENERATE CNN FEATURE VECTOR FROM PARAMETER VECTOR, USING 3D-CNN |
| 1-1-2 | GENERATE PARAMETER VECTOR FROM GEOMETRY BY OPTIMIZATION OF LAGRANGE FUNCTION, AND GENERATE CNN FEATURE VECTOR FROM PARAMETER VECTOR, USING 3D-CNN |
| 1-2 | GENERATE CNN FEATURE VECTOR, USING 3D-CNN HAVING SPARSE 3D CONVOLUTION LAYER |
| 1-2-1 | UTILIZE MASK GRID FOR CODING OF CNN FEATURE VECTOR |

EP 4 542 492 A1

## FIG. 5

GEOMETRY → **PARAMETER VECTOR GRID GENERATION UNIT (3D-CNN_E1)** (111) → **CNN FEATURE VECTOR GRID GENERATION UNIT (3D-CNN_E2)** (112) → **CODING UNIT** (113) → BIT STREAM (GEOMETRY CODED DATA)

121

100

EP 4 542 492 A1

FIG. 6

131

132

EP 4 542 492 A1

## FIG. 7

# FIG. 8

```
  ┌─────────────────────────────────────────────┐
  │   START OF GEOMETRY CODING PROCESSING        │
  └─────────────────────────────────────────────┘
                        │
                        ▼
  ┌─────────────────────────────────────────────┐ S101
  │   GENERATE PARAMETER VECTOR GRID FROM        │
  │   GEOMETRY, USING 3D-CNN_E1                  │
  └─────────────────────────────────────────────┘
                        │
                        ▼
  ┌─────────────────────────────────────────────┐ S102
  │   GENERATE CNN FEATURE VECTOR GRID FROM      │
  │   PARAMETER VECTOR GRID, USING 3D-CNN_E2     │
  └─────────────────────────────────────────────┘
                        │
                        ▼
  ┌─────────────────────────────────────────────┐ S103
  │   QUANTIZE AND ENTROPY-CODE CNN FEATURE      │
  │   VECTOR GRID                                │
  └─────────────────────────────────────────────┘
                        │
                        ▼
             ┌──────────────────┐
             │       END        │
             └──────────────────┘
```

# FIG. 9

START OF CNN FEATURE VECTOR GRID GENERATION PROCESSING

INPUT PARAMETER VECTOR GRID — S131

INITIALIZE FOUR-DIMENSIONAL ARRAY INPUT WITH PARAMETER VECTOR GRID — S132

SELECT COMPUTATION LAYER LAYER OF 3D-CNN_E2 — S133

INITIALIZE FOUR-DIMENSIONAL ARRAY OUTPUT — S134

SELECT INDEXES i, j, k OF OUTPUT IN SPATIAL DIRECTION — S135

COMPUTE INDEXES i, j, k — S136

ALL INDEXES PROCESSED? — S137
NO

YES

ALL COMPUTATION LAYER LAYERS PROCESSED? — S138
NO

YES

USE OUTPUT AS INPUT — S139

OUTPUT OUTPUT AS CNN FEATURE VECTOR GRID — S140

RETURN

*FIG. 10*

# FIG. 11

```
┌─────────────────────────────────────────────┐
│   START OF GEOMETRY DECODING PROCESSING      │
└─────────────────────────────────────────────┘
                      │
                      ▼
┌─────────────────────────────────────────────┐ S201
│   ENTROPY-DECODE AND INVERSE-QUANTIZE         │
│              BIT STREAM                        │
└─────────────────────────────────────────────┘
                      │
                      ▼
┌─────────────────────────────────────────────┐ S202
│   GENERATE PARAMETER VECTOR GRID FROM         │
│   CNN FEATURE VECTOR GRID, USING 3D-CNN_D1    │
└─────────────────────────────────────────────┘
                      │
                      ▼
┌─────────────────────────────────────────────┐ S203
│  GENERATE GEOMETRY, USING PARAMETER VECTOR    │
│   GRID AND COORDINATE-BASED NETWORK           │
└─────────────────────────────────────────────┘
                      │
                      ▼
                  ┌────────┐
                  │  END   │
                  └────────┘
```

# FIG. 12

```
( START OF PARAMETER VECTOR GRID GENERATION PROCESSING )
                            │
                            ▼
        ┌──────────────────────────────────────┐
        │    INPUT CNN FEATURE VECTOR GRID      │ S231
        └──────────────────────────────────────┘
                            │
                            ▼
        ┌──────────────────────────────────────┐
        │  INITIALIZE FOUR-DIMENSIONAL ARRAY INPUT │ S232
        │    WITH CNN FEATURE VECTOR GRID       │
        └──────────────────────────────────────┘
                            │
                            ▼
        ┌──────────────────────────────────────┐
        │ SELECT COMPUTATION LAYER LAYER OF 3D-CNN_D1 │ S233
        └──────────────────────────────────────┘
                            │
                            ▼
        ┌──────────────────────────────────────┐
        │  INITIALIZE FOUR-DIMENSIONAL ARRAY OUTPUT │ S234
        └──────────────────────────────────────┘
                            │
                            ▼
        ┌──────────────────────────────────────┐
        │   SELECT INDEXES i, j, k OF OUTPUT IN │ S235
        │          SPATIAL DIRECTION            │
        └──────────────────────────────────────┘
                            │
                            ▼
        ┌──────────────────────────────────────┐
        │         COMPUTE INDEXES i, j, k       │ S236
        └──────────────────────────────────────┘
                            │
                            ▼
   NO   ⟨      ALL INDEXES PROCESSED?      ⟩ S237
                            │ YES
                            ▼
   NO  ⟨ ALL COMPUTATION LAYER LAYERS PROCESSED? ⟩ S238
                            │ YES
        ┌─────────────────────┐
        │ USE OUTPUT AS INPUT │ S239
        └─────────────────────┘
                            ▼
        ┌──────────────────────────────────────┐
        │ OUTPUT OUTPUT AS PARAMETER VECTOR GRID │ S240
        └──────────────────────────────────────┘
                            │
                            ▼
                      ( RETURN )
```

# FIG. 13

START OF GEOMETRY CODING PROCESSING

↓

DIVIDE 3D DATA INTO BLOCKS — S301

↓

INITIALIZE PARAMETER VECTOR GRID — S302

↓

OPTIMIZE PARAMETER VECTOR GRID
BY GRADIENT DESCENT SO AS TO
MINIMIZE LAGRANGE FUNCTION — S303

↓

GENERATE CNN FEATURE VECTOR GRID FROM
PARAMETER VECTOR GRID, USING 3D-CNN_E2 — S304

↓

QUANTIZE AND ENTROPY-CODE CNN FEATURE
VECTOR GRID — S305

↓

END

## FIG. 14

EP 4 542 492 A1

FIG. 15

EP 4 542 492 A1

# FIG. 16

```
START OF GEOMETRY CODING PROCESSING
```

↓

GENERATE PARAMETER VECTOR GRID FROM
GEOMETRY AND MASK GRID, USING 3D-CNN_E1 FOR
SPARSE 3D CONVOLUTION　　S331

↓

GENERATE CNN FEATURE VECTOR GRID FROM
PARAMETER VECTOR GRID AND MASK GRID,
USING 3D-CNN_E2 FOR SPARSE 3D CONVOLUTION　　S332

↓

QUANTIZE AND ENTROPY-CODE CNN FEATURE
VECTOR GRID　　S333

↓

CODE MASK GRID　　S334

↓

```
END
```

*FIG. 17*

EP 4 542 492 A1

# FIG. 18

```
┌─────────────────────────────────────────────┐
│  START OF GEOMETRY DECODING PROCESSING       │
└─────────────────────────────────────────────┘
                      │
                      ▼
┌─────────────────────────────────────────────┐ S361
│ ENTROPY-DECODE AND INVERSE-QUANTIZE PARAMETER │
│              BIT STREAM                        │
└─────────────────────────────────────────────┘
                      │
                      ▼
┌─────────────────────────────────────────────┐ S362
│           DECODE MASK BIT STREAM               │
└─────────────────────────────────────────────┘
                      │
                      ▼
┌─────────────────────────────────────────────┐ S363
│        GENERATE PARAMETER VECTOR GRID          │
│         FROM CNN FEATURE VECTOR GRID           │
│      AND MASK GRID, USING 3D−CNN_D1 FOR        │
│        SPARSE INVERSE 3D CONVOLUTION           │
└─────────────────────────────────────────────┘
                      │
                      ▼
┌─────────────────────────────────────────────┐ S364
│ GENERATE GEOMETRY, USING PARAMETER VECTOR GRID │
│        AND COORDINATE-BASED NETWORK            │
└─────────────────────────────────────────────┘
                      │
                      ▼
                 ┌─────────┐
                 │   END   │
                 └─────────┘
```

# FIG. 19

START OF CNN FEATURE VECTOR GRID CODING PROCESSING

GENERATE PREDICTED VECTOR GRID FROM
MASK GRID, USING 3D-CNN_D2 FOR
SPARSE 3D CONVOLUTION — S401

GENERATE DIFFERENCE VECTOR GRID,
USING CNN FEATURE VECTOR GRID
AND PREDICTED VECTOR GRID — S402

QUANTIZE AND ENTROPY-CODE
DIFFERENCE VECTOR GRID — S403

RETURN

# FIG. 20

```
┌─────────────────────────────────────────────────┐
│ START OF CNN FEATURE VECTOR GRID DECODING PROCESSING │
└─────────────────────────────────────────────────┘
                        │
                        ▼
┌─────────────────────────────────────────────┐
│        GENERATE PREDICTED VECTOR GRID FROM    │  S431
│         MASK GRID, USING 3D-CNN_D2 FOR        │
│             SPARSE 3D CONVOLUTION             │
└─────────────────────────────────────────────┘
                        │
                        ▼
┌─────────────────────────────────────────────┐
│      ENTROPY-DECODE AND INVERSE-QUANTIZE      │  S432
│            PARAMETER BIT STREAM               │
└─────────────────────────────────────────────┘
                        │
                        ▼
┌─────────────────────────────────────────────┐
│      GENERATE CNN FEATURE VECTOR GRID, USING  │  S433
│  DIFFERENCE VECTOR GRID AND PREDICTED VECTOR GRID │
└─────────────────────────────────────────────┘
                        │
                        ▼
                  ┌──────────┐
                  │  RETURN  │
                  └──────────┘
```

FIG. 21

EP 4 542 492 A1

## FIG. 22

| 1-3 | GENERATE CNN FEATURE VECTORS OF MULTIPLE RESOLUTIONS |
|---|---|
| 1-3-1 | GENERATE CNN FEATURE VECTORS OF HIGH RESOLUTION AND LOW RESOLUTION |
| 1-3-2 | GENERATE CNN FEATURE VECTORS OF N RESOLUTIONS |
| 1-3-3 | SHARE PART OF CALCULATION LAYER IN CNN BETWEEN MULTIPLE RESOLUTIONS |

## FIG. 23

FIG. 24

EP 4 542 492 A1

# FIG. 25

```
START OF GEOMETRY CODING PROCESSING
```

GENERATE PARAMETER VECTOR GRID FROM GEOMETRY, USING 3D-CNN_E1 — S501

GENERATE CNN FEATURE VECTOR GRID OF LOW RESOLUTION FROM PARAMETER VECTOR GRID, USING 3D-CNN_E2_L — S502

GENERATE CNN FEATURE VECTOR GRID OF HIGH RESOLUTION FROM PARAMETER VECTOR GRID, USING 3D-CNN_E2_H — S503

QUANTIZE AND ENTROPY-CODE CNN FEATURE VECTOR GRID OF LOW RESOLUTION — S504

QUANTIZE AND ENTROPY-CODE CNN FEATURE VECTOR GRID OF HIGH RESOLUTION — S505

```
END
```

# FIG. 26

# FIG. 27

START OF GEOMETRY DECODING PROCESSING

ENTROPY-DECODE AND INVERSE-QUANTIZE LOW RESOLUTION BIT STREAM — S551

GENERATE TRANSFORMED VECTOR GRID FROM LOW RESOLUTION CNN FEATURE VECTOR GRID, USING 3D-CNN_D1_L — S552

ENTROPY-DECODE AND INVERSE-QUANTIZE HIGH RESOLUTION BIT STREAM — S553

ADD HIGH RESOLUTION CNN FEATURE VECTOR GRID TO TRANSFORMED VECTOR GRID FOR EACH ELEMENT — S554

GENERATE PARAMETER VECTOR GRID FROM ADDITION RESULT VECTOR GRID, USING 3D-CNN_D1_H — S555

GENERATE GEOMETRY, USING PARAMETER VECTOR GRID AND COORDINATE-BASED NETWORK — S556

END

## FIG. 28

GEOMETRY MASK GRID →

PARAMETER VECTOR GRID GENERATION UNIT (3D-CNN_E1)
111

CNN FEATURE VECTOR GRID GENERATION UNIT (3D-CNN_E2_1)
112-1

FIRST RESOLUTION → CODING UNIT
113-1

CNN FEATURE VECTOR GRID GENERATION UNIT (3D-CNN_E2_2)
112-2

SECOND RESOLUTION → CODING UNIT
113-2

CNN FEATURE VECTOR GRID GENERATION UNIT (3D-CNN_E2_N)
112-N

N-TH RESOLUTION → CODING UNIT
113-N

100

121

EP 4 542 492 A1

FIG. 29

# FIG. 30

```
        ( START OF GEOMETRY CODING PROCESSING )
                          │
                          ▼
┌──────────────────────────────────────────────────┐ S601
│   GENERATE PARAMETER VECTOR GRID FROM GEOMETRY,   │
│              USING 3D-CNN_E1                       │
└──────────────────────────────────────────────────┘
                          │
           ┌──────────────┤
           │              ▼
           │  ┌───────────────────────────────────────┐ S602
           │  │   SELECT PROCESSING TARGET RESOLUTION  │
           │  └───────────────────────────────────────┘
           │              │
           │              ▼
           │  ┌───────────────────────────────────────┐ S603
           │  │     GENERATE CNN FEATURE VECTOR GRID OF │
           │  │   PROCESSING TARGET RESOLUTION FROM     │
           │  │   PARAMETER VECTOR GRID, USING 3D-CNN_E2 │
           │  │   ACCORDING TO PROCESSING TARGET RESOLUTION │
           │  └───────────────────────────────────────┘
           │              │
           │              ▼
           │  ┌───────────────────────────────────────┐ S604
           │  │ QUANTIZE AND ENTROPY-CODE CNN FEATURE VECTOR GRID OF │
           │  │     PROCESSING TARGET RESOLUTION        │
           │  └───────────────────────────────────────┘
           │              │
      NO   │              ▼
  ┌────────◇ ALL RESOLUTIONS PROCESSED? ◇ S605
           │              │YES
           │              ▼
                     (  END  )
```

## FIG. 31

FIRST RESOLUTION BIT STREAM → DECODING UNIT (211-1) → PARAMETER VECTOR GRID GENERATION UNIT (3D-CNN_D1_1) ~212-1

SECOND RESOLUTION BIT STREAM → DECODING UNIT (211-2) → ADDITION UNIT ~551-1

PARAMETER VECTOR GRID GENERATION UNIT (3D-CNN_D1_2) ~212-2

N-TH RESOLUTION BIT STREAM → DECODING UNIT (211-N) → ADDITION UNIT ~551-(N-1)

PARAMETER VECTOR GRID GENERATION UNIT (3D-CNN_D1_N) 221 212-N → GEOMETRY GENERATION UNIT 213 → GEOMETRY

200

EP 4 542 492 A1

# FIG. 32

START OF GEOMETRY DECODING PROCESSING

ENTROPY-DECODE AND INVERSE-QUANTIZE FIRST RESOLUTION BIT STREAM — S651

GENERATE FIRST TRANSFORMED VECTOR GRID FROM FIRST RESOLUTION CNN FEATURE VECTOR GRID, USING 3D-CNN_D1_1 — S652

SELECT PROCESSING TARGET RESOLUTION K — S653

ENTROPY-DECODE AND INVERSE-QUANTIZE K-TH RESOLUTION BIT STREAM — S654

ADD K-TH RESOLUTION CNN FEATURE VECTOR GRID TO (K−1)-TH TRANSFORMED VECTOR GRID FOR EACH ELEMENT — S655

GENERATE K-TH TRANSFORMED VECTOR GRID FROM (K−1)-TH ADDITION RESULT VECTOR GRID, USING 3D-CNN_D1_K — S656

ALL RESOLUTIONS PROCESSED? — S657

NO

YES

GENERATE GEOMETRY, USING PARAMETER VECTOR GRID AND COORDINATE-BASED NETWORK — S658

END

*FIG. 33*

EP 4 542 492 A1

## FIG. 34

# FIG. 35

```
( START OF POINT CLOUD CODING PROCESSING )
                        |
                        v
        CODE GEOMETRY DATA               S701
                        |
                        v
        DECODE GEOMETRY CODED DATA       S702
                        |
                        v
        PERFORM RECOLOR PROCESSING       S703
                        |
                        v
        CODE ATTRIBUTE DATA              S704
                        |
                        v
        GENERATE BIT STREAM              S705
                        |
                        v
                    ( END )
```

FIG. 36

# FIG. 37

```
START OF POINT CLOUD DECODING PROCESSING
                    │
                    ▼
┌─────────────────────────────────────────┐
│      EXTRACT GEOMETRY CODED DATA          │  S801
│       AND ATTRIBUTE CODED DATA            │
└─────────────────────────────────────────┘
                    │
                    ▼
┌─────────────────────────────────────────┐
│      DECODE GEOMETRY CODED DATA           │  S802
└─────────────────────────────────────────┘
                    │
                    ▼
┌─────────────────────────────────────────┐
│      DECODE ATTRIBUTE CODED DATA          │  S803
└─────────────────────────────────────────┘
                    │
                    ▼
┌─────────────────────────────────────────┐
│          GENERATE POINT CLOUD             │  S804
└─────────────────────────────────────────┘
                    │
                    ▼
                  END
```

# FIG. 38

## INTERNATIONAL SEARCH REPORT

| International application No. |
| --- |
| **PCT/JP2022/032338** |

**A.    CLASSIFICATION OF SUBJECT MATTER**

***G06T 9/00***(2006.01)i
FI:    G06T9/00 200

According to International Patent Classification (IPC) or to both national classification and IPC

**B.    FIELDS SEARCHED**

Minimum documentation searched (classification system followed by classification symbols)

G06T9/00-9/40; H04N19/00-19/98

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | ISIK, Berivan et al. LVAC: Learned Volumetric Attribute Compression for Point Clouds using Coordinate Based Networks. arXiv [online]. 17 November 2021, [retrieval date 25 October 2022], Internet: <URL: https://arxiv.org/abs/2111.08988#> section 3 | 1-20 |
| A | WO 2019/131880 A1 (PANASONIC INTELLECTUAL PROPERTY CORPORATION OF AMERICA) 04 July 2019 (2019-07-04) paragraphs [0055]-[0058] | 1-20 |

☐ Further documents are listed in the continuation of Box C.          ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 October 2022** | **08 November 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/032338**

| Patent document cited in search report | | | Publication date (day/month/year) | Patent family member(s) | | | Publication date (day/month/year) |
|---|---|---|---|---|---|---|---|
| WO | 2019/131880 | A1 | 04 July 2019 | US | 2020/0329258 | A1 | |
| | | | | paragraphs [0081]-[0084] | | | |

Form PCT/ISA/210 (patent family annex) (January 2015)

# EP 4 542 492 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BERIVAN ISIK** ; **PHILIP A CHOU** ; **SUNG JIN HWANG** ; **NICK JOHNSTON** ; **GEORGE TODERICI**. LVAC: Learned Volumetric Attribute Compression for Point Clouds using Coordinate Based Networks. *arXiv:2111.08988v1 [cs.GR*, 17 November 2021